# EUROPEAN PATENT APPLICATION

(11) **EP 4 548 813 A1**
(43) Date of publication of application: **07.05.2025**
(21) Application number: 24210216.8
(22) Date of filing: 31.10.2024
(51) Int. Cl.: A47C 27/08

(54) **INFLATABLE PRODUCT, AND SYSTEM AND METHOD FOR MANUFACTURE THEREOF**

(30) Priority: 31.10.2023 CN 202311435129; 31.07.2024 CN 202411047914
(71) Applicant: Bestway Inflatables & Material Corp., Shanghai 201812 (CN)
(72) Inventor: ZENG, Xianglin, SHANGHAI, 201812 (CN)
(74) Representative: Inchingalo, Simona

(57) **Abstract**

There is provided an inflatable product (10, 100), comprising a first wall (11, 110) and a second wall (12, 120) arranged opposite the first wall (11, 110), the first wall (11, 110) and the second wall (12, 120) defining an air chamber (13, 104, 140, 204) after the inflatable product (10, 100) is inflated, the air chamber (13, 104, 140, 204) defining a first direction parallel to the first wall (11, 110) and a second direction non-parallel to the first wall (11, 110). The inflatable product (10, 100) further comprises an internal tensioning structure (140, 250, 260, 270, 280, 290) including a plurality of tensioning strands (144, 254, 730) generally extending as a whole in the first direction; a plurality of first retention strips (142, 146) intersecting the plurality of tensioning strands (144, 254, 730) and affixing the plurality of tensioning strands (144, 254, 730) to the first wall (11, 110); and a plurality of second retention strips (142, 146) intersecting the plurality of tensioning strands (144, 254, 730) and affixing the plurality of parallel strings to the second wall (12, 120). Also disclosed is a system (1000) and method for efficiently manufacturing the inflatable product (10, 100) with the included tensioning structure (140, 140A, 140B, 140C, 140D, 250).

## Description

### FIELD AND BACKGROUND

### Technical Field

The present application relates to the field of inflatable products, and in particular to inflatable products including an internal tensioning structure and a method and apparatus for manufacturing such products.

### Background

With improvements in material technology and evolving consumer tastes, the demand for portable devices as increased in a variety of venues, and in addition, products previously intended for indoor use are increasingly being purchased for outdoor use. As a typical example, inflatable products have been widely utilized in recreation, entertainment and sports because of their light weight and easy packaging, transportation, and storage.

Owing to the force-bearing design of the internal structure, most inflatable products after being inflated achieve a preset final shape under the combined action of internal gas pressure and internal tension. For example, tensioning members are commonly provided in an air chamber of an inflatable product, and the tensioning members are connected to inner walls of the product's air chamber so that the inflatable product takes on and retains a desired shape after being inflated.

With an increasing variety of inflatable products, the demand for the use of inflatable products is increasing, some inflatable products require relatively high gas pressures in their inflated states to function in the desired use scenario. Therefore, the connection between tensioning members and the inner walls of the air chamber should be highly reliable, such tensioning members should also have a high tensile strength themselves.

In prior art approaches, inflatable products are often made of sheet-like materials spliced together through high-frequency welding, and accordingly, surfaces and internal tensioning members of the products are often made of sheet-like elastic polymer materials that can be subjected to high-frequency welding. Polyvinyl Chloride (PVC), a widely-used polymer material, has been integrated in most inflatable products. However, in situations requiring higher internal gas pressures within inflatable products, due to the deformation and creep behavior of the material (particularly when such materials are subjected to high ambient temperatures), the sheet-like internal tensioning members made of PVC material will deform/stretch, which causes inflatable products to undesirably deform in shape, negatively affecting the user experience. In addition, the PVC material does not easily break down or naturally degrade after products are discarded, creating waste stream issues with environmental consequences.

Prior art approaches sometimes utilized laminated structural materials as internal tensioning members, for example, by sandwiching a fabric layer between two PVC film layers and then performing a lamination process to create a laminated sheet material. Such laminated materials provide reduced deformation/creep behavior when utilized within internal tensioning members, thus offering improved resistance to deformation when such products are inflated and used. However, these laminated materials will still undergo some deformation after product inflation, requiring more use of PVC materials to further strengthen the tensioning members against internal strain, which subsequently results in increased material costs and product weight. In addition, after such products are discarded, the increased use of PVC materials in the tensioning members also creates waste stream issues with undesired environmental consequences.

Those skilled in the art would like to manufacture internal tensioning members with materials that are more environmentally friendly. For example, in some approaches internal tensioning members may be made of a plurality of parallel tensioning strands or fabrics and then fixedly connected to an inner wall of an inflatable product. For example, U.S. patent application publication US 2022/0117405 A1 discloses an internal tensioning member used in an inflatable mattress, where such tensioning members are fabricated through the use of a helical strand structure.

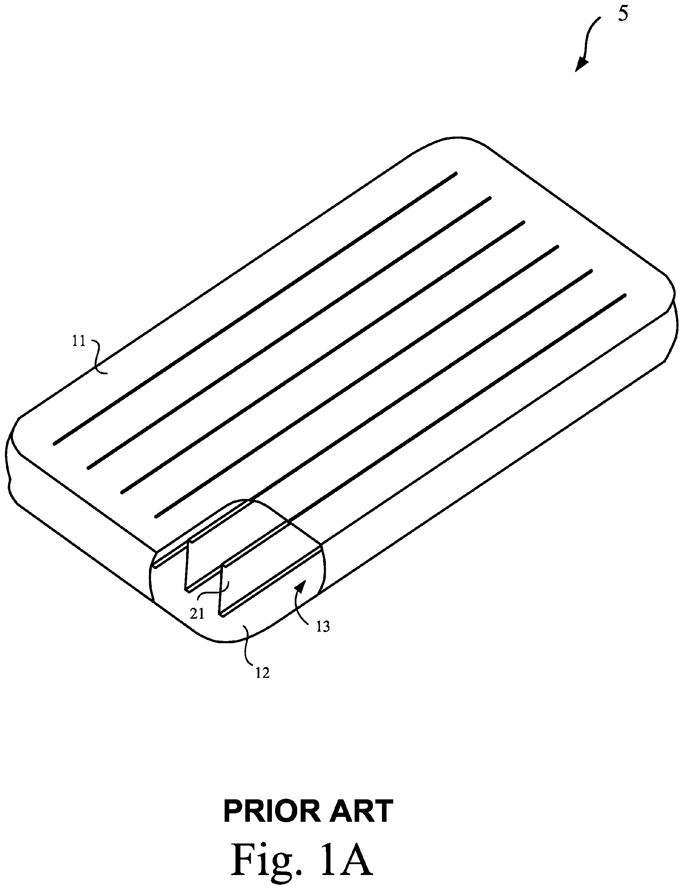

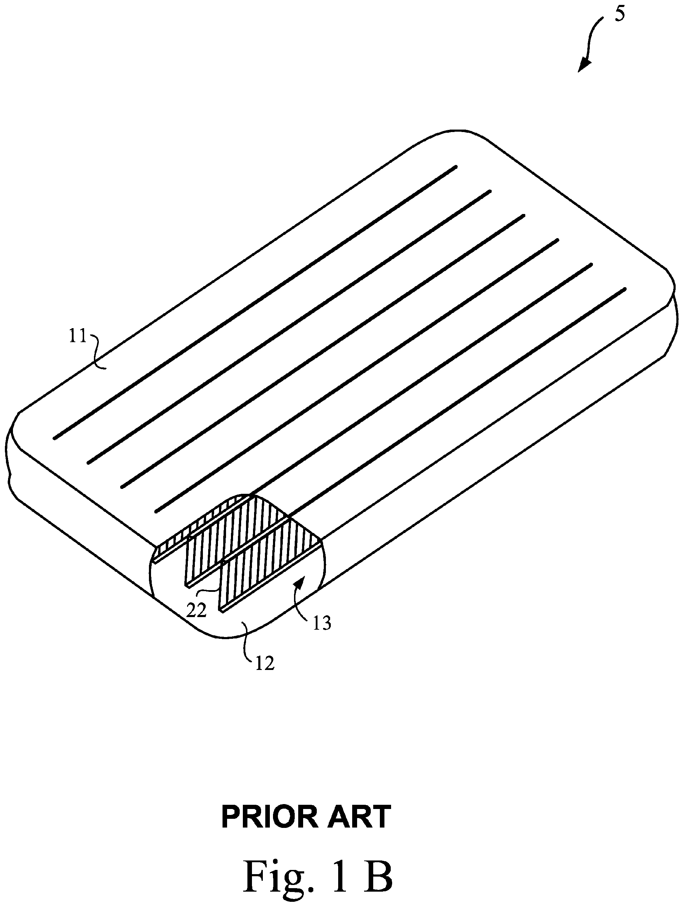

By way of example, referring to FIGS. 1A and 1B shown in the prior art, a prior inflatable mattress 5 includes at least one first wall 11, a second wall 12, and an air chamber 13 defined by the first wall 11 and the second wall 12. The inflatable mattress 5 is and configured to receive gas to be inflated thereby taking on an inflated state, and may at some point thereafter be deflated by releasing the gas from an interior region thereof.

A plurality of tensioning members 21, 22, are provided in the air chamber 13 of the inflatable mattress 5, and the tensioning members 21, 22 are connected to the first wall 11 and the second wall 12 by high-frequency welding, hot melting, adhesive bonding or other connection methods. Once the inflatable mattress 5 is inflated, the tensioning members 21, 22 assume a tensioned state, and thereby provide tensile forces to the first wall 11 and the second wall 12 to limit the deformation of the inflatable mattress 5, so that the inflatable mattress 5 assumes and maintains a designed shape after being inflated.

The plurality of tensioning members 21, 22 have different structures in different implementations. For example, each tensioning member may be a sheet-like tensioning member 21 (as shown in FIG. 1B) or a strand-like tensioning member 22 (as shown in FIG. 1B).

When the sheet-like tensioning member 21 is a single-layer sheet material, it may be made of a flexible material such as a polymer material. In the case of strand-like tensioning members 22, such tensioning members often include one or more tensioning strand bodies, which span the distance between the first wall 11 and the second wall 12 of the inflatable mattress 5 and are optionally parallel or substantially parallel in space. The strand-like tensioning member 22 is generally indirectly connected to the first wall 11 and the second wall 12 via a connecting member. The connecting member may be made of, but not limited to, a polymer material that facilitates welding of the first wall 11 and the second wall 12.

However, in prior approaches such as those identified above, production workers need to first make the internal tensioning members 21, 22 and then affix the internal tensioning members 21, 22 to the top wall 11 and the bottom wall 12 of the inflatable mattress. Typically, with this design, production workers need to perform two separate production procedures, limiting production efficiency, and further, inflatable product manufacturing technologies are needed to improve production efficiency, increase and maintain the anti-tensile performance of internal tensioning structures of inflatable products, reduce production costs, and also reduce the use of non-degradable materials to mitigate environmental impacts.

To this end, a manufacturing system capable of producing the inflatable product and a manufacturing method for producing the inflatable product are continuously developed.

### SUMMARY

The following summary of the invention is exemplary and explanatory only and is not necessarily restrictive of the invention as claimed. The summary is intended to present general aspects of the present invention in order to provide a basic understanding of at least some features of the invention. This summary is not an extensive overview of the invention. It is not intended to identify key or critical elements of the invention or to delineate the scope of the invention. The following summary merely presents some concepts of the invention in a general form as a prelude to the more detailed description provided below.

Further, it should be noted that in various embodiments, description is made with reference to figures, in which like reference numerals refer to similar or identical items in the drawings. However, certain embodiments may be practiced without one or more of these specifically identified details, or in combination with other known methods and configurations. In the following summary and detailed description, numerous details are set forth, such as specific configurations, dimensions and processes, etc., in order to provide a thorough understanding of the present invention. In other instances, well-known processes and conventional hardware have not been described in particular detail in order to not unnecessarily obscure the present invention. Reference throughout this specification to "one embodiment," "an embodiment" or the like means that a particular feature, structure, configuration, or characteristic described in connection with the embodiment is included in at least one embodiment of the invention. Thus, the appearances of the phrase "in one embodiment," "an embodiment," or the like in various places throughout this specification are not necessarily referring to the same embodiment of the invention. Furthermore, the particular features, structures, configurations, or characteristics may be combined in any suitable manner in one or more embodiments.

Example embodiments may address at least the above problems and/or disadvantages and other disadvantages not described above. Also, example embodiments are not required to overcome the disadvantages described above, and may not overcome any of the problems described above.

Further, it should be noted that in various embodiments, description is made with reference to figures, in which like reference numerals refer to similar or identical items in the drawings. However, certain embodiments may be practiced without one or more of these specifically identified details, or in combination with other known methods and configurations. In the following summary and detailed description, numerous details are set forth, such as specific configurations, dimensions and processes, etc., in order to provide a thorough understanding of the present invention. In other instances, well-known processes and conventional hardware have not been described in particular detail in order to not unnecessarily obscure the present embodiments. Reference throughout this specification to "one embodiment," "an embodiment" or the like means that a particular feature, structure, configuration, or characteristic described in connection with the embodiment is included in at least one embodiment of the invention. Thus, the appearances of the phrase "in one embodiment," "an embodiment," or the like in various places throughout this specification are not necessarily referring to the same embodiment of the invention. Furthermore, the particular features, structures, configurations, or characteristics may be combined in any suitable manner in one or more embodiments.

As used herein, the term "perpendicular" may refer to a second direction approximately orthogonal to a first direction, but as used herein, "perpendicular" may be interpreted more generally to mean the second direction is oriented in a non-parallel manner with respect to the first direction, and may be orthogonally arranged, or may vary from a true orthogonal arrangement with respect to the first direction.

An objective of the present application is to provide an inflatable product using an internal tensioning structure, in order to overcome the defects of complicated structure and low production efficiency of products in the prior art.

According to a first aspect, the present application discloses an inflatable product, including a first wall and a second wall arranged opposite the first wall, the first wall and the second wall defining an air chamber after the inflatable product is inflated, the air chamber defining a first direction parallel to the first wall and a second direction non-parallel to the first wall. In other words, the first wall and a second wall are spaced and parallel one another and extend along a first direction and a second direction. The inflatable product further comprises a plurality of tensioning strands generally extending as a whole in the first direction, more generally along a direction parallel to the first wall and to the second wall. The inflatable product further comprises a plurality of first retention strips intersecting the plurality of tensioning strands and affixing the plurality of tensioning strands to the first wall; and a plurality of second retention strips intersecting the plurality of tensioning strands and fixing the plurality of tensioning strands to the second wall.

According to another specific implementation of the present application, there is disclosed an inflatable product wherein the plurality of first retention strips and the plurality of second retention strips span the overall width of the plurality of tensioning strands.

According to another specific implementation of the present application, there is disclosed an inflatable product wherein the plurality of tensioning strands are clamped and affixed between the first retention strips and the first wall; and the plurality of tensioning strands are clamped and affixed between the second retention strip and the second wall.

According to another specific implementation of the present application, there is disclosed an inflatable product wherein the plurality of first retention strips and the plurality of second retention strips are arranged alternately to affix the plurality of tensioning strands to the first wall and the second wall.

According to another specific implementation of the present application, there is disclosed an inflatable product wherein a pair of first retention strips is alternatively arranged to a pair of second retention strips to define, along the plurality of tensioning strands, consecutive segments of tensioning strands and clamp the ends of each segment to the top wall or to the bottom wall.

According to another specific implementation of the present application, there is disclosed an inflatable product wherein at least two consecutive segments of the tensioning strands of the plurality of tensioning strands are disposed in a non-parallel manner with respect to one another.

According to another specific implementation of the present application, there is disclosed an inflatable product wherein individual strands of the plurality of tensioning strands are arranged in a parallel manner with respect to one another.

According to another specific implementation of the present application, there is disclosed an inflatable product wherein three or more strands of the plurality of tensioning strands are unequally spaced with respect to one another.

According to another specific implementation of the present application, there is disclosed an inflatable product wherein the plurality of first retention strips comprise multiple pairs of first retention strips, the plurality of second retention strips comprise multiple pairs of second retention strips, and the multiple pairs of first retention strips and the multiple pairs of second retention strips are arranged alternately to affix the plurality of tensioning strands to the first wall and the second wall.

According to another specific implementation of the present application, there is disclosed an inflatable product wherein: a spacing between two first retention strips in one of the multiple pairs of first retention strips is equal to a spacing between two first retention strips in an adjacent pair of first retention strips; and a spacing between two second retention strips in one of the multiple pairs of second retention strips is equal to a spacing between two second retention strips in an adjacent pair of second retention strips.

According to another specific implementation of the present application, there is disclosed an inflatable product wherein a strand segment of one of the plurality of tensioning strands between one first retention strip on the first wall and the corresponding second retention strip on the second wall in the second direction is transverse, preferably perpendicular, to the first wall and to the second wall.

According to another specific implementation of the present application, there is disclosed an inflatable product wherein a spacing in the first direction between two first retention strips in one of the multiple pairs of first retention strips on the first wall is greater than a spacing between a corresponding two oppositely arranged second retention strips on the second wall in the same first direction.

According to another specific implementation of the present application, there is disclosed an inflatable product wherein a spacing between two second retention strips in one of the multiple pairs of second retention strips on the second wall is greater than a spacing between a corresponding two oppositely arranged first retention strips on the first wall in the same first direction.

According to another specific implementation of the present application, there is disclosed an inflatable product wherein two strand segments of one of the plurality of tensioning strands arranged between one of the plurality of first retention strips and the corresponding two second retention strips on the second wall have equal lengths.

According to another specific implementation of the present application, there is disclosed an inflatable product wherein two strand segments of one of the plurality of tensioning strands between one of the plurality of first retention strips and the corresponding two second retention strips on the second wall have unequal lengths.

According to another specific implementation of the present application, there is disclosed an inflatable product wherein: a first strand segment of one of the plurality of tensioning strands is arranged between a first one of the first retention strips on the first wall and a corresponding first second retention strip on the second wall; and a second strand segment of one of the plurality of tensioning strands is arranged between a second one of the plurality of first retention strips adjacent to the first one of the first retention strips on the first wall and a second corresponding second retention strip on the second wall; and wherein the first strand segment and the second strand segment have unequal lengths.

According to another specific implementation of the present application, there is disclosed an inflatable product wherein the plurality of first retention strips are transverse, preferably perpendicular, to the plurality of tensioning strands, and the plurality of second retention strips are transverse, preferably perpendicular, to the plurality of tensioning strands.

According to another specific implementation of the present application, there is disclosed an inflatable product wherein the plurality of first retention strips are arranged parallel to each other, and the plurality of second retention strips are arranged parallel to each other.

According to another specific implementation of the present application, there is disclosed an inflatable product wherein a number of the first retention strips affixing the tensioning strands to the first wall is equal to a number of the second retention strips affixing the tensioning strands to the second wall.

According to another specific implementation of the present application, there is disclosed an inflatable product wherein a number of the first retention strips affixing the tensioning strands to the first wall is unequal to a number of the second retention strips affixing the tensioning strands to the second wall.

According to another specific implementation of the present application, there is disclosed an inflatable product wherein at least one of the plurality of tensioning strands is in contact with the plurality of first retention strips and the plurality of second retention strips.

According to another specific implementation of the present application, there is disclosed an inflatable product wherein the tensioning strands have a linear mass density of 532 Denier.

According to another specific implementation of the present application, there is disclosed an inflatable product wherein a linear mass density for the tensioning strands may is in the range of: 177 Denier to 1595 Denier; 319 Denier to 1329 Denier; and 532 Denier to 1063 Denier.

According to another specific implementation of the present application, there is disclosed an inflatable product wherein a linear mass density for a first strand of the plurality of tensioning strands differs from a linear mass density of a second strand of the plurality of tensioning strands.

According to another specific implementation of the present application, there is disclosed an inflatable product wherein a spacing between individual strands of the tensioning strands spacing may be within a range of: 0.5 mm to 20 mm; 1 mm to 10 mm; or 2 mm to 8 mm, or 3 mm to 6 mm.

According to another specific implementation of the present application, there is disclosed an inflatable product wherein: the first retention strips, the second retention strips, the first wall and the second wall comprise one or more of: polyvinyl chloride (PVC), thermoplastic urethane (TPU), (polyethylene terephthalate) (PET), ethylene vinyl acetate (EVA), polyurethane (PU), and nylon; and the plurality of tensioning strands comprise one or more of: cotton fibers, linen fibers, silk fibers, wool fibers, nylon fibers, natural fibers, synthetic fibers, polyester fibers, polypropylene fibers, polyethylene fibers, glass fibers, carbon fibers, acrylic fibers, aramid (aromatic polyamide) fibers, and solid or stranded wire.

According to another specific implementation of the present application, there is disclosed an inflatable product wherein: the plurality of tensioning strands comprise a monofilament, multifilament, braided, or unbraided composition; or the plurality of tensioning strands are spun with either an S-twist or a Z-twist.

According to another specific implementation of the present application, there is disclosed an inflatable product wherein: a length aspect ratio of the plurality of tensioning strands may be: within a range from 0.4 to 30; within a range from 1.0 to 20; within a range from 1.5 to 16; or approximately 1.8; and wherein the length aspect ratio is defined as a ratio of: a length of a first segment of the plurality tensioning strands arranged between one of two adjacent first retention strips of the plurality of first retention strips and a second retention strip of the plurality of second retention strips; and a length of a second segment of the plurality of tensioning strands arranged between the two first retention strips.

According to another specific implementation of the present application, there is disclosed an inflatable product wherein the plurality of first retention strips are fixedly arranged on the first wall through high-frequency welding, and the plurality of second retention strips are fixedly arranged on the second wall through high-frequency welding.

According to another aspect, the present application discloses an inflatable product including a first wall and a second wall arranged opposite the first wall, the first wall and the second wall defining an air chamber after the inflatable product is inflated, the air chamber defining a first direction parallel to the first wall and a second direction non-parallel to the first wall; a plurality of tensioning strands generally extending as a whole in the first direction; a plurality of first retention strips intersecting the plurality of tensioning strands and affixing the plurality of tensioning strands to the first wall; and a plurality of second retention strips intersecting the plurality of tensioning strands and fixing the plurality of tensioning strands to the second wall; wherein: the plurality of first retention strips and the plurality of second retention strips span the overall width of the plurality of tensioning strands.

According to another specific implementation of the present application, there is disclosed an inflatable product wherein the plurality of first retention strips comprise multiple pairs of first retention strips, the plurality of second retention strips comprise multiple pairs of second retention strips, and the multiple pairs of first retention strips and the multiple pairs of second retention strips are arranged alternately to clamp the plurality of tensioning strands to the first wall and the second wall.

According to another specific implementation of the present application, there is disclosed an inflatable product wherein when the inflatable product is in an inflated state, a strand segment of one of the plurality of tensioning strands between the first wall and the second wall is perpendicular to the first wall and the second wall.

According to another specific implementation of the present application, there is disclosed an inflatable product wherein when the inflatable product is in the inflated state, a strand segment of one of the plurality of tensioning strands between the first wall and the second wall forms an angle with the first wall and the second wall.

According to another specific implementation of the present application, there is disclosed an inflatable product wherein the plurality of first retention strips and the plurality of second retention strips are arranged alternately to affix the plurality of tensioning strands to the first wall and the second wall.

According to another specific implementation of the present application, there is disclosed an inflatable product wherein when the inflatable product is in the inflated state, strand segments of one of the plurality of tensioning strands between one of the plurality of first retention strips and the corresponding two second retention strips on the second wall have equal lengths.

According to another aspect, the present application discloses a system for manufacturing an inflatable product comprising: a feeding module, comprising: a first feeding assembly configured to supply a first sheet material; a second feeding assembly configured to supply a plurality of tensioning strands; a third feeding assembly configured to supply a second sheet material; a fourth feeding assembly configured to supply at least one upper retention strip; and a fifth feeding assembly configured to supply at least one lower retention strip; and a welding module, comprising: a first welding apparatus configured to weld the at least one upper retention strip to the plurality of tensioning strands and the first sheet material; and second welding apparatus configured to weld the at least one lower retention strip to the plurality of tensioning strands and the second sheet material, wherein the first welding apparatus and the second welding apparatus are spaced apart from each other in a first direction.

According to another specific implementation of the present application, there is disclosed a system for manufacturing an inflatable product wherein the first feeding assembly comprises: a first feeding bracket; a first rotating roller rotatably connected to the first feeding bracket; a first material roll rotatably connected to the first rotating roller; and a first conveying roller, wherein the first conveying roller and the first rotating roller are spaced apart from each other in a second direction, the first material roll and the first conveying roller are configured to wind the first sheet material, and the second direction intersects with the first direction.

According to another specific implementation of the present application, there is disclosed a system for manufacturing an inflatable product, wherein the second feeding assembly comprises: a second feeding bracket; a second rotating roller rotatably connected to the second feeding bracket; a tensioning strand material roll rotatably connected to the second rotating roller; and a second conveying roller, wherein the second conveying roller and the second rotating roller are spaced apart from each other in a second direction, and the tensioning strand material roll and the second conveying roller are configured to wind the plurality of tensioning strands.

According to another specific implementation of the present application, there is disclosed a system for manufacturing an inflatable product wherein the third feeding assembly comprises: a third feeding bracket; a third rotating roller rotatably connected to the third feeding bracket; a second material roll rotatably connected to the third rotating roller; and a third conveying roller, wherein the third conveying roller and the third rotating roller are spaced apart from each other in a second direction, and the second material roll and the third conveying roller are configured to wind the second sheet material.

According to another specific implementation of the present application, there is disclosed a system for manufacturing an inflatable product wherein the fourth feeding assembly comprises: at least one first strip reel; at least one fourth conveying roller; and a first attachment portion, wherein the at least one first strip reel and the at least one fourth conveying roller are configured to wind the at least one upper retention strip, and the at least one fourth conveying roller is configured to convey the at least one upper retention strip to the first attachment portion.

According to another specific implementation of the present application, there is disclosed a system for manufacturing an inflatable product wherein a first clamping member and a first trimming member are provided at two ends of the first attachment portion in a third direction, wherein the first clamping member is configured to clamp one end of the at least one upper retention strip; and the first trimming member is configured to trim the other end of the at least one upper retention strip.

According to another specific implementation of the present application, there is disclosed a system for manufacturing an inflatable product wherein the first attachment portion comprises: a first attachment strip extending in the third direction and configured to attach to the trimmed upper retention strip, the third direction intersecting with the first direction and a second direction, respectively.

According to another specific implementation of the present application, there is disclosed a system for manufacturing an inflatable product wherein the fourth feeding assembly further comprises: first slide rails arranged on two sides of the first strip reel in the third direction and extending in the second direction; and first brackets slidably connected to the first slide rails and configured to transport the first attachment strip to the welding module, each first bracket comprising a first part extending in the first direction and a second part extending in the second direction, wherein the second part is arranged at a top end of the first part in the first direction and away from the first slide rail, the first part is configured to move in the first direction, and the second part is configured to be connected to the first attachment strip.

According to another specific implementation of the present application, there is disclosed a system for manufacturing an inflatable product wherein the fourth feeding assembly further comprises: third slide rails arranged on the two sides of the first strip reel in the third direction and extending in the second direction, the third slide rails being spaced apart from the first slide rails in the third direction; and lower anti-deflection frames slidably connected to the third slide rails, each lower anti-deflection frame comprising a fifth part extending in the first direction and a lower pressure roller extending in the third direction, wherein the lower pressure roller is arranged at a top end of the fifth part, and the fifth part is configured to move in the first direction such that the lower pressure roller abuts against the second sheet material.

According to another specific implementation of the present application, there is disclosed a system for manufacturing an inflatable product wherein the system is further configured to: retain, by the lower pressure roller, the second sheet material to prevent upward deflection thereof.

According to another specific implementation of the present application, there is disclosed a system for manufacturing an inflatable product wherein the fifth feeding assembly comprises: at least one second strip reel; at least one fifth conveying roller; and a second attachment portion, wherein the at least one second strip reel and the at least one fifth conveying roller are configured to wind the at least one lower retention strip, and the at least one fifth conveying roller is configured to convey the at least one lower retention strip to the second attachment portion.

According to another specific implementation of the present application, there is disclosed a system for manufacturing an inflatable product wherein a second clamping member and a second trimming member are provided at two ends of the second attachment portion in a third direction, wherein the second clamping member is configured to clamp one end of the at least one lower retention strip; and the second trimming member is configured to trim the other end of the at least one lower retention strip.

According to another specific implementation of the present application, there is disclosed a system for manufacturing an inflatable product herein the second attachment portion comprises: a second attachment strip extending in the third direction and configured to attach to the trimmed lower retention strip.

According to another specific implementation of the present application, there is disclosed a system for manufacturing an inflatable product wherein the fifth feeding assembly further comprises: second slide rails arranged on two sides of the at least one second strip reel in the third direction and extending in the second direction; and second brackets slidably connected to the second slide rails and configured to transport the second attachment strip to the welding module, each second bracket comprising a third part extending in the first direction and a fourth part extending in the second direction, wherein the fourth part is arranged at a top end of the third part in the first direction and away from the second slide rail, the third part is configured to move in the first direction, and the fourth part is configured to be connected to the second attachment strip.

According to another specific implementation of the present application, there is disclosed a system for manufacturing an inflatable product wherein the fourth feeding assembly further comprises: fourth slide rails arranged on the two sides of the second strip reel in the third direction and extending in the second direction, the fourth slide rails being spaced apart from the second slide rails in the third direction; and upper anti-deflection frames slidably connected to the fourth slide rails, each upper anti-deflection frame comprising a sixth part extending in the first direction, a seventh part extending in the second direction, and an upper pressure roller extending in the third direction, wherein one end of the seventh part is connected to the sixth part, the other end of the seventh part is connected to the upper pressure roller, and the sixth part is configured to move in the first direction such that the upper pressure roller abuts against the first sheet material.

According to another specific implementation of the present application, there is disclosed a system for manufacturing an inflatable product wherein the system is further configured to: retain, by the upper pressure roller, the first sheet material to prevent downward deflection thereof.

According to another specific implementation of the present application, there is disclosed a system for manufacturing an inflatable product wherein the second bracket further comprises a cutting member spaced apart from the second attachment strip in the second direction and configured to cut the plurality of tensioning strands.

According to another specific implementation of the present application, there is disclosed a system for manufacturing an inflatable product further comprising a tensioning mechanism configured to keep the first sheet material, the second sheet material and the plurality of tensioning strands in a tensioned state at all times.

According to another aspect, the present application discloses a method for manufacturing an inflatable product, the method comprising: providing a first sheet material, a plurality of tensioning strands, a second sheet material, an upper retention strip and a lower retention strip; welding the upper retention strip and the first sheet material to the plurality of tensioning strands between the upper retention strip and the first sheet material; welding the lower retention strip and the second sheet material to the plurality of tensioning strands between the lower retention strip and the second sheet material; advancing the welded first sheet material, second sheet material and tensioning strands for placement for additional welding; and repeating the welding of the upper retention strip and the first sheet material to the plurality of tensioning strands between the upper retention strip and the first sheet material, and the welding of the lower retention strip and the second sheet material to the plurality of tensioning strands between the lower retention strip and the second sheet material, to form a semi-finished product of the inflatable product.

According to another specific implementation of the present application, there is disclosed a method for manufacturing an inflatable product wherein before the welding of the upper retention strip and the first sheet material to the plurality of tensioning strands between the upper retention strip and the first sheet material, comprising: providing a lower anti-deflection frame, the lower anti-deflection frame comprising a lower pressure roller which abuts against the second sheet material to prevent an upward deflection thereof.

According to another specific implementation of the present application, there is disclosed a method for manufacturing an inflatable product wherein before the welding of the lower retention strip and the second sheet material to the plurality of tensioning strands between the lower retention strip and the second sheet material, further comprising: providing an upper anti-deflection frame, the upper anti-deflection frame comprising an upper pressure roller which abuts against the first sheet material to prevent a downward deflection thereof.

According to another specific implementation of the present application, there is disclosed a method for manufacturing an inflatable product wherein after the semi-finished product of the inflatable product is formed, comprising: providing an upper pressure roller, a lower pressure roller and a cutting member, wherein the upper pressure roller abuts against the first sheet material; the lower pressure roller presses the second sheet material down until the second sheet material is recessed downwardly to form a blank segment; and the cutting member cuts off the plurality of tensioning strands across the blank segment.

The inflatable product proposed by the present application uses an improved internal tensioning structure, which, on the one hand, can ensure the anti-tensile performance of the internal tensioning members of the inflatable product, and on the other hand, improve the production efficiency of the inflatable product, reduce the weight of the inflatable product, and reduce the use of non-degradable materials to improve the natural environment.

### BRIEF DESCRIPTION OF THE DRAWINGS

The above and/or other aspects will become apparent and more readily appreciated from the following description of example embodiments, taken in conjunction with the accompanying drawings, in which:
FIG. 1A shows a schematic view of the structure of an inflatable mattress in the prior art;
FIG. 1B shows a schematic view of the structure of another inflatable mattress in the prior art;
FIG. 2 shows a schematic structure of an inflatable mattress according to an embodiment of the present application;
FIG. 3 is a schematic exploded view of the structure of the inflatable mattress shown in FIG. 2;
FIG. 4 shows an internal tensioning structure of an inflatable mattress according to an embodiment of the present application;
FIG. 4A shows a detailed partial view of the tensioning structure of FIG. 4 from perspective of section F.
FIG. 4B shows an embodiment of a tensioning structure of the present application having non-uniformly distributed tensioning strands;
FIG. 4C shows a tensioning structure of the present application having tensioning strands with varying linear mass densities;
FIG. 4D shows a tensioning structure of the present application having non-parallel tensioning strands;
FIG. 5 shows a cross-sectional view of an inflatable mattress according to another embodiment of the present application;
FIG. 6 shows a cross-sectional view of an inflatable mattress according to another embodiment of the present application;
FIG. 7 shows a cross-sectional view of an inflatable mattress according to another embodiment of the present application;
FIG. 8 shows a cross-sectional view of an inflatable mattress according to another embodiment of the present application;
FIG. 9 shows an internal tensioning structure of an inflatable mattress according to another embodiment of the present application;
FIG. 10 shows a perspective view of an inflatable pool according to an embodiment of the present application;
FIG. 11 is a partial structural cross-sectional perspective view of the inflatable pool shown in FIG. 10;
FIG. 12 is a structural exploded view of the inflatable pool shown in FIG. 10;
FIG. 13 shows a schematic perspective view of an internal tensioning structure of an inflatable pool according to an embodiment of the present application;
FIG. 14 shows a cross-sectional plan view of an inflatable pool according to an embodiment of the present application;
FIG. 15 is a partial enlarged view A of the cross-sectional plan view shown in FIG. 14;
FIG. 16 shows a cross-sectional plan view of an inflatable pool according to another embodiment of the present application;
FIG. 17 is a partial enlarged view B of the cross-sectional plan view shown in FIG. 16;
FIG. 18 shows a cross-sectional plan view of an inflatable pool according to another embodiment of the present application;
FIG. 19 is a partial enlarged view C of the cross-sectional plan view shown in FIG. 18;
FIG. 20 shows a cross-sectional plan view of an inflatable pool according to another embodiment of the present application;
FIG. 21 is a partial enlarged view D of the cross-sectional plan view shown in FIG. 20;
FIG. 22 shows a cross-sectional plan view of an inflatable pool according to another embodiment of the present application;
FIG. 23 is a partial enlarged view E of the cross-sectional plan view shown in FIG. 22;
FIG. 24 shows a partial cross-sectional schematic perspective view of a structure of an inflatable pool according to another embodiment of the present application;
FIG. 25 shows a perspective schematic view of one structure of a manufacturing system provided in a first manufacturing embodiment of the present application;
FIG. 26 shows a schematic view of the structures of a first slide rail and a first bracket, and a second slide rail and a second bracket of FIG. 25;
FIG. 27 shows a cross-sectional view of a semi-finished product of an inflatable mattress manufactured in a second manufacturing embodiment and a third manufacturing embodiment of the present application;
FIG. 28 shows a schematic view of the structure of a fourth feeding assembly provided in an embodiment of the present application;
FIG. 28A shows a schematic view of the structure of a first attachment portion in FIG. 6, with a pair of upper retention strips not yet attached to a first attachment strip;
FIG. 28B shows a schematic view of the structure of the first attachment portion in FIG. 6, with the pair of upper retention strips having been attached to the first attachment strip;
FIG. 29 shows a schematic view of the structure of a manufacturing system of the first embodiment of the present application;
FIGS. 29A-29D show a welding process of welding a pair of upper retention strips in the first embodiment;
FIGS. 29E-29H show a welding process of welding a pair of lower retention strips in the first embodiment;
FIG. 30 shows a schematic view of the structures of a first slide rail and a first bracket, a third slide rail and a lower anti-deflection frame, a second slide rail and a second bracket, and a fourth slide rail and an upper anti-deflection frame;
FIG. 31 shows a schematic view of the structure of a manufacturing system of the third manufacturing embodiment;
FIGS. 31A-31I show a welding process of welding a pair of upper retention strips in the second embodiment;
FIGS. 31J-31Q show a welding process of welding a pair of lower retention strips in the second embodiment;
FIG. 32 shows a cross-sectional view of a semi-finished product of an inflatable mattress manufactured in a fourth manufacturing embodiment of the present application;
FIG. 33 shows a schematic view of the structure of a manufacturing system of the fourth manufacturing embodiment;
FIGS. 33A-33N show the differences between welding operations of the fourth manufacturing embodiment and the third manufacturing embodiment; and
FIG. 34 shows a flow diagram illustrating a process of manufacture of the present application.

A more complete understanding of the present invention may be derived by referring to the detailed description and claims when considered in connection with the following illustrative figures.

### DETAILED DESCRIPTION

Reference will now be made in detail to example embodiments which are illustrated in the accompanying drawings, wherein like reference numerals refer to like elements throughout. Therefore, once an item is defined in one of the drawings, it is not necessary to further define and explain the item in the subsequent drawings. In this regard, the example embodiments may have different forms and may not be construed as being limited to the descriptions set forth herein.

Implementations of the present invention are illustrated below by way of specific embodiments, and those skilled in the art would have readily understood other advantages and effects of the present invention from the content disclosed in the description. Although the description of the present invention will be introduced with respect to preferred embodiments, it does not mean that the features of the invention are limited to the implementations. On the contrary, the purpose of introducing the invention with respect to the implementations is to cover other options or modifications that may be extended based on the claims of the present invention. The following description contains numerous specific details in order to provide deep understanding of the present invention. The present invention may also be implemented without these details. In addition, in order to avoid confusing or obscuring key points of the present invention, some specific details will be omitted in the description. It should be noted that the embodiments and features of the embodiments in the present invention can be combined with each other without conflict.

In the description of the present application, it should be noted that orientation or position relationships indicated by terms such as "center", "longitudinal", "transverse", "length", "width", "thickness", "up", "down", "front", "rear", "left", "right", "vertical", "horizontal", "top", "bottom", "inside", "outside", "clockwise", "counterclockwise," "upper," "lower," "inner," and "bottom" are based on orientations or position relationships shown in the drawings or the orientations or position relationships in which a product of the disclosed embodiments is customarily placed in use, which is only for convenience of describing the present embodiments and simplifying the description, rather than indicates or implies that devices or elements referred to must have a specific orientation or be constructed and operated in the specific orientation, and therefore cannot be construed as limiting the present embodiments.

The terms "first," "second," etc. are only intended to distinguish the description, and should not be construed as indicating or implying the relative importance.

In the present application, unless otherwise explicitly specified and defined, terms "arrange," "mount," "connect," "connected," "connection," "affixed," and "fixing" should be understood in a broad sense, unless otherwise explicitly specified and limited. For example, a connection may be a secured connection, a detachable connection, or an integral connection; or may be a mechanical connection or an electrical connection; or may be a direct connection, an indirect connection by way of an intermediate medium, or internal communication between two elements. For those of ordinary skill in the art, the specific meaning of the terms mentioned above in the embodiments should be understood in specific cases.

In order to make the purpose, technical solutions and advantages of the present invention clearer, implementations of the present invention will be described below in further details with reference to the accompanying drawings.

In the description of the present application, an inflatable product 10 (such as the mattresses 100 or an inflatable pool 200 described below) includes at least one air chamber configured to be inflated, and after a pressure of an introduced gas (e.g., air) in the air chamber reaches a desired value, the inflatable product assumes an inflated state and is maintained in a predetermined shape. After the gas in the air chamber of the inflatable product is released, the inflatable product assumes a deflated state, and a volume of the inflatable product is greatly reduced relative to that of the inflatable product in the inflated state, thereby facilitating storage and transportation of the inflatable product.

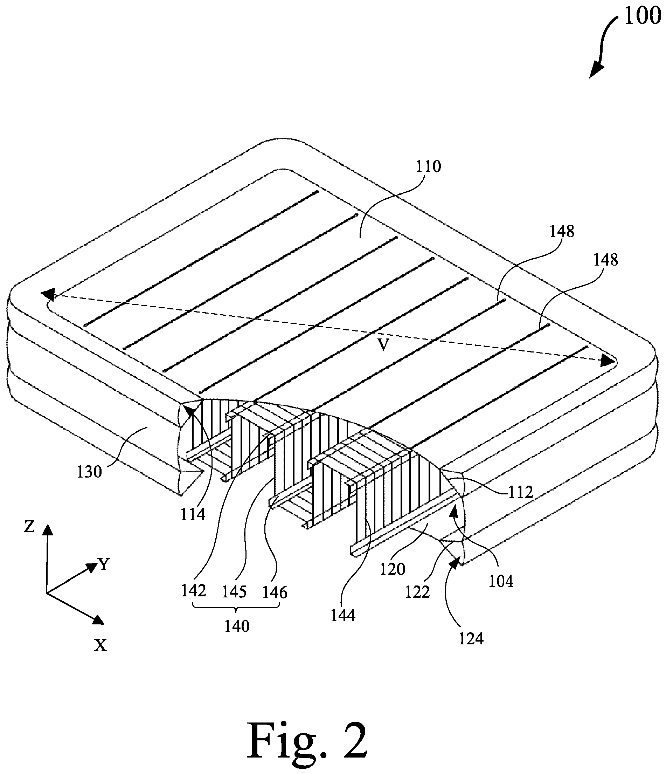

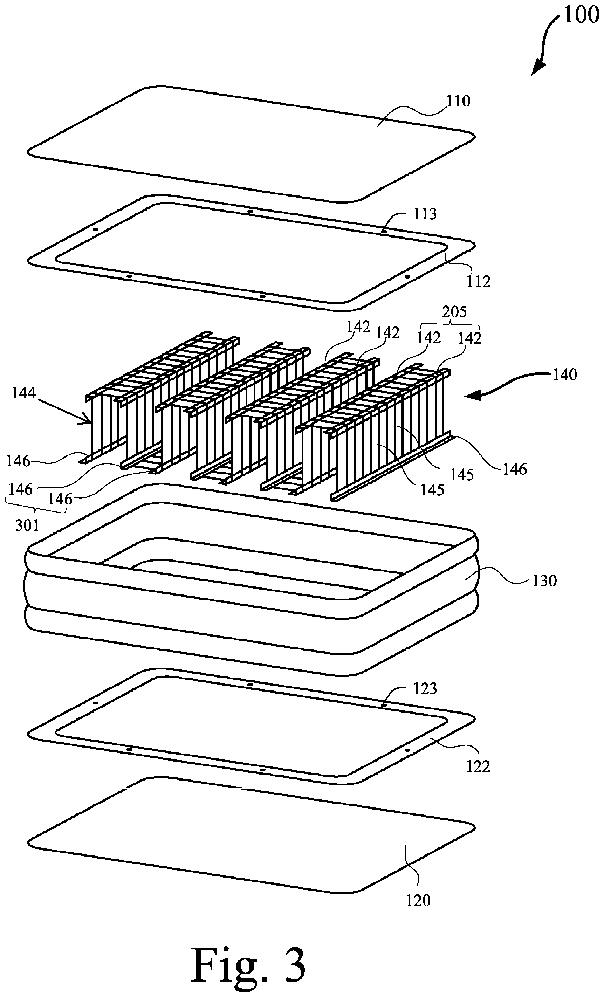

FIGS. 2 and 3 illustrate a schematic structure of a first product embodiment in the form of an inflatable mattress 100 according to the present application. The inflatable mattress 100 includes a top wall 110 (which may also be referred to as a first wall), a bottom wall 120 (which may also be referred to as a second wall), a side wall 130 that is coupled to an outer periphery of the top wall 110 and an outer periphery of the bottom wall 120, and an internal tensioning structure 140 connected to the top wall 110 and the bottom wall 120. When the inflatable mattress 110 is in an inflated state, the top wall 110 and the bottom wall 120 are situated substantially parallel to each other and form an air chamber 104 of the inflatable mattress 100 together with the side wall 130. Once inflated, the air chamber 104 extends along three main directions: a first direction X parallel to the first wall 110 and to the second wall 120, a second direction Z non-parallel to the first wall 110 and to the second wall 120 but orthogonal to them and to the first direction X, and a third direction Y parallel to the first wall 110 and to the second wall 120 and perpendicular to the first direction X. An upper annular tensioning member 112 is connected to the top wall 110 and the side wall 130, and a lower annular tensioning member 122 is connected to the bottom wall 120 and the side wall 130, such that the shape of the inflatable mattress after being inflated is optimized to have a generally flat rectanguloid shape with defined corner regions 114, 124. Once connected to the top wall and to the side wall, the upper tensioning member 112 results transversely placed with respect to the top wall 110 and the side wall 130; in the same way, once connected to the bottom wall and to the side wall, the lower annular tensioning member 122 results transversely placed with respect to the bottom wall 120 and the side wall 130. Further, the upper annular tensioning member 112 and lower annular tensioning member 122 are respectively provided with gas passages 113, 123, which comprise openings that allow respective upper and lower corner regions 114, 124 of the inflatable mattress 100 proximate the annular tensioning member 112, 122 to receive inflation gasses and thereby provide a supportive structure to the corner edge regions 114, 124 of the inflatable mattress 100 when in an inflated state thereof.

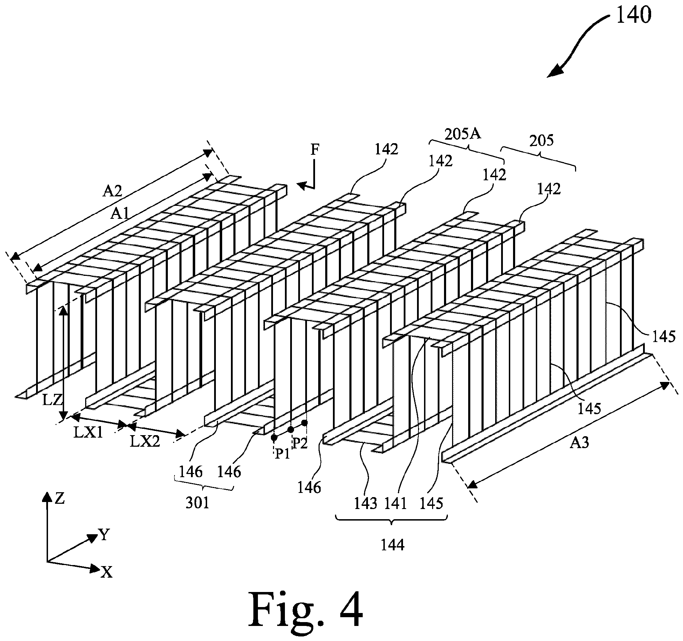

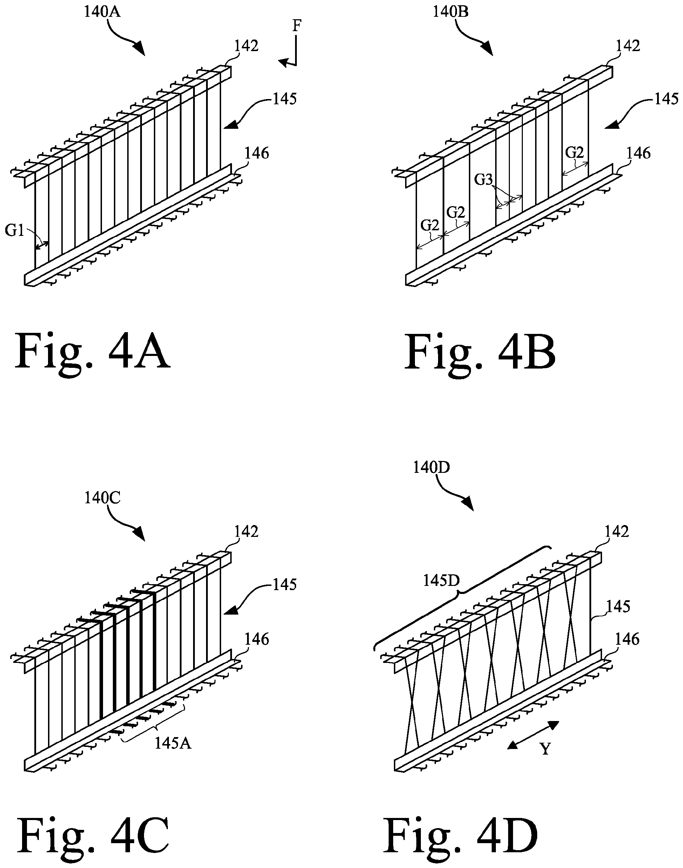

In one implementation, the internal tensioning structure 140 includes a plurality of parallel tensioning strands 144. The plurality of parallel tensioning strands 144 generally extend as a whole in a length direction (shown as direction X in FIG. 2) of the inflatable mattress 100. In various embodiments, the plurality of parallel tensioning strands 144 are equally spaced from each other and are spatially parallel or generally parallel to each other. A plurality of upper retention strips 142 (or first retention strips) are arranged transversely, preferably perpendicularly, to the plurality of parallel tensioning strands 144. Preferably, the upper retention strips 142 are parallel one another and are in contact with the parallel tensioning strands 144 going from bottom to top. Each upper retention strip 142 is welded to the top wall 110 to form weld seams 148, such that the parallel tensioning strands 144 are fixedly arranged at intervals between the upper retention strips 142 and the top wall 110. A plurality of lower retention strips 146 (or second retention strips) are arranged transversely, preferably perpendicularly, to the plurality of parallel tensioning strands 144. Preferably, the lower retention strips 146 are parallel one another and are in contact with the parallel tensioning strands 144 going from top to bottom. Each lower retention strip 146 is welded to the bottom wall 120 to form weld seams 148, such that the parallel tensioning strands 144 are fixedly arranged at intervals between the lower retention strips 146 and the bottom wall 120. In one aspect, and regards to any embodiment herein, any one of the tensioning strands 144 may traverse the entire tensioning structure 140 in the X direction, going continuously up and down to be in contact with all of the retention strips, both the upper strips and the lower strips (e.g. 142, 146). In this way, the upper retention strips 142 and the lower retention strips 146 define, along the tensioning strands, a plurality of segments (in the following indicated with 141, 143, 145, etc...) of tensioning strands of the plurality of tensioning strands 144. In detail, a pair (in the following indicated with 205) of upper retention strips 142 is alternatively arranged to a pair (in the following indicated with 301) of lower retention strips 146 identifying, in the plurality of tensioning strands 144, consecutive segments 141, 143, 145 of tensioning strands. The upper retention strips 142 and lower retention strips 146 clamp the ends of each segment respectively to the top wall 110 and to the bottom wall 120. Two consecutive segments 141 and 145 or 143 and 145 of the tensioning strands of the plurality of tensioning strands 144 are disposed in a non-parallel manner with respect to one another. FIG. 4 shows an internal tensioning structure 140 of an inflatable product 10 such as an inflatable mattress 100 according to the first product embodiment of the present application. In this illustrated aspect, the length A2 of each upper retention strip 142 and the length A3 of each lower retention strip 146 are both greater than the placement width A1 of the plurality of parallel tensioning strands 144 in a width direction (shown as direction Y) of the inflatable mattress 100, such that each of the parallel tensioning strands 144 is fixed upon the retention strips 142, 146. FIG. 4A illustrates a view of a tensioning structure 140A taken from section F of FIG. 4, showing a configuration of the first product embodiment with tensioning strand segments 145having a uniform inter-strand distance G1, as are the uniform inter-strand distances P1 = P2 as shown in FIG. 4. As used herein, the term "tensioning strand segment" refers to a portion of one of the parallel tensioning strands 144 that spans any two retention strips; for example, a tensioning strand segment may be disposed between two upper retention strips 142 (e.g. tensioning strand segment 141), or between two lower retention strips 146 (e.g. tensioning strand segment 143) or between an upper retention strip 142 and a lower retention strip 146 (e.g. tensioning strand segment 145). Further, the tensioning strand segments together may also be collectively referred to herein as parallel tensioning strands 144. The tensioning strand segments may also be simply called strand segments, omitting the word "tensioning," for brevity.

Those of skill in the art understand that in other alternative embodiments, the plurality of parallel tensioning strands 144 may extend in the width direction (shown as direction Y in FIG. 2) or in a diagonal direction (shown as direction V in FIG. 2) of the inflatable mattress 100 according to the actual product requirements. In other embodiments, an extension direction of the plurality of parallel tensioning strands 144 is at a set angle with the length direction or the width direction of the inflatable mattress 100. Put another way, the plurality of parallel tensioning strands 144 generally extend as a whole in the length direction X, or in the width direction Y, or in the diagonal direction V of the inflatable mattress 100, or extend in a direction at a set angle with the length direction or the width direction of the inflatable mattress 100.

Optionally, as shown in regard to a view of the tensioning structure 140B according to an embodiment as shown in FIG. 4B, a plurality of tensioning strand segments 145 described above, which may be parallel to one another, may be unequally spaced from each other, for example, any three adj acent tensioning strand segments 145 are unequally spaced from each other, or some adjacent strand segments 145 are equally spaced from each other while some adjacent tensioning strand segments 145 are unequally spaced from each other. In FIG. 4B, more particularly some tensioning strand segments 145 are configured with an inter-strand spacing G3, while other tensioning strand segments 145 are configured with greater inter-strand spacing G2. Such varying inter-strand spacing may be utilized depending on design considerations, such as adding additional tension-resistance in certain locations (such as a center location) of embodiments of an inflatable product 10.

Optionally, the length of one upper retention strip 142 and the length of the corresponding lower retention strip 146 in a vertical direction may be greater than the placement width of some of the plurality of parallel tensioning strands 144 in the width direction Y of the inflatable mattress 100, instead of the placement width of all the parallel tensioning strands 144. Such implementation choices depend upon specific shape limitations of the specific inflatable product 10 configuration and desired tensioning performance of the tensioning structure 140.

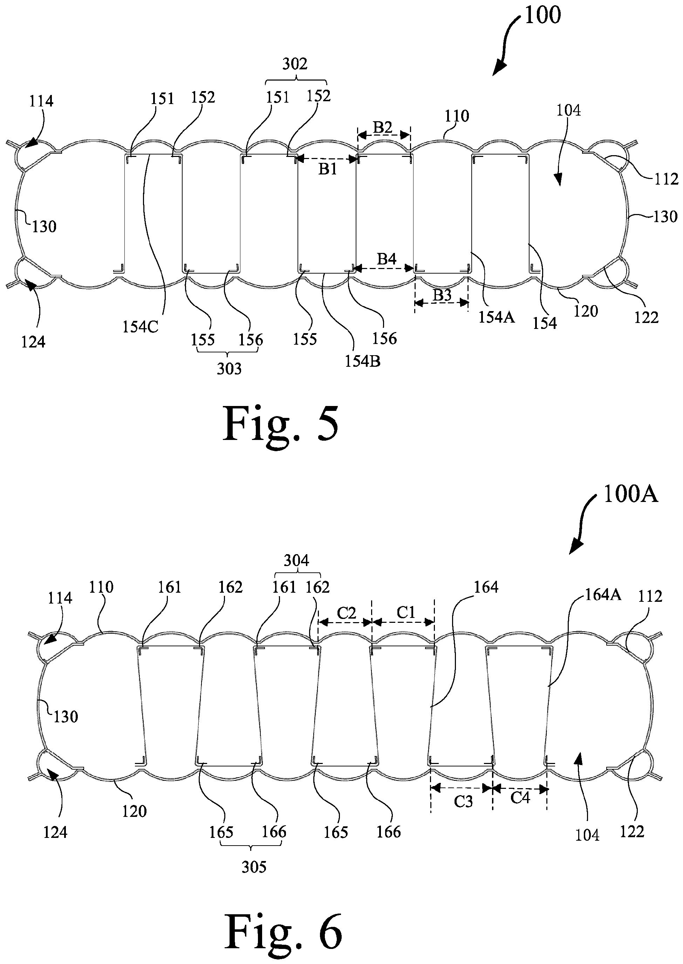

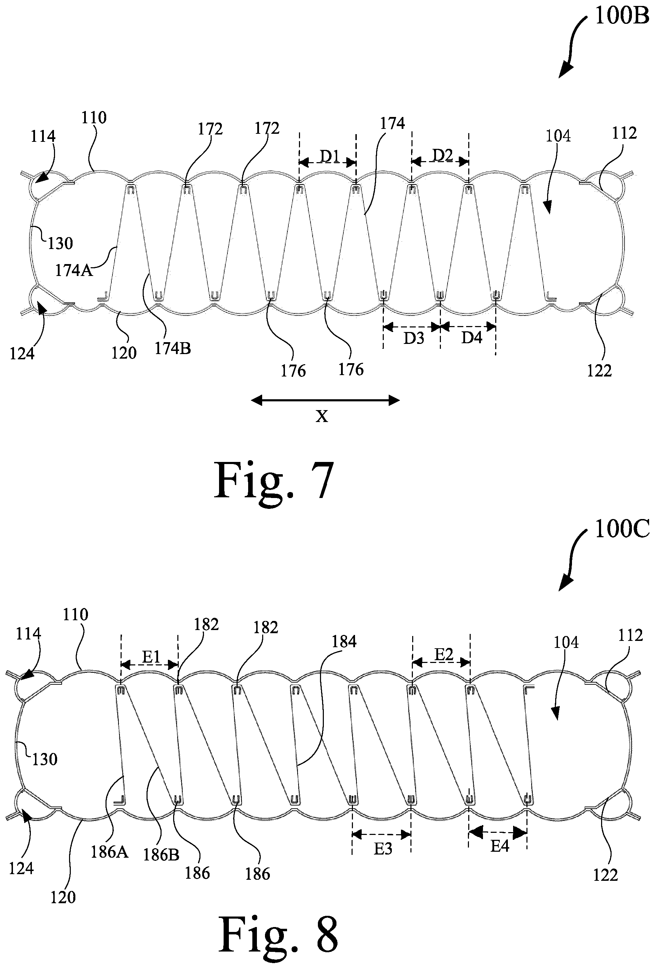

Additionally, various shapes of the tensioning structure 140 may be achieved by using varying relative geometries. More specifically, in FIG. 4, a tensioning structure height in the Z direction LZ is shown, along with intra-retention strip spacing LX1 and LX2 in the X direction. In one embodiment, LX1 and LX2 may be approximately equal (as shown in FIG. 5 where B 1 is approximately equal to B2), and in alternative embodiments, LX1 and LX2 may vary with respect to each other depending on design parameters. Further, an aspect ratio ZX of the tensioning structure 140 may be defined by a ratio of LZ to LX1, which again may be selected for the particular tensioning structure 140 based on desired design tolerances arising from an amount of tensioning forces exerted by the inflatable product 10 when in an inflated state thereof. As with most aspect ratios, absolute dimensions may vary by the inflatable product 10, and may be scaled in accordance with the ZX aspect ratio. In one exemplary embodiment, the ZX aspect ratio is 1.8 (a unit-less number that represents the ratio of the length LZ to the length LX1, which in the tensioning structure 140 of FIGS. 4 and 5 is approximately 1.8). Exemplary aspect ratios ZX in illustrated mattresses 100 (discussed below) may range from 1.7 to 15.5, the latter of which is applicable to triangularly-shaped tensioning structures discussed in regard to FIGS. 7 and 8. In alternative exemplary embodiments, the ZX aspect ratio may be defined within in ranges from 0.4 to 30 or from 1.0 to 20 or from 1.5 to 16.

In another embodiment of a view of the tensioning structure 140C shown in FIG. 4C, the plurality of tensioning strands 144 may comprise different thicknesses or varying linear mass densities as described below in more detail. For example, as depicted in FIG. 4C, a first plurality 145A of the strand segments 145 may have a first linear mass density (shown as a higher linear mass density/greater thickness in the illustration), and a second plurality 145B of the strand segments 145 may have a second linear mass density (shown depicting a reduced thickness/linear mass density compared with the strand segments 145A). Any combination of linear mass densities within the tensioning strands 144 may be utilized to achieve a desired effect, such as the higher linear mass density strand segments 145A being disposed within a central region of the tensioning structure 140, as greater tensioning forces may be exerted within such central regions upon inflation of the inflatable product 10.

In addition, the plurality of tensioning strands 144 in the internal tensioning structure 140 may also include a plurality of tensioning strand segments 145 which may be non-parallel in some particular portions (e.g., between a pair of upper retention strips 142 or a pair of lower retention strips). For further example, FIG. 4D shows a view of a tensioning structure 140D of the present application having a plurality of non-parallel tensioning strand segments 145D affixed in an "X" crisscrossing configuration between upper retention strip 142 and lower retention strip 146. By providing non-parallel tensioning strand segments 145D in a truss-like configuration, the upper retention strip 142 and lower retention strip 146 can now not only provide tensioning to maintain the desired inflated shape of the inflatable products 10, but also may provide additional lateral stability by resisting translation in the transverse Y direction of the upper and lower retention strips 142, 146 with respect to one another due to the non-orthogonal arrangement of the tensioning strand segments 145D. A mix of vertical and non-vertical tensioning strand segments (145, 145D, respectively) may be used together in the same tensioning structure 140D, as illustrated in FIG. 4D.

In one implementation, two adjacent upper retention strips 142 among the plurality of upper retention strips 142 may not be parallel to each other. For example, any two adjacent upper retention strips 142 are disposed in a non-parallel orientation with respect to each other, or some adjacent upper retention strips 142 are parallel to each other while some adjacent upper retention strips 142 are not parallel to each other. Two adjacent lower retention strips 146 among the plurality of lower retention strips 146 may not be parallel to each other. For example, any two adjacent lower retention strips 146 are not parallel to each other, or some adjacent upper retention strips 146 are parallel to each other while some adjacent upper retention strips 146 are not parallel to each other.

In the first product embodiment illustrated in FIGS 2-4, the upper retention strips 142 and the lower retention strips 146 are both in the shape of straight strips. However, in other embodiments, the upper retention strips 142 and the lower retention strips 146 may be in other shapes, such as a serpentine, wavy, or saw tooth shape.

In the illustrated embodiments, the plurality of upper retention strips 142 include multiple pairs of upper retention strips 205; and the plurality of lower retention strips 146 include multiple pairs of lower retention strips 301. The multiple pairs of upper retention strips 205 and the multiple pairs of lower retention strips 301 are arranged alternately to affix the parallel tensioning strands 144 to the top wall 110 and the bottom wall 120. In one aspect, the pair of lower retention strips 301 are arranged oppositely the pair of upper retention strips 205A in the Z direction, and are directly connected thereto through the parallel tensioning strands 144. In this way, after the inflatable mattress is inflated, the strand segment portions of the plurality of parallel tensioning strands 144 between one upper retention strip 142 on the top wall 110 and the corresponding lower retention strip 146 on the bottom wall 120 bear the tension from the corresponding positions of the top wall 110 and the bottom wall 120, such that the distance between the top wall 110 and the bottom wall 120 reach a preset length to enable the inflatable mattress to achieve but not exceed a preset height after being inflated.

In one aspect, two individual lower retention strips (not shown) are respectively provided on two sides of the multiple pairs of lower retention strips 301 in the length direction X of the mattress, and are respectively connected to the first and last ends of each of the parallel tensioning strands 144. This arrangement can further prevent the parallel tensioning strands 144 from bearing excessive tension that would cause the tensioning strands to be pulled out from between the retention strips and the top wall 110 (or the bottom wall 120).

More particularly, the internal tensioning structure 140 of FIG. 4 of an inflatable mattress according to the first product embodiment of the present application shows the plurality of parallel upper retention strips 142 are substantially equally spaced; and the plurality of lower retention strips 146 parallel to each other are substantially equally spaced. The plurality of upper retention strips 142 include multiple pairs of upper retention strips 205; and the plurality of lower retention strips 146 include multiple pairs of lower retention strips 301. The multiple pairs of upper retention strips 205 and the multiple pairs of lower retention strips 301 are arranged alternately to affix the parallel tensioning strands 144 to the top wall 110 and the bottom wall 120. The plurality of parallel tensioning strands 144 form a plurality of strand segments 141 between each pair of upper retention strips 205, and the top wall 110 and the plurality of upper retention strips 142 jointly clamp the plurality of strand segments 141. The plurality of parallel tensioning strands 144 form a plurality of strand segments 143 between each pair of lower retention strips 301, and the bottom wall 120 and the plurality of lower retention strips 146 jointly clamp the plurality of strand segments 143. The plurality of parallel tensioning strands 144 form a plurality of strand segments 145 between one upper retention strip 142 and the vertically corresponding lower retention strip 146.

The plurality of upper retention strips 142 and the plurality of lower retention strips 146 form a corresponding relationship in a vertical direction (shown as direction Z in FIG. 4) through the plurality of strand segments 145. Put another way, two ends of each strand segment 145 in the vertical direction are in correspondence of one upper retention strip 142 and one lower retention strip 146, respectively.

In the illustrated embodiment, the strand segments 145 of the plurality of parallel tensioning strands 144 between one upper retention strip 142 and the corresponding lower retention strip 146 may have equal lengths. The strand segments 141 of the plurality of parallel tensioning strands 144 between each pair of upper retention strips 205 may be disposed in a perpendicular manner with respect to the upper retention strips 142. The strand segments 143 of the plurality of parallel tensioning strands 144 between each pair of lower retention strips 301 may be disposed in a perpendicular manner with respect to the lower retention strips 146. The strand segments 147 of the plurality of parallel tensioning strands 144 between one upper retention strip 142 and the corresponding lower retention strip 146 may be disposed in a perpendicular manner with respect to the upper retention strip 142 and lower retention strip 146. The strand segments 141 of the plurality of parallel tensioning strands 144 between one adjacent pair of upper retention strips 205 and the strand segments 143 between one adjacent pair of lower retention strips 301 may have equal lengths. Those of skill in the art understand that in other embodiments, the strand segments 145 of the plurality of parallel tensioning strands 144 between one upper retention strip 142 and the corresponding lower retention strip 146 may have different lengths, such that the outer wall of the inflatable product takes on a variety of curved surfaces based on the intended product design.

In various implementations, the horizontally disposed tensioning strands 141 as they are aligned in a direction substantially parallel to and proximate to the top wall 110 and connected to the top wall 110 through retention strips 142, provide a tensioning feature offering resistance against longitudinal (i.e., in the "X" direction of FIGS. 2 and 4) strain/stretching of the top wall 110 of the inflatable mattress 100. Likewise, the horizontally disposed tensioning strands 143 being connected to the bottom wall 120 through the bottom retention strips 146 to assume an orientation substantially parallel to and proximate to the bottom wall 120 provide a tensioning feature offering resistance against longitudinal (i.e., in the "X" direction of FIGS. 2 and 4) strain/stretching of the bottom wall 120 inflatable mattress 100. With this configuration, the internal tensioning structure 140 enhances shape retention of the inflatable mattress 100 in a vertical ("Z") direction as well as in a longitudinal ("X") direction, and reduces undesired strain in the top and bottom walls 110, 120 of the mattress 100, therefore further providing for maintenance of a pre-determined shape of the mattress 100 upon inflation thereof.

In various implementations, the plurality of parallel tensioning strands 144 cooperate to define what may be regarded as a continuous tensile sheet material. The upper retention strips 142 and the lower retention strips 146 are arranged alternately to affix the sheet material to the top wall 110 and the bottom wall 120. With this configuration, the portion of the tensile sheet material between one upper retention strip 142 and the corresponding lower retention strip 146 has a function of limiting the distance between the top wall and the bottom wall.

For purposes of clarity, the portions of the parallel tensioning strands 144 that would normally be visible at the rear of the perspective view in FIGS. 2 to 4 do not appear in the illustrations, rather, only the foreground tensioning strand 144 elements are shown to avoid an overabundance of tensioning strands affecting the clarity of the illustrations.

FIG. 5 shows a cross-sectional view of an inflatable mattress 100 according to the first product embodiment of the present application. In this embodiment, a plurality of upper retention strips 151, 152 (being the same as the previously described upper retention strips 142) have approximately equal spacing (e.g., B1 = B2). A plurality of lower retention strips 155, 156 (being the same as the previously described lower retention strips 146) have approximately equal spacing (e.g., B3 = B4). Each pair of upper retention strips 302 (being the same as the previously described pair of upper retention strips 205) includes an upper retention strip 151 and an upper retention strip 152, and each pair of lower retention strips 303 (being the same as the previously described pair of lower retention strips 301) includes a lower retention strip 155 and a lower retention strip 156. The multiple pairs of upper retention strips 302 and the multiple pairs of lower retention strips 303 are arranged alternately to fix a continuous tensioning strand 154 (being the same as the previously described tensioning strand 144) to a top wall 110 and a bottom wall 120. The tensioning strand 154 forms a plurality of tensioning strand segments 154C (being the same as the previously described tensioning strand segments 141) between each pair of upper retention strips 302, and the tensioning strand 154 forms a plurality of strand segments 154B (being the same as the previously described tensioning strand segments 143) between each pair of lower retention strips 303. Between an upper retention strip 151 (or 152) and the consecutive lower retention strip 156 (or 155) the tensioning strand 154 forms a plurality of tensioning strand segments 154A (being the same as the previously described tensioning strand segments 145).

The length of the strand segment 154A of the tensioning strand 154 between the retention strip 151 and the retention strip 152 in one pair of upper retention strips 302 is equal to the length of the strand segment 154B between the retention strip 155 and the retention strip 156 in one pair of lower retention strips 303 (e.g., B2 = B3). The length of the strand segment 154A of the tensioning strand 154 between the retention strip 151 and the retention strip 152 in one pair of upper retention strips 302 is equal to the distance between the corresponding two lower retention strips in the vertical direction (e.g., B2 = B4). In other words, the upper retention strip 151 and the upper retention strip 152 adjacent to each other and the vertically corresponding lower retention strip 155 and lower retention strip 156 adjacent to each other form four vertices of a rectangle in the cross-sectional view shown in FIG. 5.

FIG. 6 shows a cross-sectional view of an inflatable mattress 100A according to a second product embodiment of the present application. This embodiment comprises a plurality of upper retention strips 161, 162 (being the same as the previously described upper retention strips 142) and a plurality of lower retention strips 165, 166 (being the same as the previously described lower retention strips 146). In this embodiment, each pair of upper retention strips 304 (being the same as the previously described pair of upper retention strips 205) includes an upper retention strip 161 and an upper retention strip 162, and each pair of lower retention strips 305 (being the same as the previously described pair of lower retention strips 301) includes a lower retention strip 165 and a lower retention strip 166. The multiple pairs of upper retention strips 304 and the multiple pairs of lower retention strips 305 are arranged alternately to affix a continuous tensioning strand 164 (being the same as the previously described tensioning strand 144) to a top wall 110 and a bottom wall 120.

The spacing C1 between the upper retention strip 161 and the upper retention strip 162 in each pair of upper retention strips 304 is greater than the spacing C2 between the pair of upper retention strips 304 and the adjacent pair of upper retention strips 304. The spacing C3 between the retention strip 165 and the retention strip 166 in each pair of lower retention strips 305 is greater than the spacing C4 between the pair of lower retention strips 305 and the adjacent pair of lower retention strips 305. In this configuration, a tensioning strand segment 164A (being the same as the previously described tensioning strand segments 145) of the tensioning strand 164 between one upper retention strip and the vertically corresponding lower retention strip is no longer perpendicular to the top wall 110 and the bottom wall 120, but forms a non-orthogonal angle of inclination with respect to the top wall 110 and the bottom wall 120. Put another way, the upper retention strip 161 and the upper retention strip 162 adjacent to each other and the vertically corresponding lower retention strip 165 and lower retention strip 166 adjacent to each other form four vertices of a trapezoid in the cross-sectional view shown in FIG. 6.

FIG. 7 shows a cross-sectional view of an inflatable mattress 100B according to a third product embodiment of the present application. In this embodiment, any two adjacent upper retention strips 172 (being the same as the previously described upper retention strips 142) among a plurality of upper retention strips 172 have equal spacing (e.g., D1 = D2), and any two adjacent lower retention strips 176 (being the same as the previously described lower retention strips 146) among a plurality of lower retention strips 176 have equal spacing (e.g., D3 = D4). The upper retention strips 172 and the lower retention strips 176 are arranged alternately to fix a continuous tensioning strand 174 (being the same as the previously described tensioning strand 144) to a top wall 110 and a bottom wall 120. A tensioning strand segment 174A and a tensioning strand segment 174B (being both the same as the previously described tensioning strand segments 145) of the tensioning strand 174 on the top wall 110 between one upper retention strip 172 and the corresponding two adjacent lower retention strips 176 on the bottom wall 120 have equal lengths. In other words, the upper retention strip 172 and the corresponding two adjacent lower retention strips 176 form three vertices of an isosceles triangle. In this embodiment, each upper retention strip 172 or lower retention strip 176 receives pressure from the tensioning strand 174 on two sides in a bilaterally symmetric manner. With this configuration, the truss-like architecture of the tensioning strand segments 174A, 174B and retention strips 172, 176 provide longitudinal (i.e., in the "X" direction) stability of the top wall 110 with respect to the bottom wall 120, providing resistance against translation in the X direction with respect to walls 110, 120.

FIG. 8 shows a cross-sectional view of an inflatable mattress 100C according to a fourth product embodiment of the present application. In this embodiment, any two adj acent upper retention strips 182 among a plurality of upper retention strips 182 (being the same as the previously described upper retention strips 142) have equal spacing (e.g., E1 = E2), and any two adjacent lower retention strips 186 among a plurality of lower retention strips 186 (being the same as the previously described lower retention strips 146) have equal spacing (e.g., E3 = E4). The upper retention strips 182 and the lower retention strips 186 are arranged alternately to affix a continuous tensioning strand 184 (being the same as the previously described tensioning strand 144) to a top wall 110 and a bottom wall 120. A strand segment 186A and a strand segment 186B (being both the same as the previously described tensioning strand segments 145) of the tensioning strand 184 between one upper retention strip 182 and the corresponding two lower retention strips 186 have unequal lengths. In other words, the upper retention strip 182 and the corresponding two lower retention strips 186 form three vertices of a non-isosceles triangle. In this embodiment, each upper retention strip 182 or lower retention strip 186 receives pressure from the tensioning strand 184 on two ends in a bilaterally asymmetric manner.

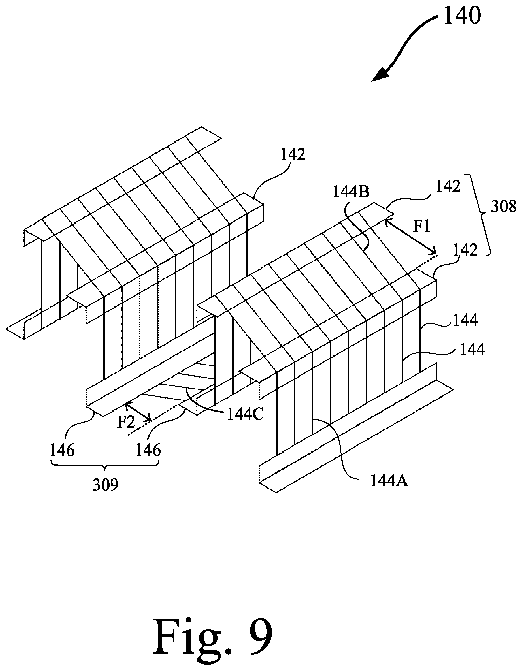

FIG. 9 shows an internal tensioning structure 140 of an inflatable mattress according to a fifth product embodiment of the present application. In this embodiment, the plurality of upper retention strips 142 include multiple pairs of upper retention strips 308, and the plurality of lower retention strips 146 include multiple pairs of lower retention strips 309. In one implementation, the spacing between two upper retention strips 142 in the respective pairs of upper retention strips 308 are equal, for example, the length of each spacing is F1 (as shown in FIG. 9); and the spacing between two lower retention strips 146 in respective pairs of lower retention strips 309 are also equal, for example, the length of each spacing is F2 (as shown in FIG. 9). The spacing F1 between two upper retention strips 142 and the spacing F2 between two lower retention strips 146 may be equal to or different from one another. The portion of each of the plurality of parallel tensioning strands 144 between one upper retention strip 142 and the vertically corresponding lower retention strip 146 is a strand segment 144A (being the same as the previously described tensioning strand segment 145), and the strand segments 144A are set to have equal lengths. The portions of each of the plurality of parallel tensioning strands 144 between respective pairs of upper retention strips 308 form a plurality of strand segments 144B (being the same as the previously described tensioning strand segments 141), and each strand segment 144B is not perpendicular to the upper retention strip 142, but forms an angle of inclination with the upper retention strip 142. The portions of each of the plurality of parallel tensioning strands 144 between respective pairs of lower retention strips 309 form a plurality of strand segments 144C (being the same as the previously described tensioning strand segments 143), and each strand segment 144C is not perpendicular to the lower retention strip 146, but forms an angle of inclination with the lower retention strip 146. With this configuration, when the retention strips 142, 146 of the inflatable product are irregularly arranged on the top wall 110 or the bottom wall 120, the internal tensioning structure 140 of this embodiment can provide additional tensioning flexibility and capabilities for the inflatable product 100.

More particularly, the upper retention strip 142 may be perpendicular to or not perpendicular to the plurality of parallel strand segments 144B and/or 144C; and the lower retention strip 146 may be perpendicular to or not perpendicular to the plurality of parallel strand segments 144B and/or 144C. Put another way, the upper retention strip 142 and the lower retention strip 146 respectively intersect the plurality of parallel tensioning strands 144 at any angle. Optionally, the strand segments 144B of the plurality of parallel tensioning strands 144 between one pair of upper retention strips 308 and the strand segments 144C between one pair of lower retention strips 309 may have equal lengths.

Those of skill in the art understand that in other embodiments, the plurality of strand segments 144A of the plurality of parallel tensioning strands 144 defined between one upper retention strip 142 and the corresponding lower retention strip 146 may have different lengths, such that the outer walls 110, 120, 130 of the inflatable product 100 may take on corresponding different curved surfaces based on the product design.

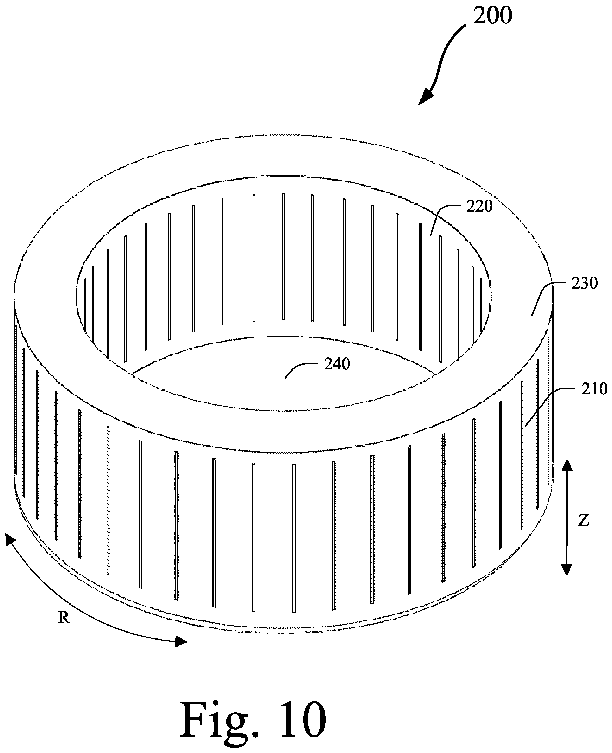

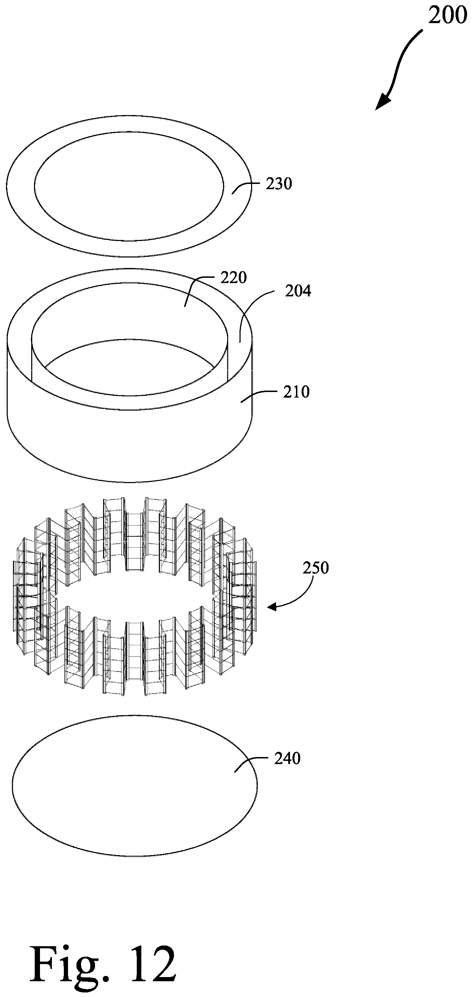

FIGS. 10 to 12 provide a sixth product embodiment showing a schematic structure of an inflatable pool 200 according to an embodiment of the present application. In this embodiment, the inflatable pool 200 includes an outer wall 210 (which may also be referred to as a first wall), an inner wall 220 (which may also be referred to as a second wall), a top wall 230 (or upper wall), and a bottom wall 240 (or lower wall). The top wall 230 is annular, and its inner edge and outer edge are respectively joined to the upper ends of the inner wall 220 and the outer wall 210 through high-frequency welding. The bottom wall 240 is circular, and is joined to the lower end of the outer wall 210 at its outer edge through high-frequency welding and joined to the lower end of the inner wall 220 at its inner annular position through high-frequency welding. Through this configuration, the outer wall 210, the inner wall 220, the top wall 230 and the bottom wall 240 form an air chamber 204 of the inflatable pool. To better clarify the comparison between the inflatable product of the following paragraphs (i.e. inflatable pool 200) and the inflatable product described in the paragraphs above (i.e. the mattress 100), the outer wall of the inflatable pool may also be considered the top wall of the mattress 100 and the inner wall of the inflatable pool may be considered the bottom wall of the mattress 100.

Inside the air chamber 204 is present an internal tensioning structure 250 which includes an arranged plurality of tensioning strands 254. The plurality of tensioning strands 254 of the tensioning structure 250 generally extend as a whole in a circumferential direction of the inflatable pool 200 (shown as direction R in FIG. 10). In various embodiments, individual tensioning strands 254 of the plurality of parallel tensioning strands may be equally spaced from each other and are spatially oriented in an approximate planar manner with respect to one another. In various implementations, individual tensioning strands 254 of the plurality of tensioning strands 254 may be spatially parallel or generally parallel to each other, and thus may be referred to as "parallel tensioning strands 254" herein. However, as explained in relation to FIG. 4D, in various embodiments, tensioning strands 254 need not necessarily be disposed in a parallel manner with respect to one another.

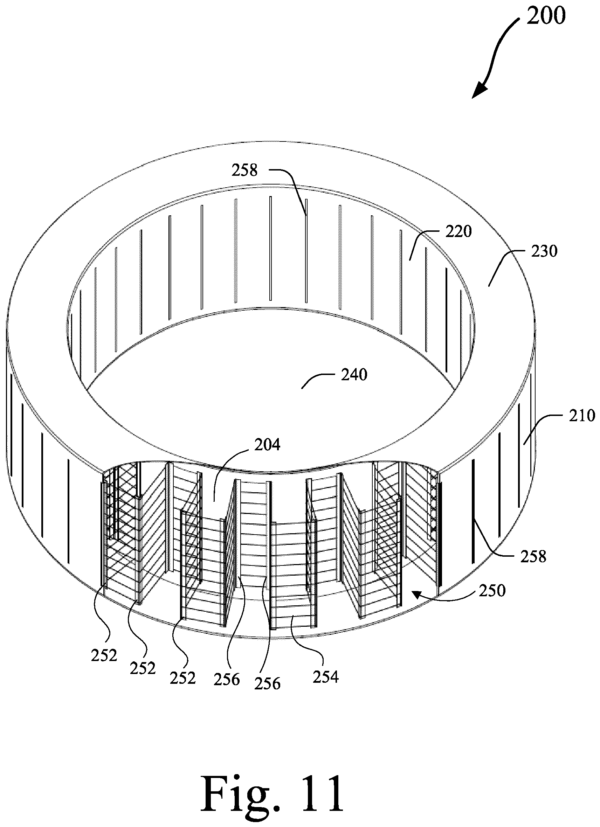

As visible in FIG. 11, a plurality of outer retention strips 252 (or first retention strips) are arranged perpendicularly to the plurality of tensioning strands 254. The plurality of outer retention strips 252 may be preferably parallel to one another and are in contact with the tensioning strands 254 from inside to outside. They are affixed to the outer wall 210 through high-frequency welding to form weld seams 258, such that the tensioning strands 254 are fixedly arranged at intervals between the outer retention strips 252 and the outer wall 210. A plurality of inner retention strips 256 (or second retention strips) are arranged perpendicularly to the plurality of tensioning strands 254. The plurality of inner retention strips 256 may be preferably parallel to one another and are in contact with the tensioning strands 254 from outside to inside. They are fixed to the inner wall 220 through high-frequency welding to form weld seams 258, such that the tensioning strands 254 are likewise fixedly arranged at intervals between the inner retention strips 256 and the inner wall 220. The lengths of each outer retention strip 252 and each inner retention strip 256 are greater than the arrangement height (i.e., the height of the internal tensioning structure 250) of the plurality of tensioning strands 254 in a height direction of the inflatable pool 200, such that each of the tensioning strands 254 is affixed and supported by the respective retention strips 252, 256.

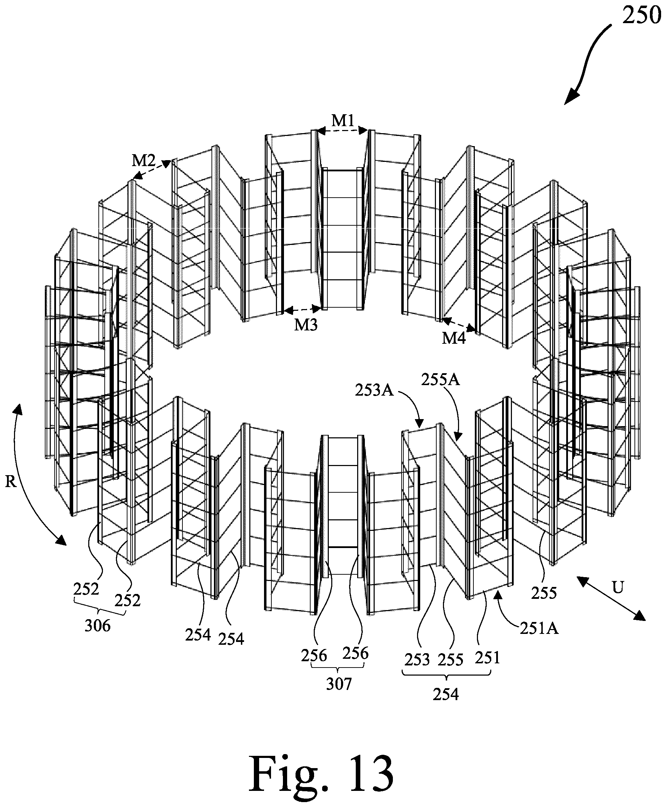

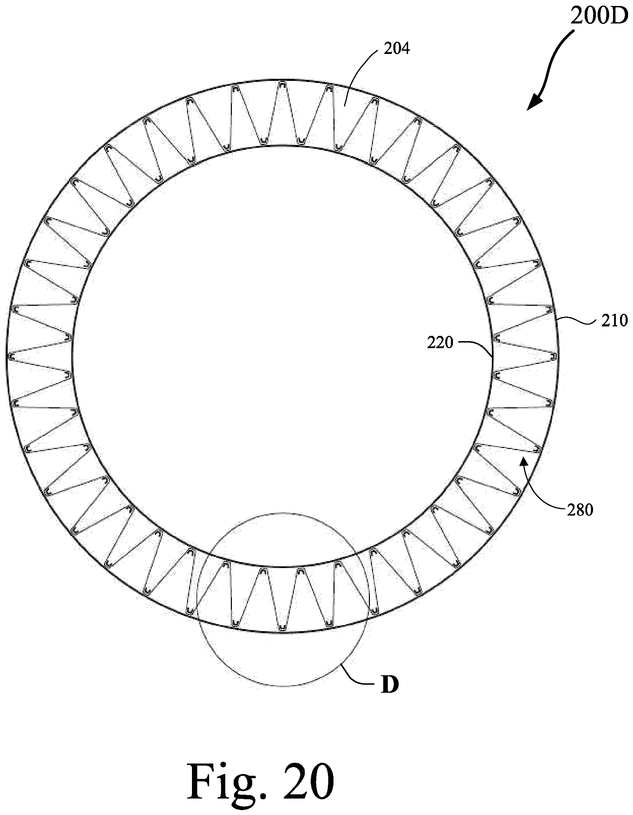

In this embodiment, the multiple pairs of outer retention strips and the multiple pairs of inner retention strips are arranged alternately to affix the parallel tensioning strands 254 to the outer wall 210 and the inner wall 220. In this configuration, after the inflatable pool 200 is inflated, the portions of the plurality of parallel tensioning strands 254 between one outer retention strip 252 and the corresponding inner retention strip 256 bear the tension from the corresponding positions of the outer wall 210 and the inner wall 220, such that the distance between the outer wall 210 and the inner wall 220 reaches a predetermined length to enable the inflatable pool to form an as-designed shape. Further, as discussed in more detail in regards to FIG. 13-23, as an inner circumference of the tensioning structure 250 is less than an outer circumference of the tensile structure 250, and since in the illustrated embodiment an equal number of inner retention strips 256 are used as outer retention strips 252, retention strips 252 disposed proximate the outer circumference have greater inter-strip spacing between each other than the inner retention strips 256, which may produce a rhombus-shaped cross section or non-uniformly distributed pairs of outer retention strips 252. Alternatively, as described in accordance with FIGS. 20-23 (discussed in more depth below), a different number of outer retention strips may be utilized than inner retention strips, and a more triangular orientation of the cross section of the tensioning structure 250 may be employed.

FIG. 13 shows an internal tensioning structure 250 of an inflatable pool according to an embodiment of the present application. In this embodiment, the plurality of outer retention strips 252 are grouped as multiple pairs of outer retention strips 306; and the plurality of inner retention strips 256 are grouped as multiple pairs of inner retention strips 307. The multiple pairs of outer retention strips 306 are substantially equally spaced (e.g., M1 = M2) and are arranged on an outer wall 210 in a circumferential direction (shown as direction R in FIG. 13) of the pool. The multiple pairs of inner retention strips 307 are substantially equally spaced (e.g., M3 = M4) and are arranged on an inner wall 220 in the circumferential direction. The plurality of outer retention strips 252 and the plurality of inner retention strips 256 form a corresponding relationship in a radial direction (shown as direction U in FIG. 13) of the circular pool. The multiple pairs of outer retention strips 306 and the multiple pairs of inner retention strips 307 are arranged alternately to affix the parallel tensioning strands 254 to the outer wall 210 and the inner wall 220.

The plurality of parallel tensioning strands 251A form a plurality of strand segments 251 between each pair of outer retention strips 306. The plurality of parallel tensioning strands 253A form a plurality of strand segments 253 between each pair of inner retention strips 307. The plurality of parallel tensioning strands 255A form a plurality of strand segments 255 between one outer retention strip 252 and the radially corresponding inner retention strip 256. Put another way, two ends of each of the plurality of strand segments 255 in the radial direction are in correspondence of one inner retention strip 256 and one outer retention strip 252, respectively.

In one implementation, strand segments 255 of the plurality of parallel tensioning strands 255A between one outer retention strip 252 and the corresponding inner retention strip 256 have equal lengths. Additionally, the strand segments 251 of the plurality of parallel tensioning strands 251A between each pair of outer retention strip 306 are disposed approximately perpendicularly to the outer retention strips 252. The strand segments 253 of the plurality of parallel tensioning strands 253A between each pair of inner retention strips 307 are disposed approximately perpendicularly to the inner retention strips 256.The strand segments 255 of the plurality of parallel tensioning strands 255A between one outer retention strip 252 and the corresponding inner retention strip 256 are disposed approximately perpendicularly to the outer retention strip 252 and the inner retention strip 256. Those of skill in the art understand that in other embodiments, the strand segments 255 of the plurality of parallel tensioning strands 255A between one outer retention strip 252 and the radially corresponding inner retention strip 256 may have different lengths, such that the outer wall of the inflatable product takes on a variety of sloped and/or curved surfaces based on the intended product design.

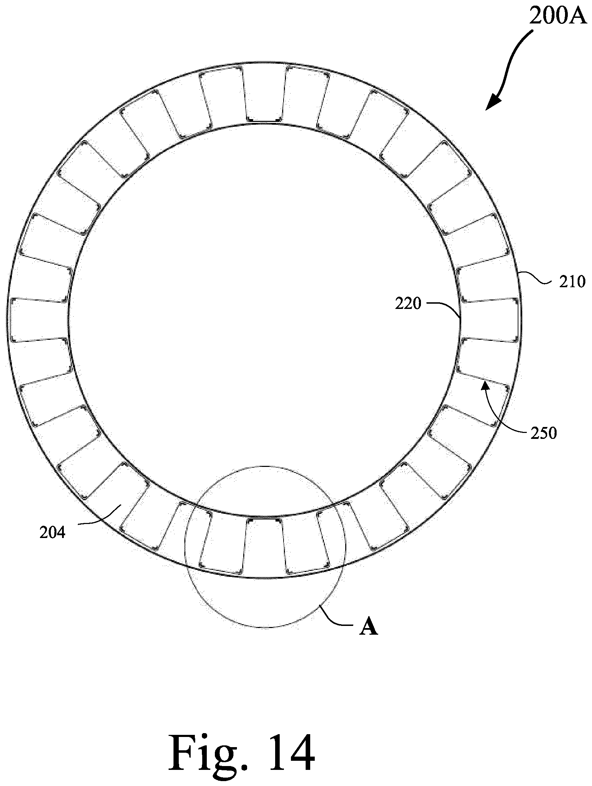

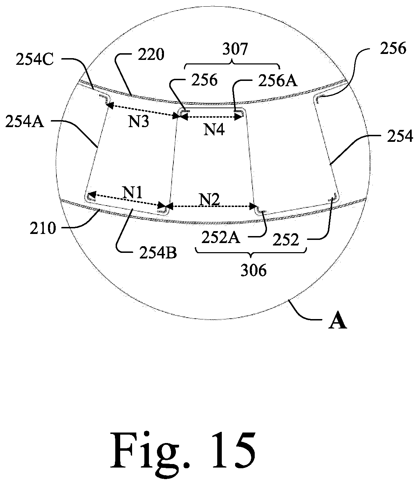

FIGS. 14 and 15 show a cross-sectional plan view of a structure of an inflatable pool 200A according to an embodiment of the present application. As the section A in FIG. 14 shows in the enlarged view A of FIG. 15, a plurality of outer retention strips have equal spacing (e.g., N1 = N2) and are arranged circumferentially proximate an outer wall 210. A plurality of inner retention strips 256, 256A have equal spacing (e.g., N3 = N4) and are arranged circumferentially proximate an inner wall 220. Each pair of outer retention strips 306 includes a retention strip 252A and a retention strip 252 (or first retention strips), and each pair of inner retention strips 307 includes a retention strip 256A and a retention strip 256 (or second retention strips). The multiple pairs of outer retention strips 306 and the multiple pairs of inner retention strips 307 are arranged alternately to affix a continuous tensioning strand 254 to the outer wall 210 and the inner wall 220. In this configuration, after inflation, a tensioning strand segment 254A of the tensioning strand 254 between one outer retention strip and the corresponding inner retention strip is approximately perpendicular to the outer wall 210 and the inner wall 220. The length of a tensioning strand segment 254B between the outer retention strips 252A and 252 in one pair of outer retention strips 306 may be preferably slightly greater than the length of a strand segment 254C between one pair of inner retention strips 256A and 256. The outer retention strip 252A and the outer retention strip 252 adjacent to each other and the radially corresponding inner retention strip 256A and inner retention strips 256 adjacent to each other form four vertices of a trapezoid in the cross-sectional view shown in FIG. 15.

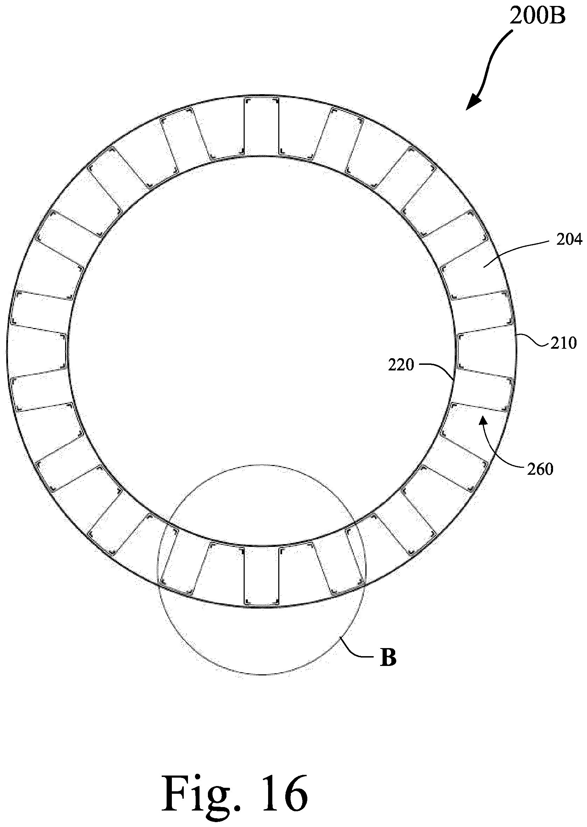

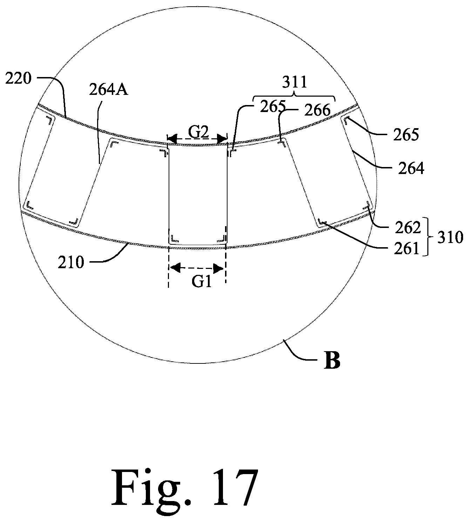

FIGS. 16 and 17 show a cross-sectional plan view of a structure of an inflatable pool 200B according to another embodiment of the present application. As the section B in FIG. 16 shows in the enlarged view B of FIG. 17, an internal tensioning structure 260 includes tensioning strands 264. Multiple pairs of outer retention strips 310 are arranged circumferentially proximate an outer wall 210. Multiple pairs of inner retention strips 311 are arranged circumferentially proximate an inner wall 220. Each pair of outer retention strips 310 includes an outer retention strip 261 and an outer retention strip 262, and each pair of inner retention strips 311 includes an inner retention strip 265 and an inner retention strip 266. The multiple pairs of outer retention strips 310 and the multiple pairs of inner retention strips 311 are arranged alternately to affix a continuous tensioning strand 264 to the outer wall 210 and the inner wall 220. The spacing G1 between the outer retention strip 261 and the outer retention strip 262 in one pair of outer retention strips 310 is equal to the spacing G2 between two adjacent pairs of inner retention strips 311. In other words, G2 is the space between the inner retention strip 265 of one pair of inner retention strips 311 and the inner retention strip 266 of another adjacent pair of inner retention strips 311. In this configuration, after inflation, strand segments 264A of the tensioning strand 264 extending from two ends of the outer retention strips 261 and 262, in one pair of outer retention strips 310, towards the corresponding inner retention strips 266 and 265, belonging to two different adjacent pair of inner retention strips 311, are approximately parallel to each other.

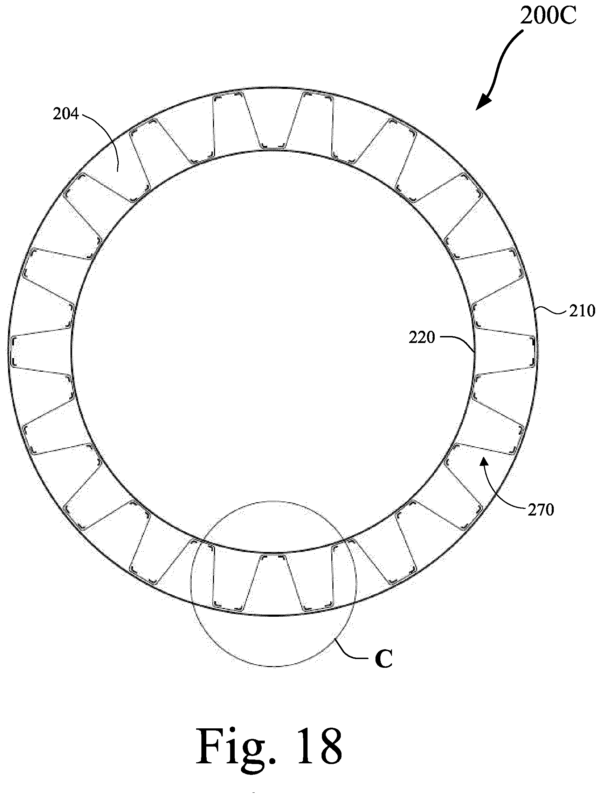

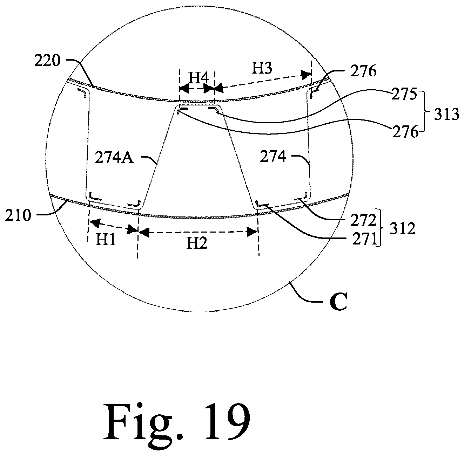

FIGS. 18 and 19 show a cross-sectional plan view of a structure of an inflatable pool 200C according to another embodiment of the present application. As the section C in FIG. 18 shows in the enlarged view C of FIG. 19, an internal tensioning structure 270 includes tensioning strands 274. Multiple pairs of outer retention strips 312 are arranged circumferentially proximate an outer wall 210. Multiple pairs of inner retention strips 313 are arranged circumferentially proximate an inner wall 220. Each pair of outer retention strips 312 includes an outer retention strip 271 and an outer retention strip 272, and each pair of inner retention strips 313 includes an inner retention strip 275 and an inner retention strip 276. The multiple pairs of outer retention strips 312 and the multiple pairs of inner retention strips 313 are arranged alternately to affix a continuous tensioning strand 274 to the outer wall 210 and the inner wall 220. The spacing H1 between the outer retention strip 271 and the outer retention strip 272 included in one pair of outer retention strips 312 is less than the spacing H2 between two adjacent pairs of outer retention strips 312. In other words, H2 is the space between the outer retention strip 271 of one pair of inner retention strips 312 and the outer retention strip 272 of another adjacent pair of inner retention strips 312. The spacing H4 between the inner retention strip 275 and the inner retention strip 276 included in a pair of inner retention strips 313 is less than the spacing H3 between two adjacent pairs of inner retention strips 313. Also in this case, H3 is the space between the inner retention strip 275 of one pair of inner retention strips 313 and the inner retention strip 276 of another adjacent pair of inner retention strips 313. In this configuration, after inflation, a strand segment 274A of the tensioning strand 274 between one outer retention strip 312 and the corresponding inner retention strip 313 forms an angle of inclination with an outer wall 210 and an inner wall 220. The adjacent outer retention strips 271 and 272 and the radially corresponding adjacent inner retention strips 275 and 276 form four vertices of a trapezoid in the cross-sectional detail view shown in FIG. 19.

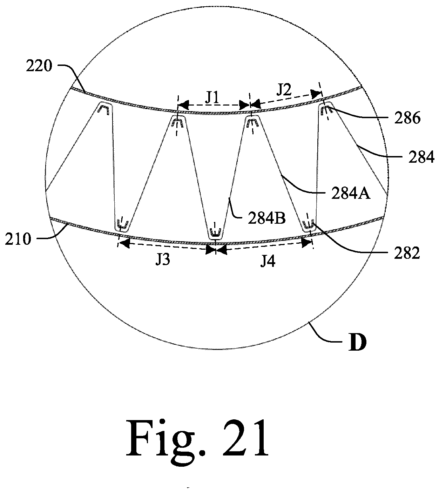

FIGS. 20 and 21 show a cross-sectional plan view of a structure of an inflatable pool 200D according to an embodiment of the present application. As the section D in FIG. 20 shows in the enlarged view D of FIG. 21, an internal tensioning structure 280 includes tensioning strands 284. A plurality of outer retention strips 282 have approximately equal spacing (e.g., J3 = J4) and are arranged circumferentially proximate an outer wall 210. A plurality of inner retention strips 286 have equal spacing (e.g., J1 = J2) and are arranged circumferentially proximate an inner wall 220. The plurality of outer retention strips 282 and the plurality of inner retention strips 286 are arranged alternately to affix the continuous tensioning strand 284 to the outer wall 210 and the inner wall 220. In this configuration, after inflation, two strand segments 284A and 284B of the tensioning strand 284 between one outer retention strip 282 and the corresponding two inner retention strips 286 have approximately equal lengths. Put another way, one outer retention strip 282 and the corresponding two inner retention strips 286 form three vertices of an isosceles triangle shown in the cross-sectional detail view of FIG. 21. This embodiment provides an efficient way to manufacture the product, in which each retention strip receives force on both sides in a bilaterally symmetric manner, improving the yield and reliability of the inflatable products 10.

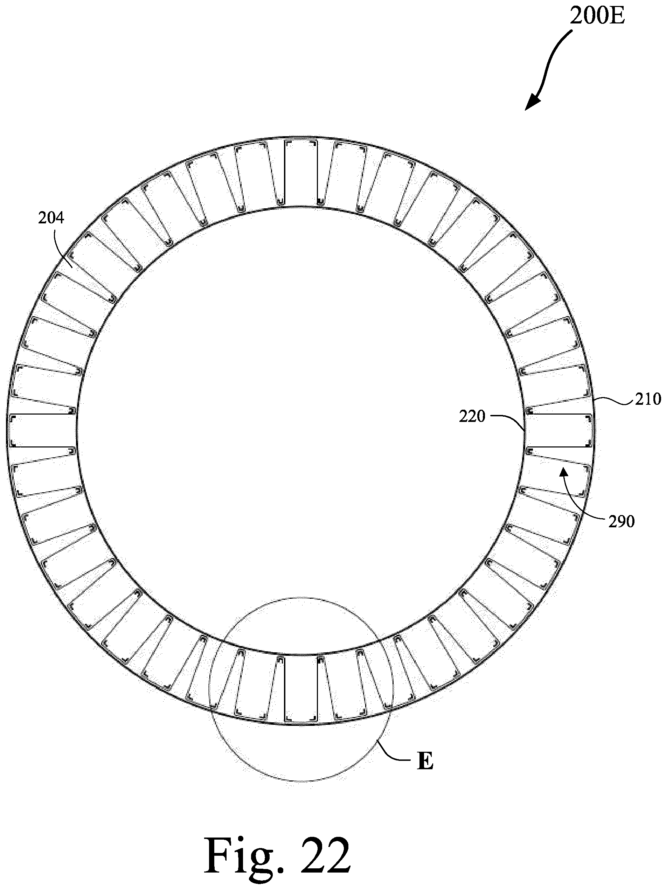

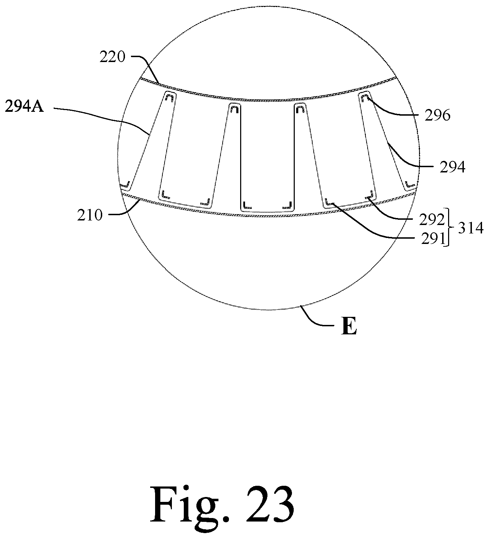

FIGS. 22 and 23 show a cross-sectional plan view of a structure of an inflatable pool 200E according to another embodiment of the present application. As the section E in FIG. 22 shows in the enlarged view E of FIG. 23, an internal tensioning structure 290 includes tensioning strands 294. Multiple pairs of outer retention strips 314 are arranged circumferentially proximate an outer wall 210. A plurality of inner retention strips 296 are uniformly arranged circumferentially proximate an inner wall 220. Each pair of outer retention strips 314 includes an outer retention strip 291 and an outer retention strip 292. The multiple pairs of outer retention strips 314 and the plurality of inner retention strips 296 are arranged alternately to affix the continuous tensioning strand 294 to the outer wall 210 and the inner wall 220. One inner retention strip 296 independently corresponds to outer retention strips 291 and 292 in one pair of outer retention strips 314. Put another way, one inner retention strip 296 and the radially corresponding two outer retention strips 291 and 292 form three vertices of an isosceles triangle shown in the cross-sectional view of FIG. 23. In this embodiment, after the inflatable pool 200E is inflated, the inner retention strips 296 and the outer retention strips 291 and 292 receive tensioning forces in different ways, that is, the inner retention strips 296 bear tensioning forces in a bilaterally symmetric manner, and the outer retention strips 291 and 292 bear tensioning forces in a bilaterally asymmetric manner. Strand segments 294A are realized between each inner retention strips 296 and the consecutive outer retention strips 291 and 292.

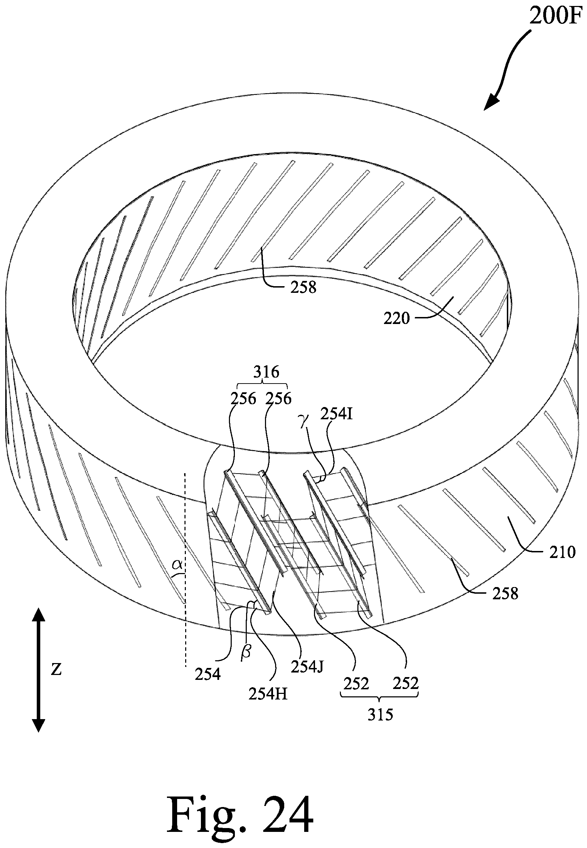

FIG. 24 shows a schematic structure of an inflatable pool 200F according to another embodiment of the present application. In the illustrated embodiment, multiple pairs of outer retention strips 315 and multiple pairs of inner retention strips 316 are arranged to have approximately the same spacing. Strand segments 254J of a plurality of parallel tensioning strands 254 between one outer retention strip 252 and the corresponding inner retention strip 256 are arranged to have the same length. The multiple pairs of outer retention strips 315 and the multiple pairs of inner retention strips 316 form an angle α with respect to a vertical direction Z. Strand segments 254H of the plurality of parallel tensioning strands 254 between each pair of outer retention strips 315 form an angle of inclination β with respect to the outer retention strips 252. Strand segments 254I of the plurality of parallel tensioning strands 254 between each pair of inner retention strips 316 form an angle of inclination γ with respect to the inner retention strips 256. In this way, weld seams 258 formed by the inner retention strips and the outer retention strips with an outer wall 210 and an inner wall 220 form an angle of inclination with respect to the vertical direction Z, such that the inflatable pool 200F can be designed to provide different appearances.

In the illustrated embodiment of FIG. 24, the plurality of strand segments 254H of the plurality of parallel tensioning strands 254 between one pair of outer retention strips 315 have approximately the same length, and the plurality of strand segments 254I of the plurality of tensioning strands 254 between one pair of inner retention strips 316 have approximately the same length. Those of skill in the art understand that in other embodiments, the strand segments 254J of the plurality of parallel tensioning strands 254 between one outer retention strip and the corresponding inner retention strip may have different lengths, such that the outer wall 210 of the inflatable pool 200F may provide a variety of curved surfaces based on the intended product design.

In all the embodiments described herein, the retention strips (e.g., the upper retention strips 142, 151, 152, 161, 162, 172, 182 etc., or the lower retention strips146, 155, 156, 165, 166, 176, 186 etc., or the inner retention strips 256, 256A, 265, 266, 275, 276, 286, 296 etc., or the outer retention strips 252, 252A, 261, 262, 271, 272, 282, 291, 292, etc.) may, in certain embodiments, comprise PVC (polyvinyl chloride) material, and sheet materials such as the top wall 110 and the bottom wall 120 or the inner wall 220 and the outer wall 210 of the inflatable product 10 may also comprise PVC material. Further, the aforementioned retention strips may be fixedly connected to the top wall and the bottom wall (or the inner wall and the outer wall) of the inflatable product through high-frequency welding. However, such compositions and connections are not expressly limited herein; for example, retention strips disclosed herein and the respective walls to which they attach may be welded, glued, soldered, or fixedly connected in any other reliable techniques. In addition, it is understood that in various implementations, the retention strips, sheet materials such as the top wall 110 and the bottom wall 120, or the inner wall 220 and the outer wall 210, may also comprise other suitable materials, such as TPU (thermoplastic urethane), PET (polyethylene terephthalate), EVA (ethylene vinyl acetate), PU (polyurethane), nylon, and suitable composite materials, or any other elastic material suitable for manufacturing inflatable products 10. In various implementations, one or more of the described retention strips, the top walls 110 and the bottom walls 120,or the inner walls 220 and the outer walls 210, may include an attachment layer capable of enhancing the anti-tensile performance thereof, and the attachment layer or interlayer may comprise, for example, tensioning strands, fibers, or a mesh structure.

Additionally, the tensioning strands (e.g., 144, 254) in various implementations comprise flexible, windable, tensile-resistant materials such as cotton fibers, linen fibers, silk fibers, wool fibers, nylon fibers, natural fibers, synthetic fibers, polyester fibers, polypropylene fibers, polyethylene fibers, glass fibers, carbon fibers, acrylic fibers, aramid (aromatic polyamide) fibers, solid or stranded wire, or combinations thereof. In each of the foregoing examples, the tensioning strands (e.g. 144, 254) may be of a monofilament, multifilament, braided, or unbraided composition, or spun with either an S-twist or a Z-twist.

Additionally, those of skill in the art understand that the tensioning strands (e.g. 144, 254) have physical limitations regarding the maximum tensile forces that they can withstand before significant elastic deformation or failure occurs. When the pressure of the internal gasses within inflatable products 10 (such as inflatable mattress 100 and pool 200 embodiments described herein) becomes sufficiently high, expansive forces from the outside walls of such inflatable products cause tensile forces transferred to the tensioning strands 144, 254 to become sufficiently excessive to cause breakage of the tensioning strands 144, 254, resulting in failure of the tensioning structures (e.g. 140, 250, 260, 270, 280, 290). Accordingly, an affected inflatable product having internal tensioning strand failures will experience an unplanned displacement and/or deformation which may be catastrophic in terms of product performance. Accordingly, experimental efforts undertaken by the Applicant have led to discoveries that different spacing of tensioning strands 144, 254 within tensioning structures as well as varying linear mass densities of the tensioning strands 144, 254 utilized within such tensioning structures may prove to achieve desired tension and shape-retaining performance with minimal cost and manufacturing impact. In one embodiment, tensioning structures described herein may utilize an inter-strand spacing (see, e.g., FIG. 4A, G1) of 5 mm between tensioning strands 144, 254 where tensioning strands 144, 254 comprise polyester fibers and may have a linear mass density of 532 Denier. In alternative embodiments, tensioning strand spacing may be within the range of 1 mm to 10 mm, or 1 mm to 8 mm, or 1 mm to 6 mm, and linear mass density for the tensioning strands 144, 254 may be in the range of 177 Denier to 1595 Denier, or 319 Denier-1595 Denier, or 532 Denier to 1595 Denier.

More generally, while specific examples of particular embodiments are provided herein, no limitations are imposed herein regarding the placement and/or composition of retention strips (e.g., upper retention strips 142, 151, 152, 161, 162, 172, 182) or the lower retention strips (e.g. 146, 155, 156, 165, 166, 176, 186) or the inner retention strips (e.g. 256, 256A, 265, 266, 275, 276, 286, 296) or the outer retention strips (e.g. 252, 252A, 261, 262, 271, 272, 282, 291, 292,), the strand segments (145, 255, etc...) of the tensioning strands (144, 154, 164, 254, etc.), the tensioning strands (e.g., 144, 154, 164, 174, 184, 254 etc...), and other structures described herein in terms of the spacing distance between them, whether they are parallel to each other or not, and whether the lengths thereof are equal or not. Further, no limitations are imposed herein regarding such structures and/or components described immediately above, any of which can be arranged correspondingly in the actual product according to the intended product requirements, for example, the plurality of retention strips may be parallel to each other or not parallel to each other, with any two adjacent retention strips having equal or unequal spacing, and the plurality of tensioning strands 144, 154, 164, 174, 184, 254 etc... are parallel to each other or not parallel to each other, with any two adjacent tensioning strands having equal or unequal spacing. Embodiments of the present application described above provide internal tensioning structures that may implemented in a variety of inflatable products 10, such as the inflatable mattress 100 and inflatable pools 200 described above. These embodiments reduce the use of non-degradable materials, improve production efficiency, and reduce product weight and bulk. Those of skill in the art also understand that the technical solution of such described inflatable products 10 can be applied to almost all inflatable products, for examples, stand-up paddle boards, inflatable castles, or inflatable bottoms of inflatable boats.

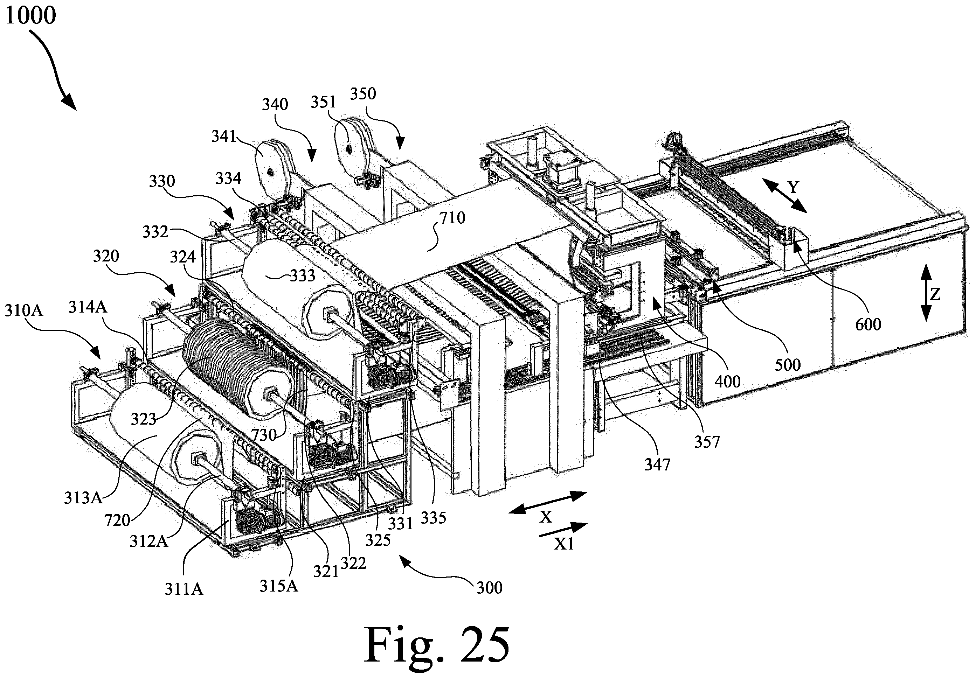

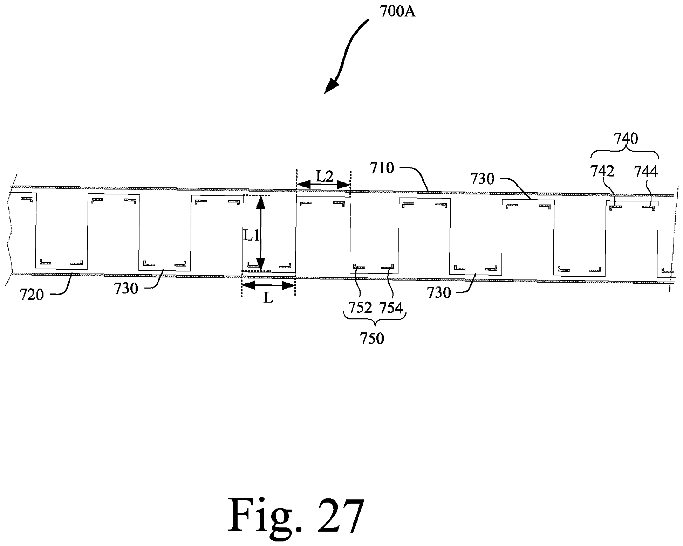

Referring to FIGS. 25 and 27 and in conjunction, just for showing a couple of examples, with FIG. 4 and 5, the present application also discloses a manufacturing system embodiment 1000 for producing the inflatable products 10 described above (such as, for example, the inflatable mattress 100). The manufacturing system 1000 described here below can be applied to produce any other embodiment described above. The manufacturing system 1000 is configured to process a first sheet material 710 (for forming the top wall 110 or the outer wall 210), a second sheet material 720 (for forming the bottom wall 120 or the inner wall 220), a plurality of parallel tensioning strands 730 (for forming the parallel tensioning strands 144, 154, etc), a pair of upper retention strips 740 (for forming the pair of upper retention strips 205, 302) and a pair of lower retention strips 750 (for forming the pair of lower retention strips 301, 305) to form the inflatable mattress 100 or the inflatable pools 200.

As shown in FIG. 25, the system 1000 for manufacturing an inflatable product 10 of a first manufacturing embodiment of the present application includes a feeding module 300, a welding module 400, a trimming module 500 and a tensioning mechanism 600 arranged in sequence in a direction X. The feeding module 300, the welding module 400, the trimming module 500 and the tensioning mechanism 600 are configured to perform the following steps.

In step S100, the feeding module 300 supplies the first sheet material 710, the second sheet material 720, the plurality of parallel tensioning strands 730, the pair of upper retention strips 740 and the pair of lower retention strips 750 to the welding module 400.

The feeding module 300 may supply the above materials to the welding module 400 at the same time; or may supply the first sheet material 710, the second sheet material 720, the plurality of parallel tensioning strands 730, the pair of upper retention strips 740 and the pair of lower retention strips 750 to the welding module 400 in sequence; or may first supply the first sheet material 710 and the second sheet material 720 at the same time, then supply the plurality of parallel tensioning strands 730, and finally supply the pair of upper retention strips 740 and the pair of lower retention strips 750 at the same time; or may first supply the first sheet material 710, the second sheet material 720 and the plurality of parallel tensioning strands 730 at the same time, and then supply the pair of upper retention strips 740 and the pair of lower retention strips 750 at the same time. Alternatively, other orders of supply are possible, and such supply orders are not limited in the embodiments of the present application.

Moreover, the number of parallel tensioning strands 730 is not limited in the embodiments of the present application, which may be five, ten, eighteen, twenty, twenty-two, and may range upwards of 100 or more, and can be selected according to the size, configuration, and product requirements of the inflatable product 10 such as an inflatable mattress 100. The specific number of upper retention strips 740 and the specific number of lower retention strips 750 are also not limited in the embodiments of the present application. There may be a pair of upper retention strips 740 and a pair of lower retention strips 750 illustrated in the embodiment of the present application, or one upper retention strip 740 and a pair of lower retention strips 750, or a pair of upper retention strips 740 and one lower retention strip 750, or three upper retention strips 740 and three lower retention strips 750. Put another way, the number of upper retention strips 740 and the number of lower retention strips 750 may be equal or unequal.

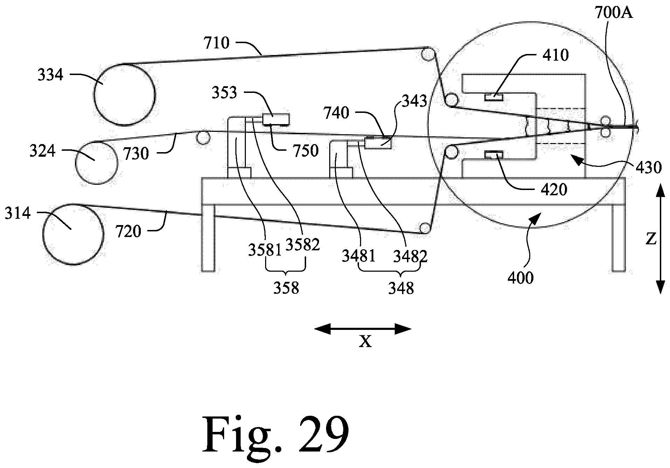

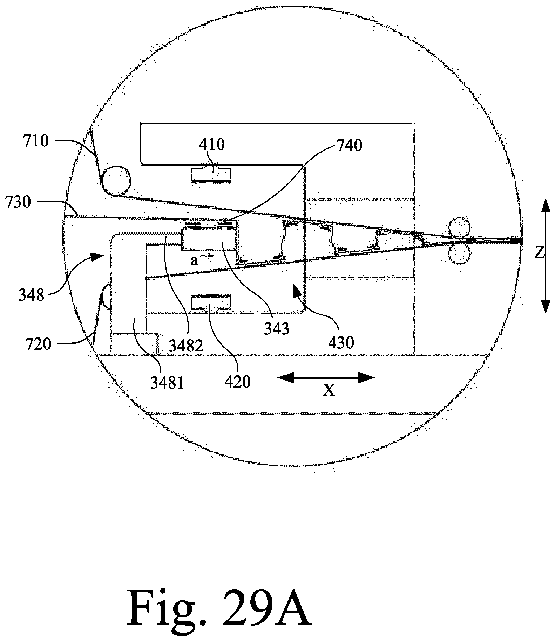

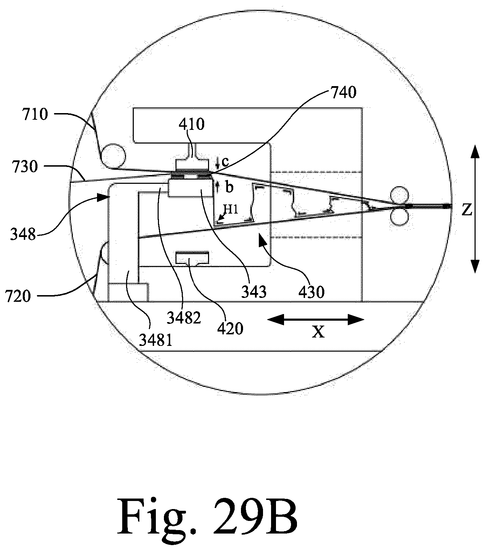

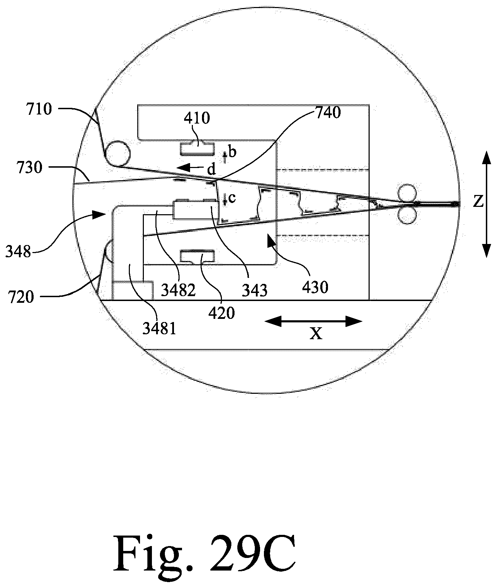

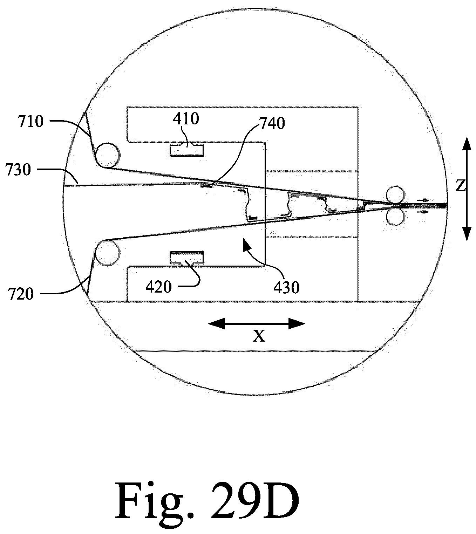

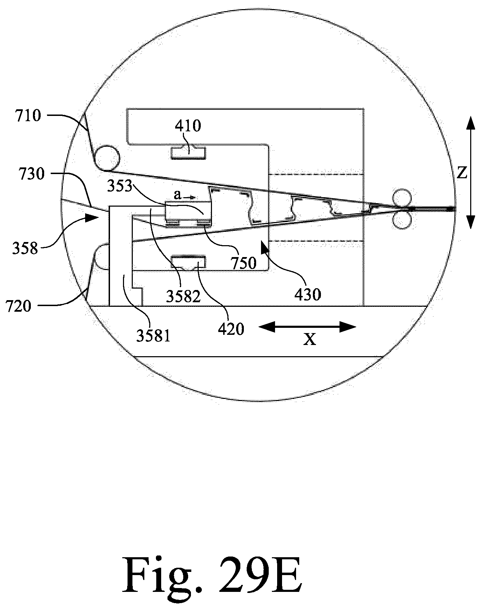

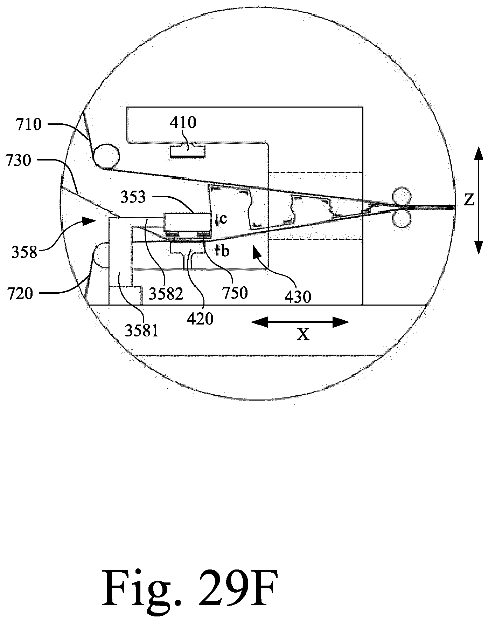

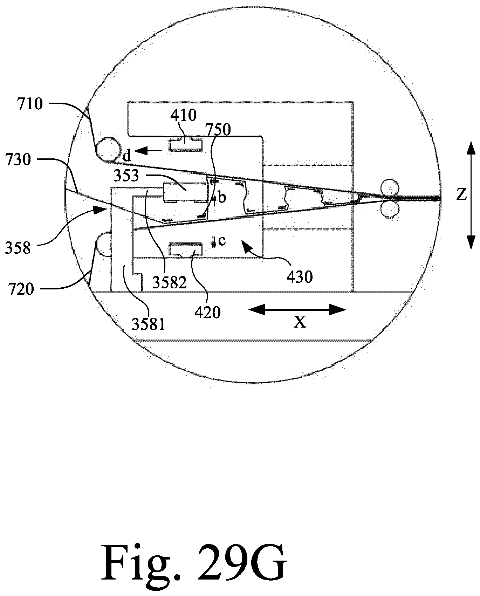

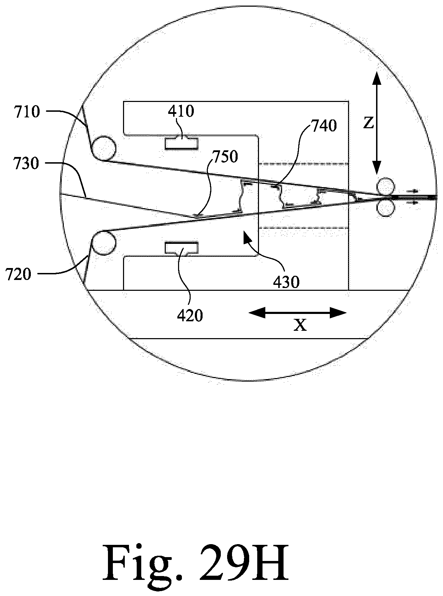

In step S200, the tensioning mechanism 600 maintains a tensioned state at all times. In this case, referring to FIG. 29, the first sheet material 710, the pair of lower retention strips 750, the plurality of parallel tensioning strands 730, the pair of upper retention strips 740 and the second sheet material 720 are sequentially arranged at intervals in a direction Z. The welding module 400 performs high-frequency welding to weld the pair of upper retention strips 740 supplied by the feeding module 300 and located between the plurality of parallel tensioning strands 730 and the first sheet material 710 to the plurality of parallel tensioning strands 730 and the first sheet material 710; and subsequently forms an inter-welded sheet assembly 700A by performing high-frequency welding to weld the pair of lower retention strips 750 supplied by the feeding module 300 and located between the plurality of parallel tensioning strands 730 and the second sheet material 720 to the plurality of parallel tensioning strands 730 and the second sheet material 720. As a result, the inter-welded sheet assembly 700A includes a first sheet material 710 and a second sheet material 720 with a tensioning structure (such as the internal tensioning structure 140 comprising the welded retention strips 740, 750 and tensioning strands 730) connected therebetween.

Then, the above welding steps are repeated until an inter-welded sheet assembly 700A of a specified length is formed according to the requirements of the inflatable product 10, such as the inflatable mattress 100 or inflatable pools 200.

In step S300, the trimming module 500 trims the inter-welded sheet assembly 700A of the specified length welded in the above step to form the top and bottom walls (110, 120) or inner wall and outer walls (220, 210) of an inflatable semi-finished product 700 (as shown in cross section in FIG. 27).

In the illustrated embodiment, the first sheet material 710 eventually becomes the top wall 110 of the inflatable mattress 100 described above, or the outer wall 210 of the inflatable pools 200 described above. Likewise, the second sheet material 720 eventually becomes the bottom wall 120 of the inflatable mattress 100 described above or the inner wall 220 of the inflatable pools 200 described above. The pair of upper retention strips 740 respectively form an upper retention strip 742 and an upper retention strip 744, and the pair of lower retention strips 750 respectively form a lower retention strip 752 and a lower retention strip 754. The inflatable semi-finished product 700 may be welded to another sheet (such as the side wall 130 described above in accordance with the illustration in FIG. 5) through closed welding to form a closed air chamber 104.

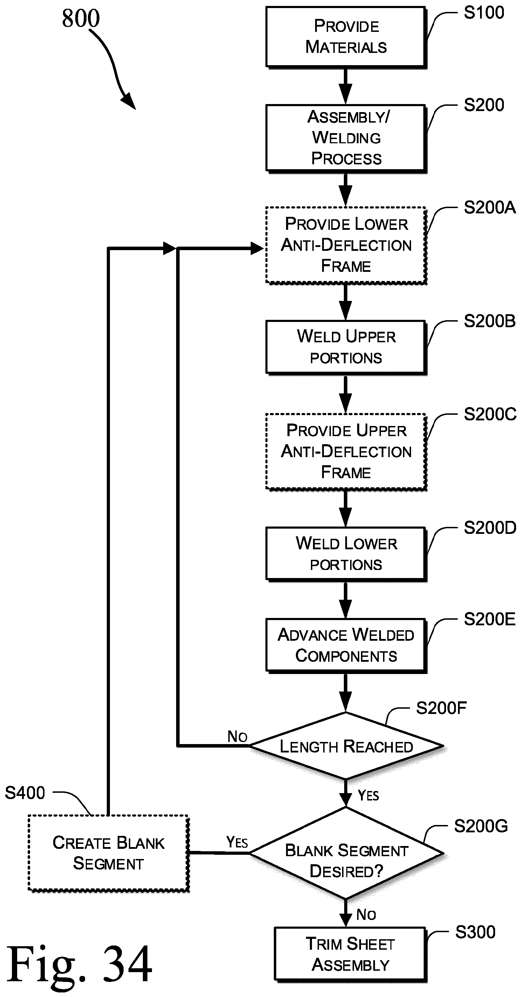

The flow diagram in FIG. 34 illustrates the process 800 described above in summary form. The process begins at step S100, where materials are provided: a first sheet material, a plurality of tensioning strands, a second sheet material, an upper retention strip and a lower retention strip. The assembly welding process S200 begins, where an optional step S200A provides a lower anti deflection frame: more particularly, before the welding of the upper retention strip and the first sheet material to the plurality of tensioning strands between the upper retention strip and the first sheet material a lower anti-deflection frame may be provided, where the lower anti-deflection frame comprises a lower pressure roller which abuts against the second sheet material to prevent an upward deflection thereof. Then in step S200B provides for welding the upper retention strip and the first sheet material to the plurality of tensioning strands between the upper retention strip and the first sheet material. Next, another optional step S200C may be provided, where before performing welding of the lower retention strip and the second sheet material to the plurality of tensioning strands between the lower retention strip and the second sheet material, providing an upper anti-deflection frame, the upper anti-deflection frame comprising an upper pressure roller which abuts against the first sheet material to prevent a downward deflection thereof. Next, in step S200D, the lower retention strip and the second sheet material are welded to the plurality of tensioning strands between the lower retention strip and the second sheet material. Then, in step S200E, the welded first sheet, second sheet and tensioning strands are welded for placement for possible additional welding or dispensing. In step 200F, if a sufficient length of the welded product has not yet been reached, the process continues at step S200A, including repeating the welding of the upper retention strip and the first sheet material to the plurality of tensioning strands between the upper retention strip and the first sheet material, and the welding of the lower retention strip and the second sheet material to the plurality of tensioning strands between the lower retention strip and the second sheet material. If the desired length of the welded product has been reached at step S200F, a determination is made S200G as to whether a blank segment is desired to be inserted between two sequentially manufactured inflatable products before trimming of the sheet assembly occurs in step S300. If such a blank segment is desired, a blank segment is inserted S400 as set forth in more detail below regarding the fourth manufacturing embodiment, and processing continues at step S200A. If sufficient length of the product is reached, and no blank segment is required between sequentially manufactured inflatable products, Step S300 provides for trimming, whereby the trimming module 500 trims the inter-welded sheet assembly 700A of the specified length welded in the above step to form the top and bottom walls (110, 120) or inner wall and outer walls (220, 210) of an inflatable semi-finished product 700 (as shown in cross section in FIG. 27).

The manufacturing method described above is described in detail below based on the corresponding manufacturing system 1000.

It should be noted that in the direction X, as shown in FIG. 25, a direction from the feeding module 300 to the trimming module 500 is defined as a feeding direction X1. In embodiments of the present application, the feeding direction X1 is a straight line, but it is not limited thereto. In other possible implementations, the feeding direction X1 may be a curve, which can be adjusted according to the internal space of a factory or for efficient layout of the components of the system 1000.

The manufacturing order of the welding module 400, the trimming module 500, and the tensioning mechanism 600 is not specifically limited in the embodiment of the present application, and can be adjusted according to actual requirements. It is understood that in other embodiments, the manufacturing system 1000 may be provided with no trimming module 500, and the inter-welded sheet assembly 700A after high-frequency welding may be directly rolled up. Alternatively, the trimming module 500 may be provided in an independent trimming process.

Continuing to refer to FIGS. 25 and 27, the feeding module 300 includes a plurality of feeding assemblies in some embodiments. The first sheet material 710, the second sheet material 720, the plurality of parallel tensioning strands 730, the pair of upper retention strips 740, and the pair of lower retention strips 750 are respectively placed in their respective corresponding feeding assemblies. Each feeding assembly may also optionally include a conveying mechanism, for conveying the first sheet material 710, the second sheet material 720, the plurality of parallel tensioning strands 730, the pair of upper retention strips 740 and the pair of lower retention strips 750 to the welding module 400.

It can be understood that the conveying mechanism of the manufacturing system 1000 may have different structures in actual production, and the components of the conveying mechanism may be distributed at multiple positions of the feeding module 300 as required. A typical conveying mechanism typically includes a series of cylindrical rollers, cylindrical surfaces of which are in contact with the first sheet material 710, the second sheet material 720, the plurality of parallel tensioning strands 730, the upper retention strips 740 and the lower retention strips 750, and such rollers are rotated by electric drive. When these rollers rotate, the friction between these rollers and the first sheet material 710, the second sheet material 720, the plurality of parallel tensioning strands 730, the upper retention strips 740 and the lower retention strips 750 drives the first sheet material 710, the second sheet material 720, the plurality of parallel tensioning strands 730, the upper retention strips 740 and the lower retention strips 750 to move forward generally in the X1 direction.

Referring to FIG. 25, embodiments of the present application may be further understood in context of a schematic view of a specific structure of a feeding module 300. However, it can be understood that the specific structure of the feeding module 300 is not limited in the embodiments of the present application, as long as each raw material (i.e., the first sheet material 710, the second sheet material 720, the plurality of parallel tensioning strands 730, the pair of upper retention strips 740 and the pair of lower retention strips 750) can be delivered to the welding module 400 in an effective manner.

As an example, referring to FIGS. 25 and 27, the feeding module 300 includes a first feeding assembly 310A, a second feeding assembly 320, a third feeding assembly 330, a fourth feeding assembly 340 and a fifth feeding assembly 350. The first feeding assembly 310A is configured to supply the second sheet material 720, the second feeding assembly 320 is configured to supply the plurality of parallel tensioning strands 730, the third feeding assembly 330 is configured to supply the first sheet material 710, the fourth feeding assembly 340 is configured to supply the pair of upper retention strips 740, and the fifth feeding assembly 350 is configured to supply the pair of lower retention strips 750.

Specifically, the first feeding assembly 310A includes: a first feeding bracket 311A, a first rotating roller 312A, a first material roll 313A and a first conveying roller 314A. The first feeding bracket 311A is a substantially rectangular frame. Two first feeding brackets 311A spaced apart from each other in a direction Y are provided, each of which includes a first extension member 315A extending in the direction Z.

The first rotating roller 312A extends in the direction Y and is rotatably connected to the first feeding bracket 311A. The first material roll 313A is mounted to the first rotating roller 312A and is rotatably connected to the first rotating roller 312A. The first rotating roller 312A and the first conveying roller 314A are spaced apart from each other in the direction X. The first conveying roller 314A extends in the direction Y and is rotatably connected to the first extension member 315A of the first feeding bracket 311A. The second sheet material 720 is wound around the first material roll 313A and the first conveying roller 314A in sequence and is conveyed to the welding module 400 through the first conveying roller 314A.

Similarly, the second feeding assembly 320 includes: a second feeding bracket 321, a second rotating roller 322, a tensioning strand material roll 323 and a second conveying roller 324. The second feeding bracket 321 comprises a substantially rectangular frame. Two second feeding brackets 321 spaced apart from each other in the direction Y are provided, each of which includes a second extension member 325 extending in the direction Z.

The second rotating roller 322 extends in the direction Y and is rotatably connected to the second feeding bracket 321. The tensioning strand material roll 323 is mounted to the second rotating roller 322 and is rotatably connected to the second rotating roller 322. The second rotating roller 322 and the second conveying roller 324 are spaced apart from each other in the direction X. The second conveying roller 324 extends in the direction Y and is rotatably connected to the second extension member 325 of the second feeding bracket 321.

The plurality of parallel tensioning strands 730 are wound around the tensioning strand material roll 323 and the second conveying roller 324 in sequence, and the plurality of parallel tensioning strands 730 are arranged at equal intervals in the direction Y (e.g., P1 = P2 in FIG. 4), but are not limited to this, and may alternatively be arranged at non-equal intervals as described above in regard to FIG. 4B. More particularly, spacing between the parallel tensioning strands 730 may be the same or different, and can be specifically set according to the requirements of the inflatable product 10. The plurality of parallel tensioning strands 730 are conveyed to the welding module 400 through the second conveying roller 324.

Similarly, the third feeding assembly 330 includes: a third feeding bracket 331, a third rotating roller 332, a second material roll 333 and a third conveying roller 334. The third feeding bracket 331 is a substantially rectangular frame. Two third feeding brackets 331 spaced apart from each other in a direction Y are provided, each of which includes a third extension member 335 extending in the first direction Z.

The third rotating roller 332 extends in the direction Y and is rotatably connected to the third feeding bracket 331. The second material roll 333 is mounted to the third rotating roller 332 and is rotatably connected to the third rotating roller 332. The third rotating roller 332 and the third conveying roller 334 are spaced apart from each other in the direction X. The third conveying roller 334 extends in the direction Y and is rotatably connected to the third extension member 335 of the third feeding bracket 331. The first sheet material 710 is wound around the second material roll 333 and the third conveying roller 334 in sequence and is conveyed to the welding module 400 through the third conveying roller 334.

The first feeding assembly 310A, the second feeding assembly 320 and the third feeding assembly 330 are arranged in a stepped manner in sequence. That is, in the direction Z, the height of the first feeding assembly 310A from the ground is less than the height of the second feeding assembly 320 from the ground which is less than the height of the third feeding assembly 330 from the ground. More particularly, the first feeding assembly 310A, the second feeding assembly 320 and the third feeding assembly 330 have height differences in sequence of the materials delivered.

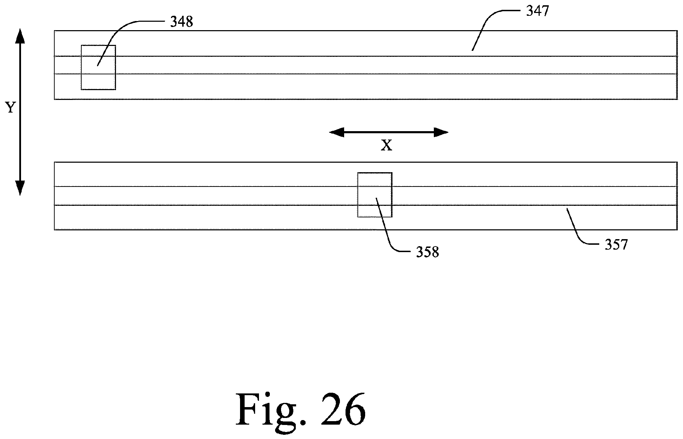

FIG. 25 shows a schematic view of one structure of a manufacturing system 1000 provided in an embodiment of the present application, and FIG. 26 shows a schematic view of the structures of a first slide rail 347 and a first bracket 348, and a second slide rail 357 and a second bracket 358 in FIG. 25. FIG. 27 shows a cross-sectional schematic view of the inter-welded sheet assembly 700A produced by the manufacturing system 1000 of the embodiments of the present application, in which only one parallel tensioning strand 730 and a part of the inflatable product 10 are shown, and the length of the parallel tensioning strand 730 is not limited thereto and can be selected as required.

It should be noted that FIG. 26 only shows the slide rails on one side of the fourth feeding assembly 340 and the fifth feeding assembly 350 in FIG. 25. That is, in the direction Y, the first slide rail 347 and the second slide rail 357 described above are provided on each of the left and right sides of the fourth feeding assembly 340 and the fifth feeding assembly 350, and the slide rails on the left and right sides have the same structure.

Two first brackets 348 described above are provided, which are respectively slidably connected to the first slide rails 347 on the left and right sides, and a first attachment portion 343 on the first brackets 348 extends in the direction Y to connect the first brackets 348 on the left and right sides to each other, to ensure the synchronization of the movements of the first brackets 348 on the left and right sides. Two second brackets 358 are provided, which are respectively slidably connected to the second slide rails 357 on the left and right sides, and a second attachment portion 353 on the second brackets 358 extends in the direction Y to connect the second brackets 358 on the left and right sides to each other, to ensure the synchronization of the movements of the second brackets 358 on the left and right sides.

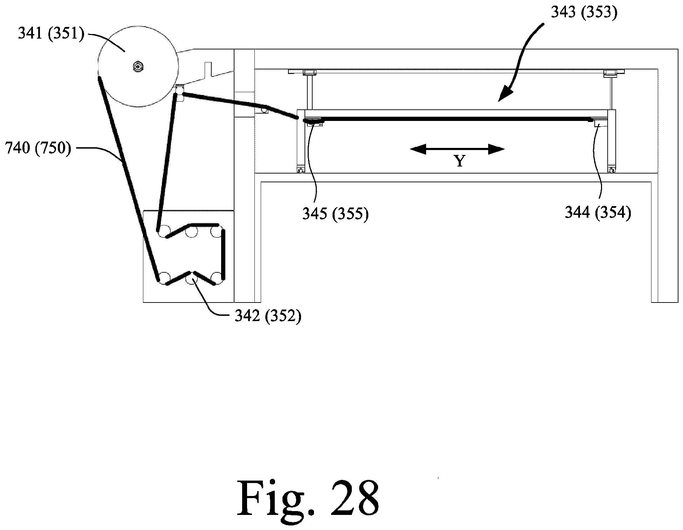

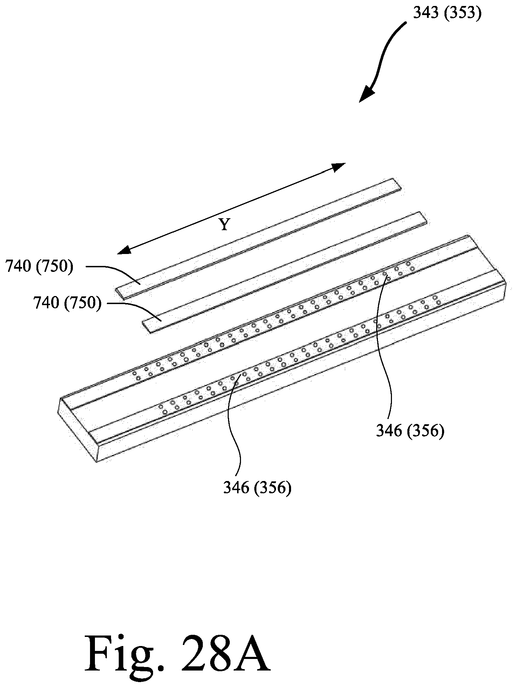

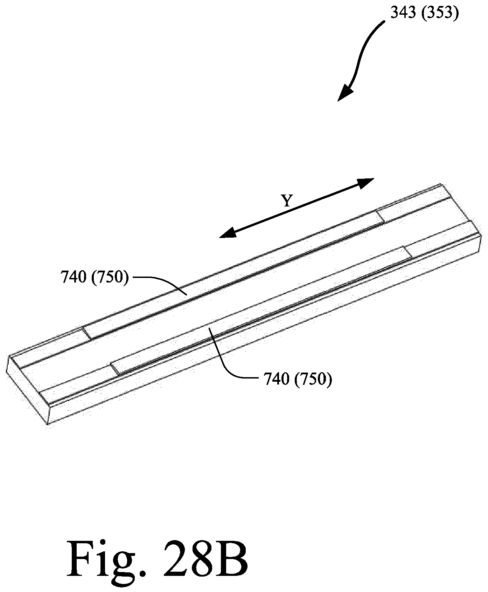

Referring to FIGS. 25 to 28B, the fourth feeding assembly 340 extends in the direction Y, and includes: two first strip reels 341 spaced apart from each other in the direction X, six fourth conveying rollers 342 and the first attachment portion 343. The pair of upper retention strips 740 are wound around the first strip reels 341 and the six fourth conveying rollers 342 in sequence, and are conveyed to the first attachment portion 343 through the fourth conveying rollers 342 (see FIG. 28).

It should be noted that the number of fourth conveying rollers 342 is not limited in the embodiments of the present application, for example, it may be six as shown in FIG. 28 of the embodiment of the present application, or may be four, five, eight, etc. Moreover, the fourth conveying rollers 342 also have a tensioning effect on the pair of upper retention strips 740.

The first attachment portion 343 is provided with a first clamping member 344 and a first trimming member 345 at two ends. The first attachment portion 343 includes two first attachment strips 346 (as shown in FIG. 28A), which are respectively configured to attach to the upper retention strips 740 on the two first strip reels 341, but is not limited thereto. There may be provided one first attachment strip 346, or three, four or more first attachment strips 346, which can be specifically selected according to the requirements of the inflatable mattress.

The width of the first attachment strip 346 is greater than the width of the upper retention strip 740. When the upper retention strip 740 is conveyed to the first attachment portion 343, one end of the upper retention strip 740 is clamped by the first clamping member 344, and the other end thereof is trimmed by the first trimming member 345. At this time, the upper retention strip 740 is attached to the corresponding first attachment strip 346, and is trimmed into a length adapted to the first attachment strip 346 (as shown in FIG. 28B). Then, the first attachment portion 343 moves to the welding module 400.

FIG. 28A shows a schematic view of the structure of the first attachment portion 343 in FIG. 28, with the pair of upper retention strips 740 not yet attached to the first attachment strip 346; and FIG. 28B shows a schematic view of the structure of the first attachment portion 343 in FIG. 28, with the pair of upper retention strips 740 having been attached to the first attachment strip 346. FIG. 29 shows a schematic view of the structure of a manufacturing system 1000 of a first manufacturing embodiment, and FIGS. 29A to 29D show a welding process of welding the pair of upper retention strips 740, and FIGS. 29E to 29H show a welding process of welding the pair of lower retention strips 750.

More specifically, in conjunction with FIGS. 26 and 29, a first slide rail 347 is provided at one end away from the first strip reel 341 in the direction Y, the first slide rail 347 extends in the direction X and extends to the welding module 400, and a first bracket 348 is slidably connected to the first slide rail 347. Therefore, the first attachment portion 343 can be delivered to the welding module 400 (as shown in FIG. 29A) or away from the welding module 400 (as shown in FIG. 29C) along the first slide rail 347 by the first bracket 348. The first bracket 348 includes a first part 3481 extending in the direction Z and a second part 3482 extending in the direction X. The first part 3481 is slidably connected to the first slide rail 347, and the second part 3482 is connected to the first attachment portion 343. The first part 3481 can move upwardly in the direction Z (as shown in FIG. 29B) and move downwardly in the direction Z (as shown in FIG. 29C), to drive the second part 3482 and the first attachment portion 343 to move synchronously in the first direction.

Similarly, the fifth feeding assembly 350 extends in the direction Y, and includes: two second strip reels 351 spaced apart from each other in the direction X, six fifth conveying rollers 352, and the second attachment portion 353. The pair of lower retention strips 750 are wound around the second strip reels 351 and the six fifth conveying rollers 352 in sequence, and are conveyed to the second attachment portion 353 through the fifth conveying rollers 352 in sequence. The fifth feeding assembly 350 is spaced apart from the fourth feeding assembly 340 described above in the direction X, and has the same structure as the fourth feeding assembly 340.

Since the fifth feeding assembly 350 and the fourth feeding assembly 340 have the same structure, the second attachment portion 353 may also be described with reference to FIGS. 28, 28A and 28B.

In view of the foregoing, the number of fifth conveying rollers 352 is not limited in the embodiments of the present application, for example, it may be six, or may be four, five, eight, etc. Moreover, the fifth conveying rollers 352 also have a tensioning effect on the lower retention strips 750. The second attachment portion 353 is provided with a second clamping member 354 and a second trimming member 355 at two ends. The second attachment portion 353 includes two second attachment strips 356, which are respectively configured to attach to the lower retention strips 750 on the two second strip reels 351, but is not limited thereto. There may be provided one second attachment strip 356, or three, four or more second attachment strips 356, which can be specifically selected according to the requirements of the inflatable mattress.

The width of the second attachment strip 356 is greater than the width of the lower retention strip 750. When the lower retention strip 750 is conveyed to the second attachment portion 353, one end of the lower retention strip 750 is clamped by the second clamping member 354, and the other end thereof is trimmed by the second trimming member 355. At this time, the lower retention strip 750 is attached to the corresponding second attachment strip 356, and is trimmed into a length adapted to the second attachment strip 356 (as shown in FIG. 28B). Then, the second attachment portion 353 moves to the welding module 400.

More specifically, in conjunction with FIGS. 26 and 29, a second slide rail 357 is provided at one end away from the second strip reel 351 in the direction Y, the second slide rail 357 extends in the direction X and extends to the welding module 400 (as shown in FIG. 29E) or away from the welding module 400 (as shown in FIG. 29G), and a second bracket 358 is slidably connected to the second slide rail 357. Therefore, the second attachment portion 353 can be delivered to the welding module 400 along the second slide rail 357 by the second bracket 358. The second bracket 358 includes a third part 3581 extending in the direction Z and a fourth part 3582 extending in the direction X. The third part 3581 is slidably connected to the second slide rail 357, and the fourth part 3582 is connected to the second attachment portion 353. The third part 3581 can move downwardly (as shown in FIG. 29F) or upwardly (as shown in FIG. 29G) in the direction Z, to drive the fourth part 3582 and the second attachment portion 353 to move synchronously in the direction Z.

The second slide rail 357 is spaced apart from the first slide rail 347 in the direction Y, and there is a height difference between the third part 3581 of the second bracket 358 and the first part 3481 of the first bracket 348. More particularly, the height of the third part 3581 extending in the direction Z is different from the height of the first part 3481 extending in the direction Z, so as to prevent the first bracket 348 from colliding or interfering with the second bracket 358. Referring to FIG. 29, for example, the height of the first part 3481 of the illustrated embodiment is lower than the height of the third part 3581, but the height of the first part 3481 may alternatively be higher than the height of the third part 3581.

### Second Manufacturing Embodiment

The specific structure of the welding module 400 and the step S200 are described in detail below in conjunction with FIGS. 27 to 29H.

However, it can be understood that the specific structure of the welding module 400 is not limited in the embodiments of the present application, as long as the manufacturing method described above can be realized. For the convenience of understanding, embodiments of the present application are combined with the schematic views of the structure shown in FIGS. 26 to 29H to describe one of the embodiments in detail.

Referring to FIGS. 27 and 29, the welding module 400 includes a first welding apparatus 410 and a second welding apparatus 420 spaced apart from each other in the direction Z, and a receiving portion 430 is provided between the first welding apparatus 410 and the second welding apparatus 420 for receiving the first sheet material 710, the second sheet material 720, the plurality of parallel tensioning strands 730, the pair of upper retention strips 740 and the pair of lower retention strips 750. The pair of upper retention strips 740, the plurality of parallel tensioning strands 730 and the first sheet material 710 are subjected to high-frequency welding in the first welding apparatus 410, and the pair of lower retention strips 750, the plurality of parallel tensioning strands 730 and the second sheet material 720 are subjected to high-frequency welding in the second welding apparatus 420.

Specifically, the first welding apparatus 410 and the second welding apparatus 420 are located at upper and lower ends of the receiving portion 430 in the direction Z, and the first welding apparatus 410 and the second welding apparatus 420 can both move up and down in the direction Z. More particularly, the first welding apparatus 410 can move downwardly (as illustrated in FIG. 29B) or upwardly (as illustrated in FIG. 29C) in the direction Z. The second welding apparatus 420 can move upwardly in the direction Z (as illustrated in FIG. 29F) or downwardly in the direction Z (as illustrated FIG. 29G).

Referring to FIGS. 29 and 25, the first sheet material 710 is delivered to the welding module 400 by the first feeding assembly 310A, and has one end tensioned by the tensioning mechanism 600. The second sheet material 720 is delivered to the welding module 400 by the third feeding assembly 330, and has one end tensioned by the tensioning mechanism 600. The plurality of parallel tensioning strands 730 are delivered to the welding module 400 by the second feeding assembly 320, and has one end tensioned by the tensioning mechanism 600. Since the first feeding assembly 310A, the second feeding assembly 320 and the third feeding assembly 330 are arranged in a stepped manner, the first sheet material 710, the plurality of parallel tensioning strands 730 and the second sheet material 720 are arranged at intervals in sequence in the first direction. That is, the plurality of parallel tensioning strands 730 are located between the first sheet material 710 and the second sheet material 720.

For convenience of illustration, FIG. 28 and FIGS. 29 to 29H show only one parallel tensioning strand 730 to avoid an overabundance of many parallel tensioning strands 730 reducing clarity of the figures.

Referring to FIG. 29A, in the illustrated embodiment, the second part 3482 of the first bracket 348 moves with the first attachment portion 343 in the direction X toward the welding module 400 (i.e., in the direction "a" shown in FIG. 29A). More specifically, the first part 3481 of the first bracket 348 moves along the first slide rail 347 in the direction X toward the welding module 400, to drive the second part 3482 to move synchronously until the pair of upper retention strips 740 that are attached to the first attachment portion 343 move into the receiving portion 430 and are located below the first welding apparatus 410 in the direction Z.

Referring to FIG. 29B, the first part 3481 moves upwardly in the direction Z (i.e., in the direction "b" shown in FIG. 29B), to drive the second part 3482 to move synchronously such that the pair of upper retention strips 740 on the first attachment portion 343 move upwardly in the direction Z, and the pair of upper retention strips 740 come into contact with and urge the parallel tensioning strands 730 located below the first sheet material 710 to move upwardly in the direction Z until the parallel tensioning strands 730 come into contact with the first sheet material 710. The first welding apparatus 410 moves downwardly (i.e., in the direction "c" shown in FIG. 29B) until the first welding apparatus 410 comes into contact with the first sheet material 710, and urges the first sheet material 710 to move downwardly in the Z direction until the first sheet material 710 comes into contact with the parallel tensioning strands 730, at which time the pair of upper retention strips 740 are welded to the parallel tensioning strands 730, and the parallel tensioning strands 730 are welded to the first sheet material 710.

As a result, the pair of upper retention strips 740 on the first attachment portion 343 are welded to a side of the parallel tensioning strands 730 facing the second sheet material 720, and the first attachment portion 343 will no longer have the upper retention strips 740 attached thereto.

Referring to FIG. 29C, the first part 3481 then moves downwardly in the direction Z (i.e., in the direction "c" shown in FIG. 29C), to drive the second part 3482 to move synchronously, so as to drive the first attachment portion 343, to which the pair of upper retention strips 740 are no longer attached, causing the second part 3482 to move downwardly in the direction "c". Further, the first welding apparatus 410 moves upwardly (i.e., in the direction "b" shown in FIG. 29C), and the first part 3481 moves in the direction X away from the welding module 400 (i.e., in the direction "d" shown in FIG. 29C), so as to drive the first attachment portion 343, to which the upper retention strips 740 are no longer attached, on the second part 3482 to move in the direction X away from the welding module 400, until the first attachment portion 343 exits the receiving portion 430 (as illustrated in FIG. 29D).

As FIG. 29D shows, the welding operation on the pair of upper retention strips 740 has been completed. In the coming illustrations, a welding operation on the pair of lower retention strips 750 will be performed.

More specifically, referring to FIG. 29E, the fourth part 3582 of the second bracket 358 moves with the second attachment portion 353 in the direction X toward the welding module 400 (i.e., in the direction "a" shown in FIG. 29E). Specifically, the third part 3581 of the second bracket 358 moves along the second slide rail 357 in the direction "a" toward the welding module 400, to drive the fourth part 3582 to move synchronously until the pair of lower retention strips 750 attached to the second attachment portion 353 move into the receiving portion 430 and are located above the second welding apparatus 420 in the direction Z.

Referring to FIG. 29F, the third part 3581 moves downwardly in the direction Z (i.e., in the direction "c" shown in FIG. 29F), to urge the fourth part 3582 to move synchronously such that the pair of lower retention strips 750 on the second attachment portion 353 move downwardly in the direction Z, and the lower retention strips 750 come into contact with and drive the parallel tensioning strands 730 located above the second sheet material 720 to move downwardly in the first direction until the parallel tensioning strands 730 come into contact with the second sheet material 720. The second welding apparatus 420 moves upwardly in the direction Z (i.e., in the direction "b" shown in FIG. 29F) until the second welding apparatus 420 comes into contact with the second sheet material 720, and drives the second sheet material 720 to move upwardly in the direction Z until the second sheet material 720 comes into contact with the parallel tensioning strands 730, at which time the pair of lower retention strips 750 are welded to the parallel tensioning strands 730, and the parallel tensioning strands 730 are welded to the second sheet material 720.

As a result of the aforementioned process, the pair of lower retention strips 750 on the second attachment portion 353 are welded to a side of the parallel tensioning strands 730 facing the first sheet material 710, and the second attachment portion 353 will no longer have the lower retention strips 750 attached thereto.

Referring to FIG. 29G, the third part 3581 then moves upwardly in the direction Z (i.e., in the direction "b" shown in FIG. 29G), to urge the fourth part 3582 to move synchronously, so as to drive the second attachment portion 353, to which the lower retention strips 750 are not attached, on the fourth part 3582 to move upwardly in the direction Z. The second welding apparatus 420 moves downwardly in the direction Z (i.e., in the direction "c" shown in FIG. 29G), and the third part 3581 moves in the direction X away from the welding module 400 (i.e., in the direction "d" shown in FIG. 29G), so as to drive the second attachment portion 353, to which the lower retention strips 750 are not attached, on the fourth part 3582 to move in the direction X away from the welding module 400, until the second attachment portion 353 exits the receiving portion 430 (as shown in FIG. 29H).

At this stage, a complete welding process has been completed. More particularly, the welding operation on the pair of upper retention strips 740, the parallel tensioning strands 730 and the first sheet material 710, and the welding operation on the pair of lower retention strips 750, the parallel tensioning strands 730 and the second sheet material 720 have been completed. Next, the inter-welded sheet assembly 700A of the inflatable product 10 as shown in FIG. 27 can be obtained by continuously repeating the above welding operations.

However, in various implementations, the welding of the pair of lower retention strips 750 may be carried out before the welding of the pair of upper retention strips 740, as long as it can be ensured that the welding operation on the pair of upper retention strips 740 and the welding operation on the pair of lower retention strips 750 are carried out alternately.

While the above welding operations are being performed, the tensioning mechanism 600 maintains a tensioned state on the first sheet material 710, the second sheet material 720, and the tensioning strands 730 at all times. When the above welding operations are completed, that is, a required length of the inter-welded sheet assembly 700A has been reached, it is trimmed in the trimming module 500 to form the semi-finished product 700. In various embodiments, it is possible to continue to produce a second identical product.

More specifically, referring to FIGS. 25 and 27, after the high-frequency welding on the pair of upper retention strips 740, the plurality of parallel tensioning strands 730 and the first sheet material 710, and the high-frequency welding on the pair of lower retention strips 750, the plurality of parallel tensioning strands 730 and the second sheet material 720 are completed, a head end of the semi-finished product 700 is clamped by the tensioning mechanism 600. As the above welding process is repeated, the inter-welded sheet assembly 700A continues to increase in length. In this case, the tensioning mechanism 600 continuously advances in the feeding direction X1, so that the inter-welded sheet assembly 700A remains in a tensioned state. When the required length of the inter-welded sheet assembly 700A has been reached, it is trimmed by the trimming module 500 spaced apart from the tensioning mechanism 600 in the direction X, thereby completing the manufacturing of the semi-finished product 700. After trimming is completed, the tensioning mechanism 600 moves to the original position in a direction X approaching the trimming module 500, and the process continues to manufacture the next product.

### Third Manufacturing Embodiment

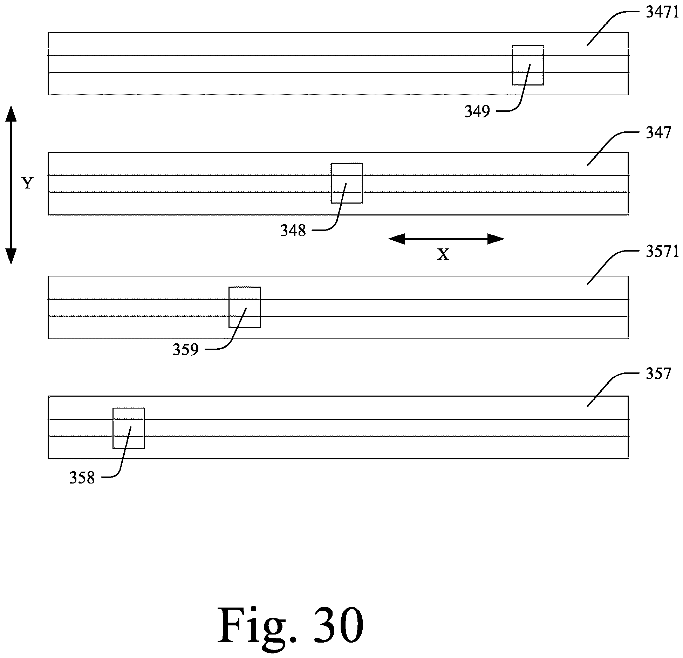

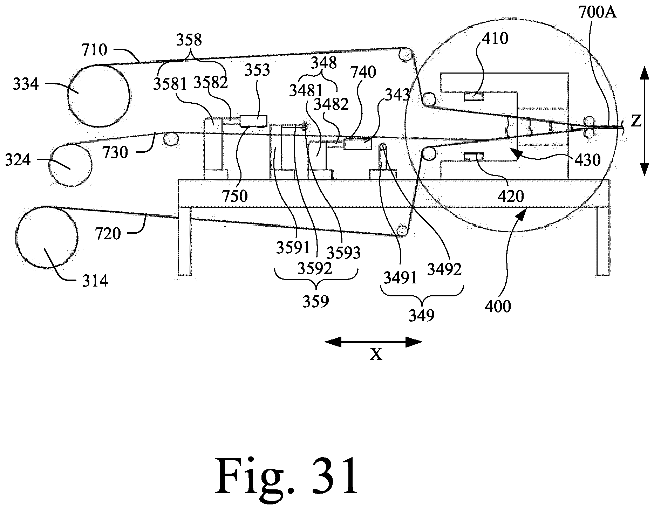

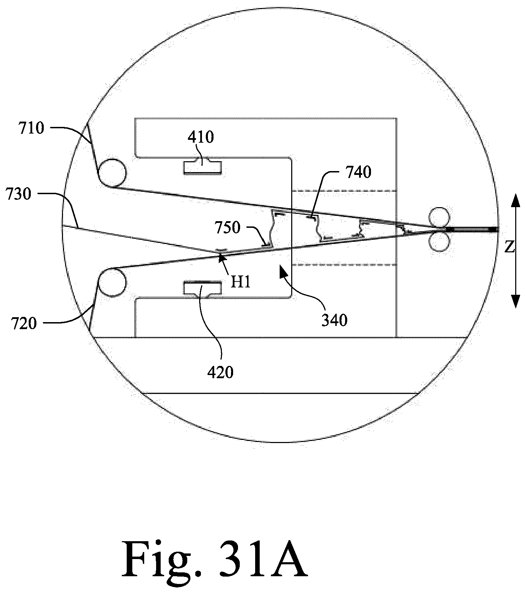

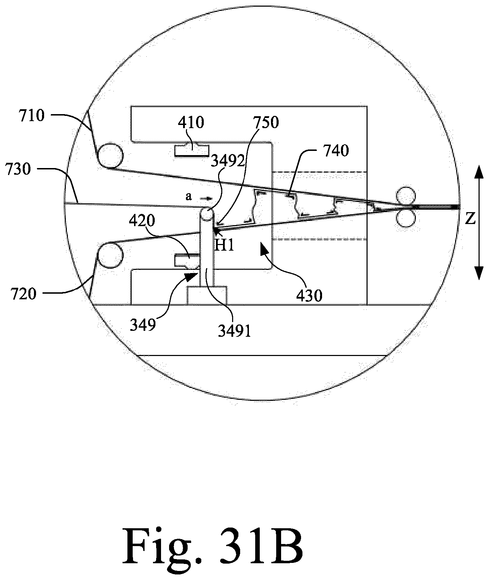

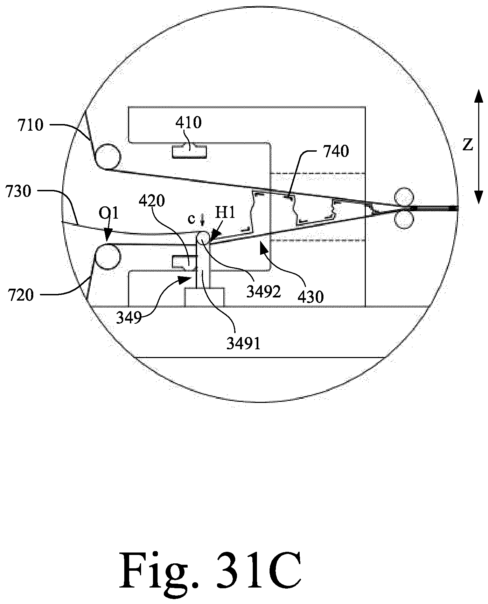

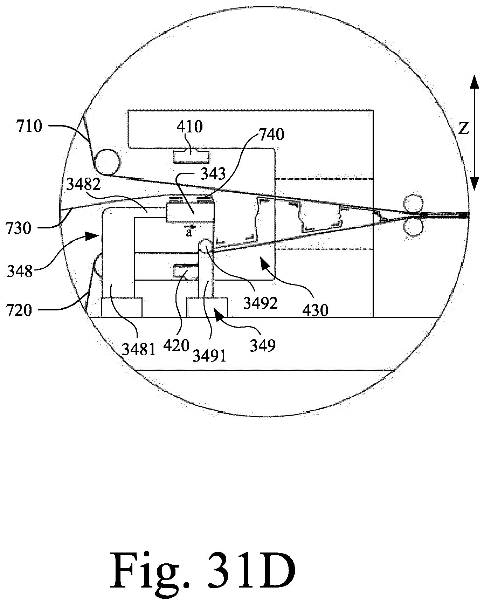

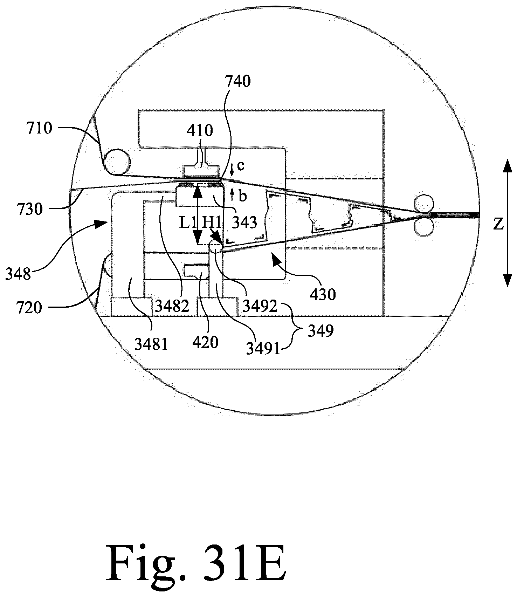

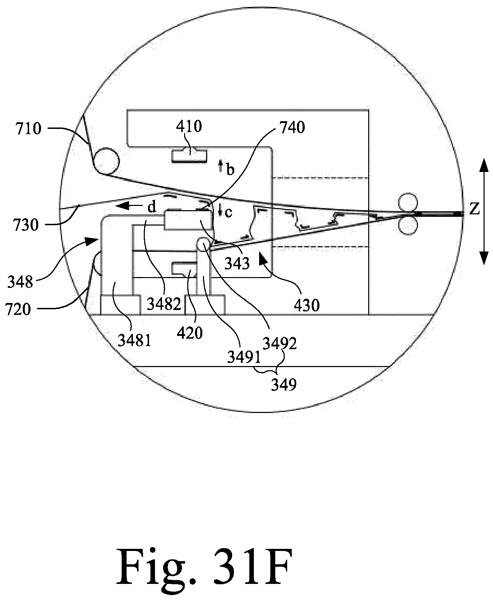

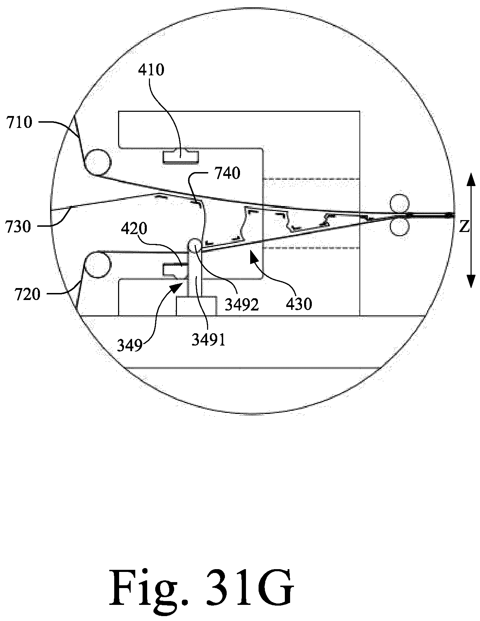

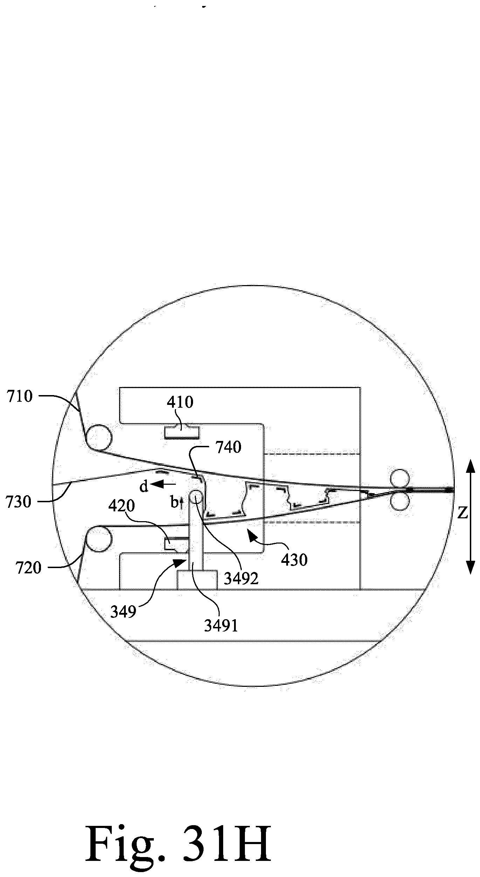

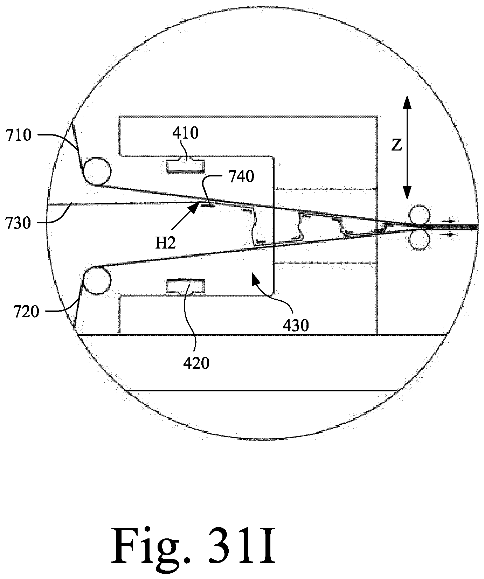

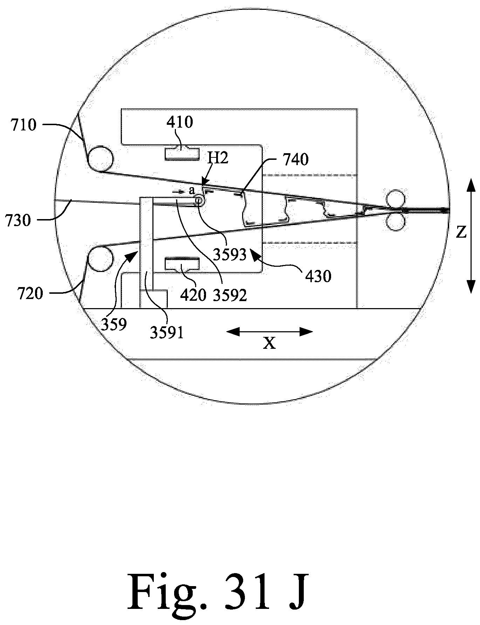

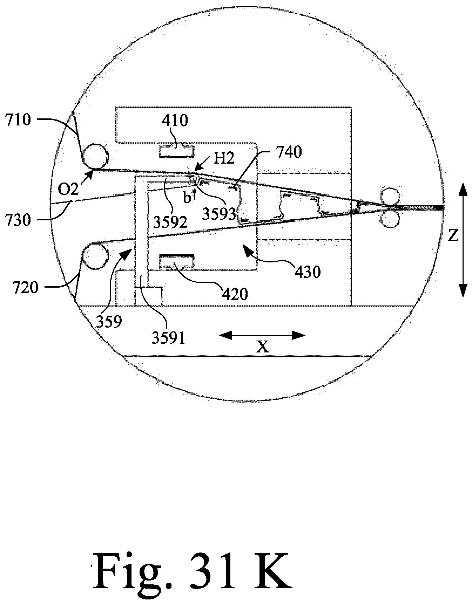

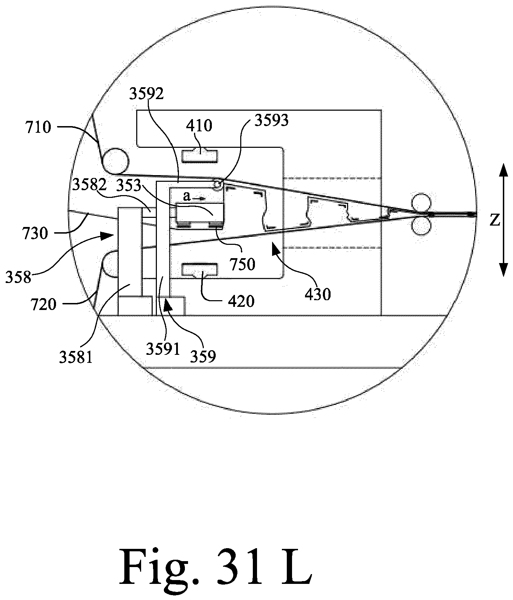

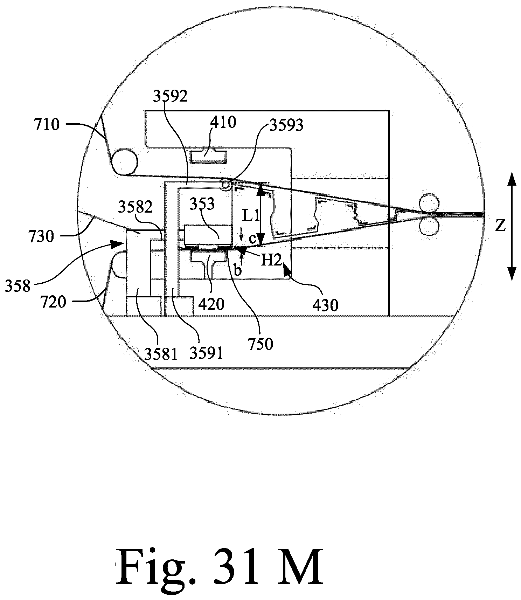

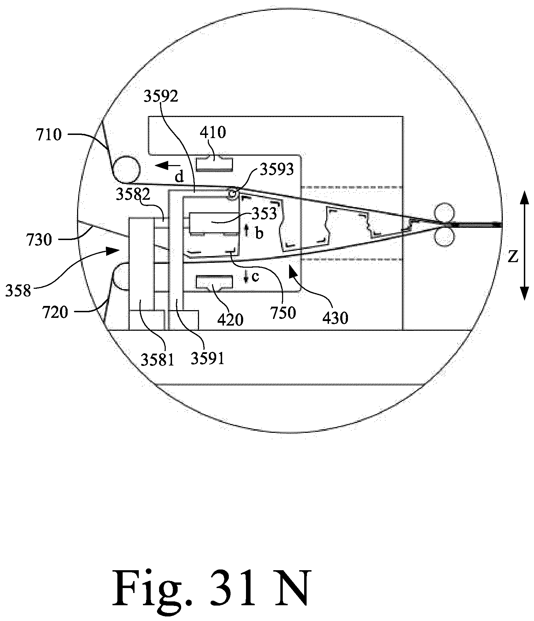

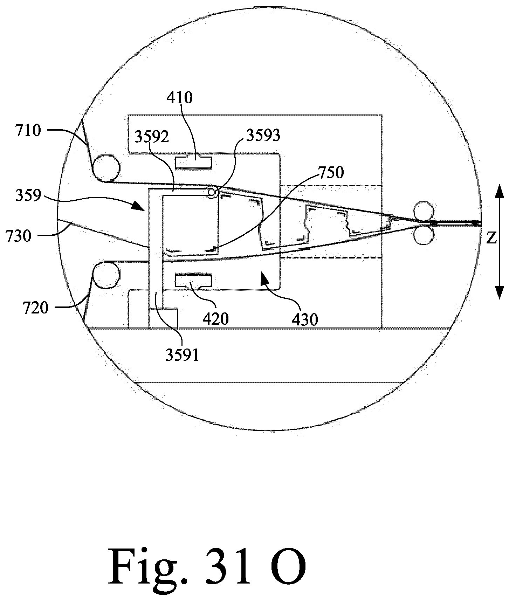

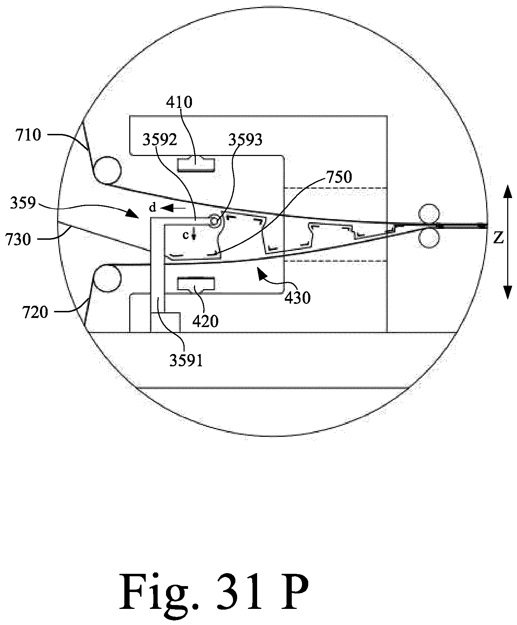

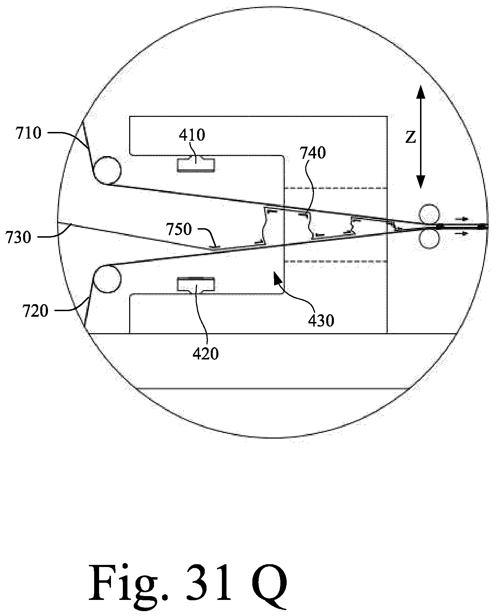

Comparing FIG. 29 with FIG. 31, a difference between the third manufacturing embodiment and the second manufacturing embodiment addresses implementations where lower anti-deflection frames 349 and upper anti-deflection frames 359 (as shown in FIG. 31) are added in the third manufacturing embodiment. The specific structure and the high-frequency welding process of the welding module 400 in the third manufacturing embodiment will be described in detail in conjunction with FIGS. 30 to 31Q.

FIG. 30 shows a schematic view of the structures of the first slide rail 347 and the first bracket 348, a schematic view of the structures of a third slide rail 3471 and the lower anti-deflection frame 349, and a schematic view of the structures of the second slide rail 357, the second bracket 358, a fourth slide rail 3571 and the upper anti-deflection frame 359. FIG. 31 shows a schematic view of the structure of a manufacturing system of the third manufacturing embodiment, and FIGS. 31A to 31I show a welding process of welding the pair of upper retention strips 740, and FIGS. 31J to 31Q show a process for welding the pair of lower retention strips 750.

Referring to FIG. 30, the third slide rail 3471, the first slide rail 347, the fourth slide rail 3571 and the second slide rail 357 are spaced apart from one another in the direction Y.

The illustrated embodiments in FIG. 30 shows the slide rails on one side of the fourth feeding assembly 340 and the fifth feeding assembly 350 in FIG. 25. More particularly, in the direction Y, the third slide rail 3471, the first slide rail 347, the fourth slide rail 3571 and the second slide rail 357 described above are provided on each of the left and right sides of the fourth feeding assembly 340 and the fifth feeding assembly 350, and the slide rails on the left and right sides have the same structure. Two first brackets 348 described above are provided, which are respectively slidably connected to the first slide rails 347 on the left and right sides, and a first attachment portion 343 on the first brackets 348 extends in the direction Y to connect the first brackets 348 on the left and right sides to each other, to ensure the synchronization of the movements of the first brackets 348 on the left and right sides.

Similarly, two lower anti-deflection frames 349 are provided, which are respectively slidably connected to the third slide rails 3471 on the left and right sides. Lower pressure rollers 3492 of the lower anti-deflection frames 349 extend in the direction Y to connect the lower anti-deflection frames 349 on the left and right sides to each other, ensuring the synchronization of the movements of the lower anti-deflection frames 349 on the left and right sides. Two second brackets 358 are provided, which are respectively slidably connected to the second slide rails 357 on the left and right sides, and a second attachment portion 353 on the second brackets 358 extends in the direction Y to connect the second brackets 358 on the left and right sides to each other, to ensure the synchronization of the movements of the second brackets 358 on the left and right sides. Two upper anti-deflection frames 359 are provided, which are respectively slidably connected to the fourth slide rails 3571 on the left and right sides. Upper pressure rollers 3593 of the upper anti-deflection frames 359 extend in the direction Y to connect the upper anti-deflection frames 359 on the left and right sides to each other, ensuring the synchronization of the movements of the upper anti-deflection frames 359 on the left and right sides.

In conjunction with FIG. 29, as described in the second manufacturing embodiment, the first bracket 348 includes a first part 3481 extending in the direction Z and a second part 3482 extending in the direction X. The first part 3481 is slidably connected to the first slide rail 347, and the second part 3482 is connected to the first attachment portion 343. The first part 3481 can move in the direction Z, to drive the second part 3482 and the first attachment portion 343 to move in the direction Z. The second bracket 358 includes a third part 3581 extending in the direction Z and a fourth part 3582 extending in the direction X. The third part 3581 is slidably connected to the second slide rail 357, and the fourth part 3582 is connected to the second attachment portion 353. The third part 3581 can move in the direction Z, to drive the fourth part 3582 and the second attachment portion 353 to move in the direction Z.

Similarly, referring to FIG. 30 and FIG. 31, the lower anti-deflection frame 349 includes a fifth part 3491 extending in the direction Z. The fifth part 3491 is slidably connected to the third slide rail 3471, so that the lower anti-deflection frame 349 can move toward the welding module 400 (as shown in FIG. 31B) or away from the welding module 400 (as shown in FIG. 31H). The lower pressure roller 3492 is connected to a top end of the fifth part 3491, and the fifth part 3491 can move downwardly (as shown in FIG. 31C) or upwardly (as shown in FIG. 31H) in the direction Z, to drive the lower pressure roller 3492 to move synchronously in the direction Z. The height of the fifth part 3491 is equal to the height of the first part 3481, but is not limited thereto, and may alternatively be less or greater than the height of the first part 3481.

The upper anti-deflection frame 359 includes a sixth part 3591 extending in the direction Z and a seventh part 3592 extending in the direction X. The sixth part 3591 is slidably connected to the fourth slide rail 3571, so that the upper anti-deflection frame 359 can move toward the welding module 400 (as shown in FIG. 31J) or away from the welding module 400 (as shown in FIG. 31P). The seventh part 3592 is connected to a top end of the sixth part 3591, and the upper pressure roller 3593 is connected to the end of the seventh part 3592 away from the sixth part 3591. The sixth part 3591 can move upwardly (as shown in FIG. 31K) or downwardly (as shown in FIG. 31P) in the direction Z, to drive the seventh part 3592 and the upper pressure roller 3593 to move synchronously in the direction Z. The height of the sixth part 3591 is equal to the height of the third part 3581, but is not limited thereto, and may alternatively be less or greater than the height of the third part 3581.

For convenience of illustration, FIGS. 31 to 31Q show only one parallel tensioning strand 730 to avoid an overabundance of illustrated parallel tensioning strands 730 reducing clarity of the figures.

As described above, after the first sheet material 710, the second sheet material 720, the plurality of parallel tensioning strands 730, the pair of upper retention strips 740 and the pair of lower retention strips 750 are delivered to the welding module 400 by the feeding module 300, referring to FIG. 31A, the welding operation on the pair of lower retention strips 750 has been completed at this time, and the last welding point of the welding operation is defined as H1. Then, the welding of the pair of upper retention strips 740 begins.

Before welding the pair of upper retention strips 740, as shown in FIG. 31B, the fifth part 3491 of the lower anti-deflection frame 349 moves with the lower pressure roller 3492 in the direction X toward the welding module 400 (i.e., in the direction "a" shown in FIG. 31B). More specifically, the fifth part 3491 of the lower anti-deflection frame 349 moves along the third slide rail 3471 in the direction X toward the welding module 400 (i.e., in the direction "a" shown in FIG. 31B), so as to drive the lower pressure roller 3492 to move synchronously until the lower anti-deflection frame 349 is located in the receiving portion 430, and the fifth part 3491 is located at the last welding point H1 of the previous pair of lower retention strips 750.

As shown in FIG. 31C, the fifth part 3491 moves downwardly in the direction Z (i.e., in the direction "c" shown in FIG. 31C), to drive the lower pressure roller 3492 to move synchronously in the direction Z until the lower pressure roller 3492 presses downwardly against the second sheet material 720 and just against the welding point H1. As the fifth part 3491 moves downwardly in the direction Z, the parallel tensioning strands 730 that have not been welded gradually changes from a relatively tight state of FIG. 31A to a loose state of FIG. 31C. Under the pressure of the lower pressure roller 3492 on the second sheet material 720, a segment of the second sheet material 720 that has not been welded (i.e., a line segment H1O1 in FIG. 31C, i.e., the distance "L" in FIG. 27) is in a horizontal state.

Referring to FIG. 31D, in this case, the second part 3482 of the first bracket 348 moves with the first attachment portion 343 in the direction X toward the welding module 400 (i.e., in the direction "a" shown in FIG. 31D). More specifically, the first part 3481 of the first bracket 348 moves along the first slide rail 347 in the direction X toward the welding module 400, to drive the second part 3482 to move synchronously until the pair of upper retention strips 740 attached to the first attachment portion 343 are transported into the receiving portion 430 and are located below the first welding apparatus 410 in the direction Z.

Referring to FIG. 31E, the first part 3481 moves upwardly in the direction Z (i.e., in the direction "b" shown in FIG. 31E), to drive the second part 3482 to move synchronously such that the pair of upper retention strips 740 on the first attachment portion 343 move upwardly in the direction Z, and the pair of upper retention strips 740 come into contact with the parallel tensioning strands 730 located below the first sheet material 710, and drive the parallel tensioning strands 730 to move upwardly in the direction Z until the parallel tensioning strands 730 come into contact with the first sheet material 710. The first welding apparatus 410 moves downwardly in the first direction Z (i.e., in the direction "c" shown in FIG. 31E) until the first welding apparatus 410 comes into contact with the first sheet material 710, and urges the first sheet material 710 to move downwardly in the direction Z until the first sheet material 710 comes into contact with the parallel tensioning strands 730, at which time the pair of upper retention strips 740 are welded to the parallel tensioning strands 730, and the parallel tensioning strands 730 are welded to the first sheet material 710.

Referring momentarily to FIG. 29B in the second manufacturing embodiment, as a result of the upward motion in the "b" direction of the first attachment portion 343 to position the tensioning strands 730 and retention strips 740 for welding to the first sheet material 710, a tensile force may be transferred through the tensioning strands 730 from the first attachment portion 343 downwardly to the last welded location H1 on second sheet material 720. As the second sheet material 720 in FIG. 29B does not have a nearby support proximate the H1 weld, the upward tensile force coupled from the tensioning strands 730 that are attached at the weld at point H1 may cause an upward deflection in the "b" direction of the second sheet material 720. If the second sheet material deflects upward in a "b" direction, the distance L1 shown in FIG. 31E could be undesirably reduced, resulting in an unexpectedly shortened and inconsistently-dimensioned segment of tensioning strands 730 that are welded between the top material sheet 710 and the bottom material sheet 720. However, in the third manufacturing embodiment, with the addition of the lower anti-deflection frame 349 and its related components 3491, 3491, during the welding of the pair of upper retention strips 740 to the parallel tensioning strands 730 and of the parallel tensioning strands 730 to the first sheet material 710, under the action of the lower pressure roller 3492, the second sheet material 720 will not upwardly deflect (in the "b" direction) with the upward movement (in the "b" direction) of the first attachment portion 343. Put another way, through the deflection-resisting features of the lower anti-deflection frame, the distance between the second sheet material 720 and the first sheet material 710 remains fixed at a predetermined aligned distance (i.e., the distance between the last welding point H1 and the upper retention strips 740, i.e., the distance L1 in FIG. 31E, and also the distance L1 in FIG. 27). Since the parallel tensioning strands 730 remain straight and of a predetermined design length, the quality and yield rate of the inflatable product 10 is improved by avoiding an undesired upward displacement of the last welding point H1 due to the upward movement of the first attachment portion 343 during the welding of the pair of upper retention strips 740. This could otherwise result in an unpredictable change in the distance L1 so that the distance L1 is inconsistent and the parallel tensioning strands 730 are malformed after the inflatable product 10 is inflated.

In addition, the lower anti-deflection frame 349 also provides more flexibility in manufacturing inflatable products 10 of different heights/thicknesses (i.e., the height of the air chamber 104 of an inflatable mattress 100 in the inflated state, i.e., the distance L1 shown in FIG. 27). More specifically, the distance between the last welding point H1 and the upper retention strips 740 can be changed by altering the spacing between the lower pressure roller 3492 and the first attachment portion 343, that is, by controlling the movement distance of the fifth part 3491 in the direction Z.

After the abovementioned steps are completed, the pair of upper retention strips 740 on the first attachment portion 343 are welded to a side of the parallel tensioning strands 730 facing the second sheet material 720, and the first attachment portion 343 will no longer have the upper retention strips 740 attached thereto.

Referring to FIG. 31F, the first part 3481 next moves downwardly in the direction Z (i.e., in the direction "c" shown in FIG. 31F), to drive the second part 3482 to move synchronously, so as to drive the first attachment portion 343, to which the pair of upper retention strips 740 are not attached, on the second part 3482 to move downwardly in the direction Z. The first welding apparatus 410 moves upwardly in the direction Z (i.e., in the direction "b" shown in FIG. 31F), and the first part 3481 moves in the direction X away from the welding module 400 (i.e., in the direction d shown in FIG. 31F), so as to drive the first attachment portion 343, to which the upper retention strips 740 are not attached, on the second part 3482 to move in the direction X away from the welding module 400, until the first attachment portion 343 exits the receiving portion 430 (as shown in FIG. 31G).

Referring to FIG. 31H, the fifth part 3491 moves upwardly in the direction Z (i.e., in the direction "b" shown in FIG. 31H), to drive the lower pressure roller 3492 to move synchronously in the direction Z until the lower pressure roller 3492 no longer abuts against the second sheet material 720, that is, having a spacing from the second sheet material 720 in the direction Z. Then, the fifth part 3491 moves in the direction X away from the welding module 400 (i.e., in the direction d shown in FIG. 31H), so as to drive the upper pressure roller 349 to move in the direction X away from the welding module 400 until the fifth part 3491 exits the receiving portion 430 (as shown in FIG. 31I).

Referring to FIG. 31I, at the current step in the manufacturing process, the welding operation on the pair of upper retention strips 740 has been completed, the last welding point of the welding operation is defined as H2, and the welding of the pair of lower retention strips 750 then begins.

Before welding the pair of lower retention strips 750, referring to FIG. 31J, at this time, the sixth part 3591 of the upper anti-deflection frame 359 moves with the seventh part 3592 and the upper pressure roller 3593 in the direction X toward the welding module 400 (i.e., in the direction "a" shown in FIG. 31J). Specifically, the sixth part 3591 of the upper anti-deflection frame 359 moves along the fourth slide rail 3571 in the direction X toward the welding module 400 (i.e., in the direction "a" shown in FIG. 31J), so as to drive the seventh part 3592 and the upper pressure roller 3593 to move synchronously until the upper pressure roller 3593 is located in the receiving portion 430 and at the last welding point H2.

Referring to FIG. 31K, the sixth part 3591 moves upwardly in the direction Z (i.e., in the direction "b" shown in FIG. 31K), to drive the seventh part 3592 and the upper pressure roller 3593 to move synchronously in the direction Z until the upper pressure roller 3593 presses upwardly against the first sheet material 710 and just against the welding point H2. As the sixth part 3591 moves upwardly in the direction Z, the parallel tensioning strands 730 that have not been welded gradually changes from a relatively tight state of FIG. 31J to a loose state of FIG. 31K. Under the pressure of the upper pressure roller 3593 on the first sheet material 710, a segment of the first sheet material 710 that has not been welded (i.e., a line segment H2O2 in FIG. 31K, i.e., the distance L2 in FIG. 27) is in a horizontal state.

Referring to FIG. 31L, the fourth part 3582 of the second bracket 358 moves with the second attachment portion 353 in the direction X toward the welding module 400 (i.e., in the direction "a" shown in FIG. 31L). Specifically, the third part 3581 of the second bracket 358 moves along the second slide rail 357 in the direction X toward the welding module 400, to drive the fourth part 3582 to move synchronously until the pair of lower retention strips 750 attached to the second attachment portion 353 move into the receiving portion 430 and are located above the second welding apparatus 420 in the direction Z.

Referring to FIG. 31M, the third part 3581 moves downwardly in the direction Z (i.e., in the direction "c" shown in FIG. 31M), to drive the fourth part 3582 to move synchronously such that the pair of lower retention strips 750 on the second attachment portion 353 move downwardly in the direction Z, and the lower retention strips 750 come into contact with and drive the parallel tensioning strands 730 located above the second sheet material 720 to move downwardly in the direction Z until the parallel tensioning strands 730 come into contact with the second sheet material 720. The second welding apparatus 420 moves upwardly in the direction Z (i.e., in the direction "b" shown in FIG. 31M) until the second welding apparatus 420 comes into contact with the second sheet material 720, and urges the second sheet material 720 to move upwardly in the direction Z until the second sheet material 720 comes into contact with the parallel tensioning strands 730, at which time the pair of lower retention strips 750 are welded to the parallel tensioning strands 730, and the parallel tensioning strands 730 are welded to the second sheet material 720.

During the welding of the pair of lower retention strips 750 to the parallel tensioning strands 730 and of the parallel tensioning strands 730 to the second sheet material 720, under the action of the upper pressure roller 3593, the first sheet material 710 will not downwardly deflect (in the "c" direction) with the downward movement of the second attachment portion 353. That is, the distance between the first sheet material 710 and the second sheet material 720 remains fixed (i.e., the distance between the last welding point H2 and the lower retention strips 750, i.e., the distance L1 in FIG. 31M, and also the distance L1 in FIG. 27), and the parallel tensioning strands 730 remain straight, improving the yield rate of the inflatable product 10, thereby avoiding the an undesired downward displacement of the last welding point H2 due to the downward movement of the second attachment portion 353 during the welding of the pair of lower retention strips 750. This would otherwise result in a change in the distance L1 so that the distance L1 is inconsistent and the parallel tensioning strands 730 are malformed after the inflatable mattress is inflated.

In addition, the upper anti-deflection frame 359 also provides more flexibility in manufacturing inflatable products 10 of different heights/thicknesses (i.e., the height of the air chamber 140 of the mattress 100 in the inflated state). More specifically, the distance between the last welding point H2 and the lower retention strips 750 can be changed by altering the spacing between the upper pressure roller 3593 and the second attachment portion 353, that is, by controlling the movement distance of the sixth part 3591 in the direction Z. More particularly, at this time, the pair of lower retention strips 750 on the second attachment portion 353 are welded to a side of the parallel tensioning strands 730 facing the first sheet material 710, and the second attachment portion 353 will no longer have the lower retention strips 750 attached thereto.

Referring to FIG. 31N, the third part 3581 then moves upwardly in the direction Z (i.e., in the direction "b" shown in FIG. 31N), to drive the fourth part 3582 to move synchronously, so as to drive the second attachment portion 353, to which the lower retention strips 750 are not attached, on the fourth part 3582 to move upwardly in the direction Z. The second welding apparatus 420 moves downwardly in the direction Z (i.e., in the direction "c" shown in FIG. 31N), and the third part 3581 moves in the direction X away from the welding module 400 (i.e., in the direction d shown in FIG. 31N), so as to drive the second attachment portion 353, to which the lower retention strips 750 are not attached, on the fourth part 3582 to move in the direction X away from the welding module 400, until the second attachment portion 353 exits the receiving portion 430 (as shown in FIG. 31O).

Referring to FIG. 31P, the sixth part 3591 moves downwardly in the direction Z (i.e., in the direction "c" shown in FIG. 31P), to drive the upper pressure roller 3593 to move synchronously in the direction Z until the upper pressure roller 3593 no longer abuts against the first sheet material 710, that is, having a spacing from the first sheet material 710 in the direction Z. Then, the sixth part 3591 moves in the direction X away from the welding module 400 (i.e., in the direction d shown in FIG. 31P), so as to drive the upper pressure roller 3593 to move in the direction X away from the welding module 400 until the sixth part 3591 exits the receiving portion 430 (as shown in FIG. 31Q).

At this time, a complete welding process has been completed, that is, the welding operation on the pair of upper retention strips 740, the parallel tensioning strands 730 and the first sheet material 710, and the welding operation on the pair of lower retention strips 750, the parallel tensioning strands 730 and the second sheet material 720 have been completed. Next, inter-welded sheet assembly 700A of the inflatable product 10 as shown in FIG. 27 can be obtained by continuously repeating the above welding operations.

However, it should be noted that the welding of the pair of lower retention strips 750 may be carried out before the welding of the pair of upper retention strips 740, as long as it can be ensured that the welding operation on the pair of upper retention strips 740 and the welding operation on the pair of lower retention strips 750 are carried out alternately.

While the above welding operations are being performed, the tensioning mechanism 600 maintains a tensioned state on the first sheet material 710, the second sheet material 720, and the tensioning strands 730 at all times. When the above welding operations are completed, that is, a required length of the inter-welded sheet assembly 700A has been reached, it is trimmed in the trimming module 500. Then, in various embodiments, it is possible to continue to produce a second identical product.

Specifically, referring to FIGS. 25 and 27, after the high-frequency welding on the pair of upper retention strips 740, the plurality of parallel tensioning strands 730 and the first sheet material 710, and the high-frequency welding on the pair of lower retention strips 750, the plurality of parallel tensioning strands 730 and the second sheet material 720 are completed, a head end of the semi-finished product 700 is clamped by the tensioning mechanism 600. As the above welding process is repeated, the inter-welded sheet assembly 700A continues to increase in length. In this case, the tensioning mechanism 600 continuously advances in the feeding direction X1, so that the inter-welded sheet assembly 700A remains in the tensioned state. When the required length of inter-welded sheet assembly 700A has been reached, it is trimmed by the trimming module 500 spaced apart from the tensioning mechanism 600 in the direction X, thereby completing the manufacturing of the semi-finished product 700. After trimming is completed, the tensioning mechanism 600 moves to the original position in a direction approaching the trimming module 500, and continues to manufacture the next product.

### Fourth Manufacturing Embodiment

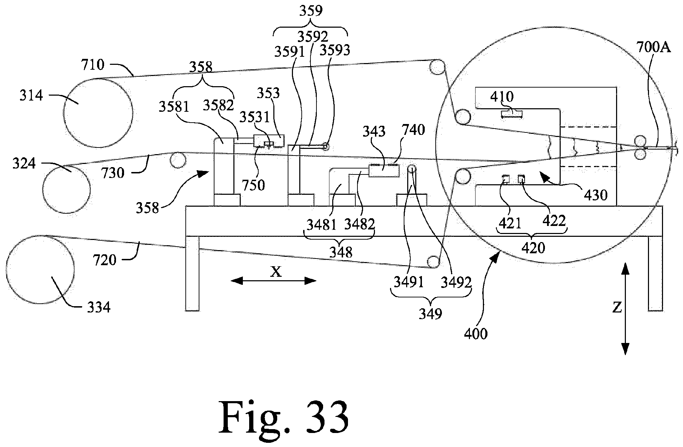

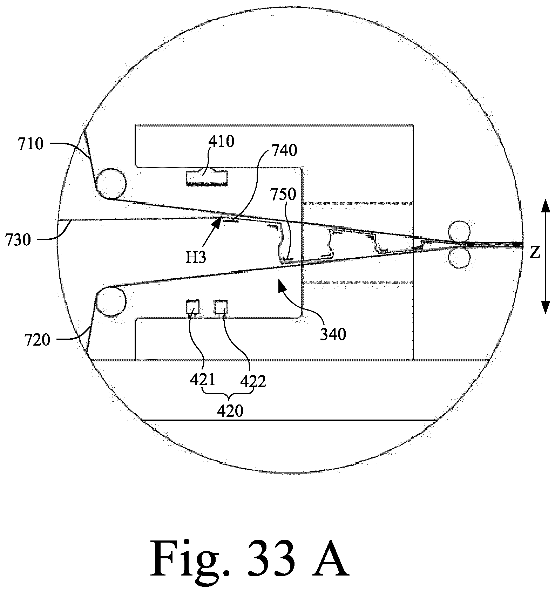

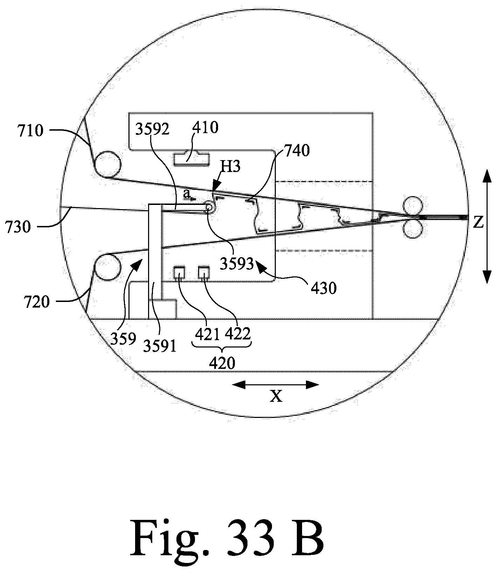

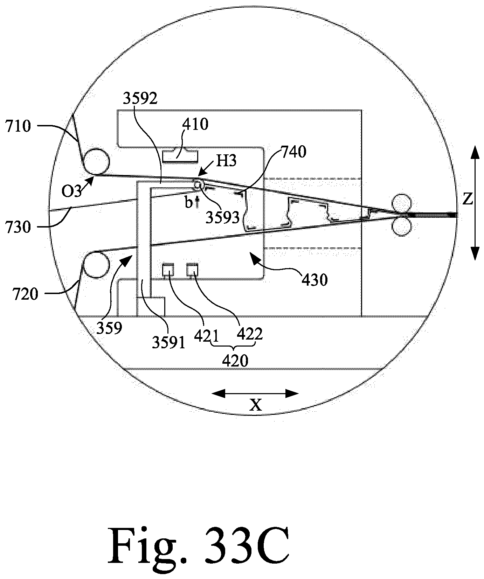

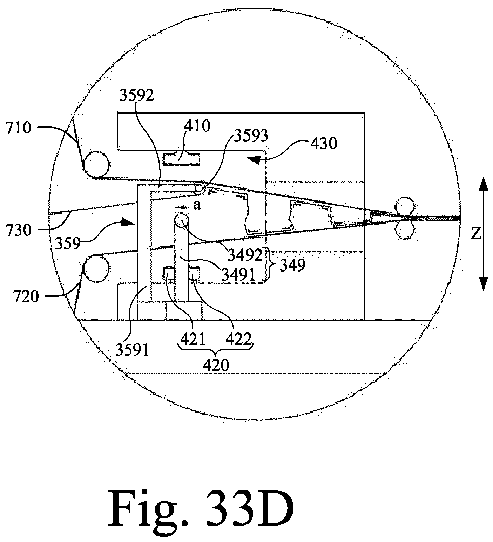

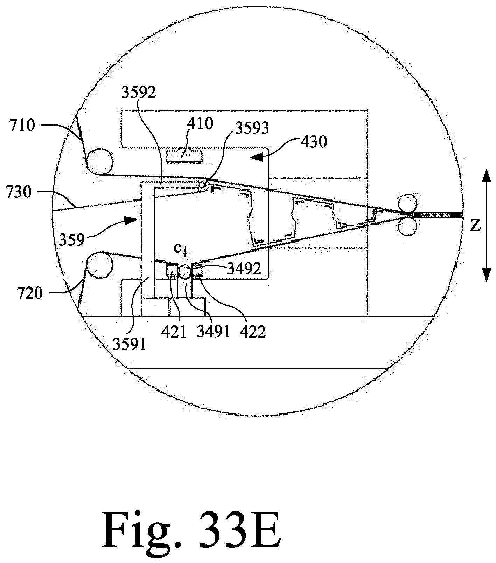

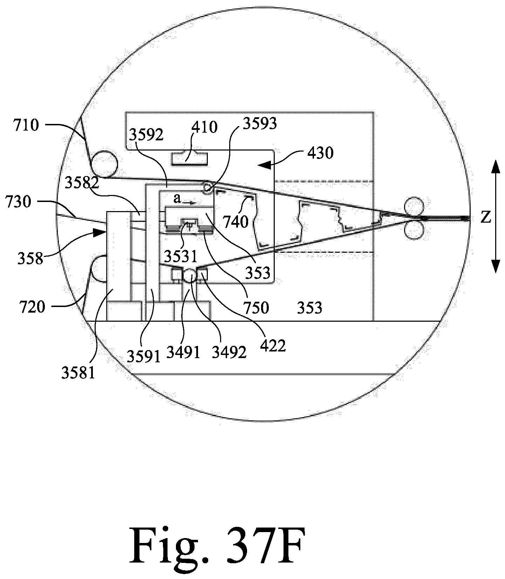

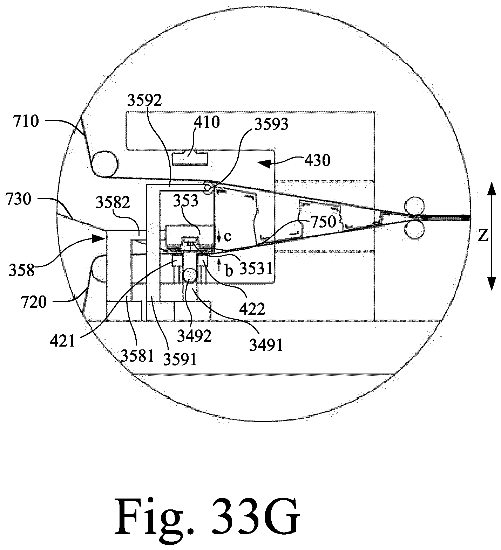

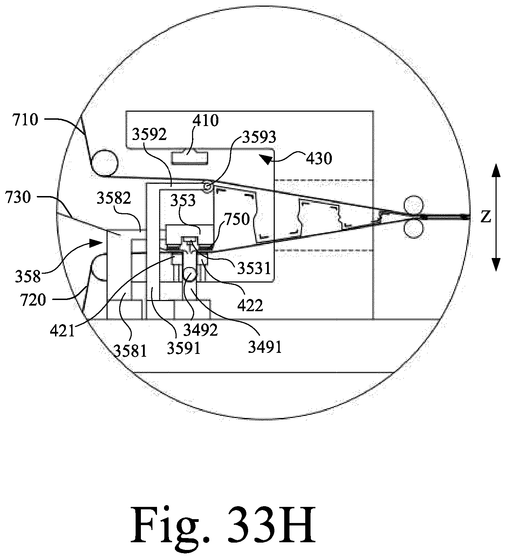

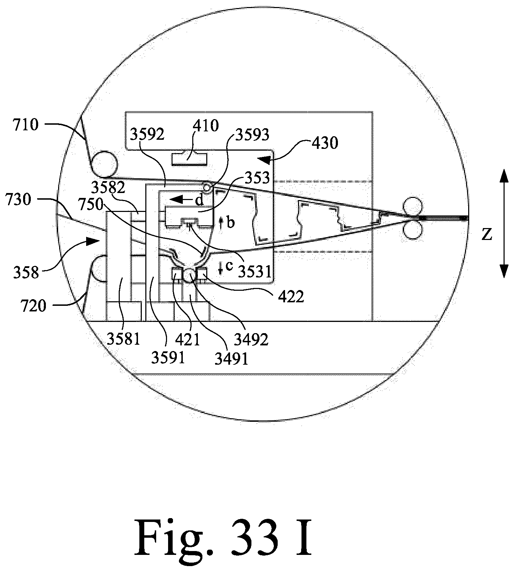

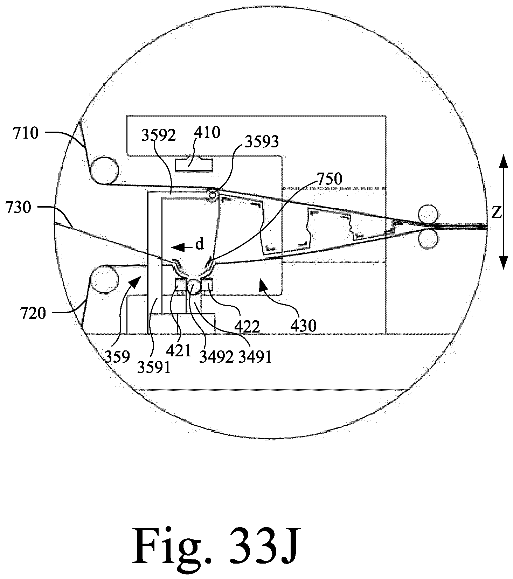

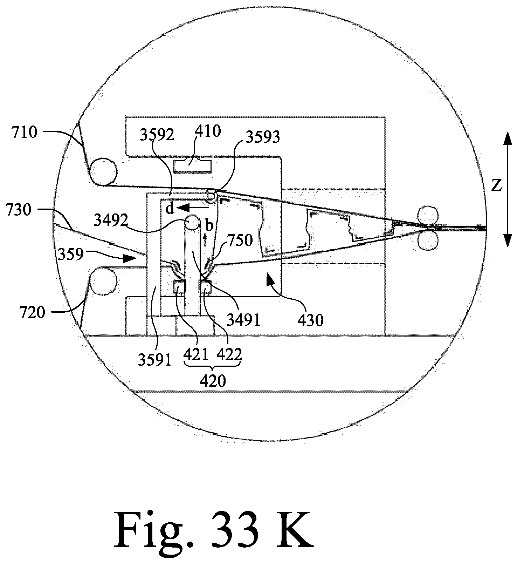

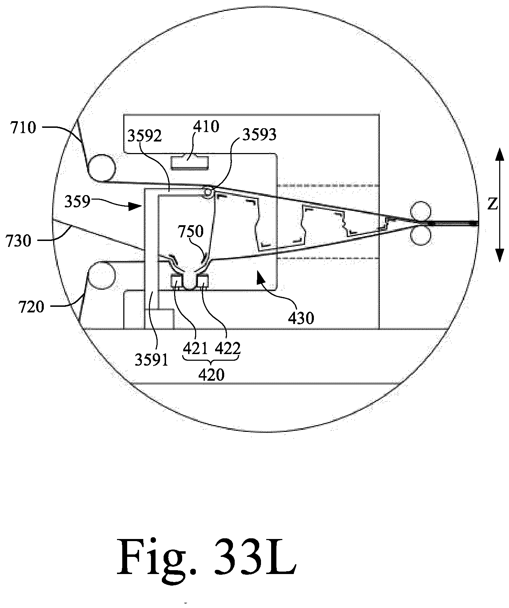

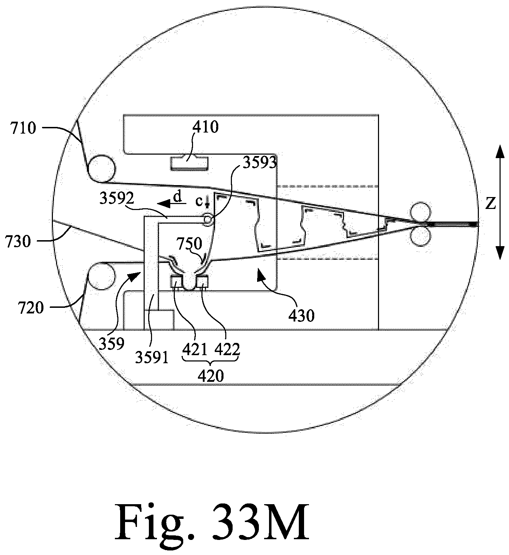

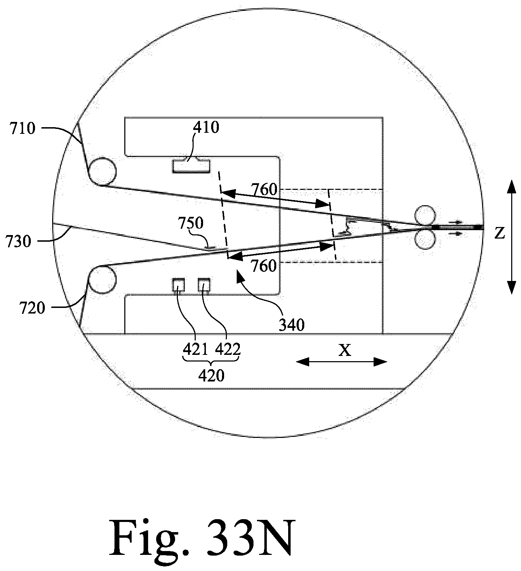

Comparing FIG. 31 with FIG. 33, differences between the fourth manufacturing embodiment and the third manufacturing embodiment address implementations where the second welding apparatus 420 of the fourth manufacturing embodiment includes a first welding sub-apparatus 421 and a second welding sub-apparatus 422, the first welding sub-apparatus 421 and the second welding sub-apparatus 422 are spaced apart from each other in the direction X, that is, there is a gap between the first welding sub-apparatus 421 and the second welding sub-apparatus 422, and a cutting member 3531 is mounted in the middle of the second attachment portion 353 on the second bracket 358.

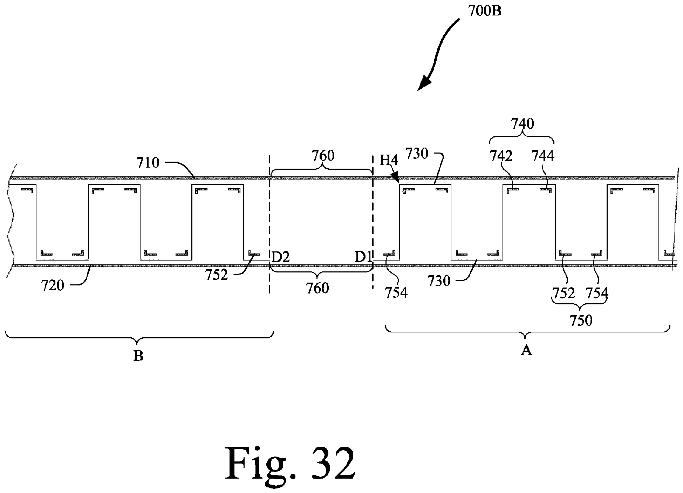

With this configuration, the final semi-finished product 700 changes from FIG. 27 to FIG. 32. Compared with FIG. 27, FIG. 32 has a blank segment 760. In the blank segment 760, the parallel tensioning strands 730, the pair of upper retention strips 740 and the pair of lower retention strips 750 are not welded on the first sheet material 710 and the second sheet material 720. The blank segment 760 is also a segment that separates an inflatable product A from an inflatable product B. That is, the inflatable product B is on the left side of the blank segment 760, and the inflatable product A is on the right side of the blank segment 760. Further, the blank segment 760 allows for more expeditious connection of side or top panels to enclose air chambers 140 of the inflatable products A or B.

The specific structure of the welding module 400 and the process of forming the blank segment 760 in the fourth manufacturing embodiment will be described in detail in conjunction with FIGS. 32 to 33N. FIG. 32 shows a schematic view of the structure of a semi-finished product comprising an inter-welded sheet assembly 700B manufactured in the fourth manufacturing embodiment, FIG. 33 shows a schematic view of the structure of the manufacturing system of the fourth manufacturing embodiment, and FIGS. 33A to 33N illustrate differences between welding operations of the fourth manufacturing embodiment and the third manufacturing embodiment, that is, a process for forming the blank segment 760.

For purposes of clarity, FIGS. 32 to 33N show only one parallel tensioning strand 730 to avoid too many parallel tensioning strands 730 reducing clarity of the figures.

It should be noted that FIG. 32 shows only a part of the inflatable product A, rather than showing the entire inflatable product A. Of course, it can be understood that the length of the inflatable product A is not limited in the embodiments of the present application, and can be selected according to actual requirements. Similarly, FIG. 32 shows only a part of the inflatable product B, rather than showing the entire inflatable product B. Of course, it can be understood that the length of the inflatable product B is not limited in the embodiments of the present application, and can be selected according to actual requirements.

As described in the third manufacturing embodiment, when the pair of upper retention strips 740 and the pair of lower retention strips 750 are respectively continuously and alternately welded to the inflatable mattress and are about to reach the required length, that is, the complete inflatable mattress A is about to be formed, referring to FIG. 33A, the welding operation on the pair of upper retention strips 740 has been completed in the third manufacturing embodiment, the last welding point of the welding operation is defined at H3 (i.e., the welding point H3 of the inflatable product A in FIG. 32), and the inter-welded sheet assembly 700 corresponding to the inflatable product A is about to reach the required length.

In the present fourth manufacturing embodiment, unlike the third manufacturing embodiment, the welding process as shown in FIGS. 31A to 31Q in the third manufacturing embodiment no longer continues in the fourth manufacturing embodiment, that is, the pair of upper retention strips 740 and the pair of lower retention strips 750 are no longer alternately and continuously welded, but the process shown in FIGS. 33A to 33N is started, that is, the blank segment 760 described above is formed.

Referring to FIG. 33B, the sixth part 3591 of the upper anti-deflection frame 359 moves with the seventh part 3592 and the upper pressure roller 3593 in the direction X toward the welding module 400 (i.e., in the direction "a" shown in FIG. 33B). More specifically, the sixth part 3591 of the upper anti-deflection frame 359 moves along the fourth slide rail 3571 in the direction X toward the welding module 400 (i.e., in the direction "a" shown in FIG. 33B), so as to drive the seventh part 3592 and the upper pressure roller 3593 to move synchronously until the upper pressure roller 3593 is located in the receiving portion 430 and at the last welding point H3.

Referring to FIG. 33C, the sixth part 3591 moves upwardly in the direction Z (i.e., in the direction "b" shown in FIG. 33C), to drive the seventh part 3592 and the upper pressure roller 3593 to move synchronously in the direction Z until the upper pressure roller 3593 presses upwardly against the first sheet material 710 and just against the welding point H3. As the sixth part 3591 moves upwardly in the direction Z, the parallel tensioning strands 730 that have not been welded gradually changes from a relatively tight state of FIG. 33B to a loose state of FIG. 33C. Under the pressure of the upper pressure roller 3593 on the first sheet material 710, a segment of the first sheet material 710 that has not been welded (i.e., a line segment H3O3 in FIG. 33C) is in a horizontal state.

Referring to FIG. 33D, the fifth part 3491 of the lower anti-deflection frame 349 moves with the lower pressure roller 3492 in the direction X toward the welding module 400 (i.e., in the direction "a" shown in FIG. 33D), until the fifth part 3491 is located at the gap between the first welding sub-apparatus 421 and the second welding sub-apparatus 422. More specifically, the fifth part 3491 of the lower anti-deflection frame 349 moves along the third slide rail 3471 in the direction X toward the welding module 400 (i.e., in the direction "a" shown in FIG. 33D), so as to drive the lower pressure roller 3492 to move synchronously until the lower anti-deflection frame 349 is located in the receiving portion 430, and the fifth part 3491 is located at the gap between the first welding sub-apparatus 421 and the second welding sub-apparatus 422.

Referring to FIG. 33E, the fifth part 3491 moves downwardly in the direction Z (i.e., in the direction "c" shown in FIG. 33E), to drive the lower pressure roller 3492 to move synchronously in the first direction Z until the lower pressure roller 3492 presses the second sheet material 720 downwardly and moves to the lowest end of the gap between the first welding sub-apparatus 421 and the second welding sub-apparatus 422 such that the second sheet material 720 has a downward curvature (as shown in the substantially U-shaped curvature in FIG. 33E). However, such configuration is not limited, and the lower pressure roller may move to the middle end or the upper end of the gap, depending on actual requirements.

Referring to FIG. 33F, the fourth part 3582 of the second bracket 358 moves with the second attachment portion 353 in the direction X toward the welding module 400 (i.e., in the direction "a" shown in FIG. 33F). Specifically, the third part 3581 of the second bracket 358 moves along the second slide rail 357 in the direction X toward the welding module 400, to drive the fourth part 3582 to move synchronously until the pair of lower retention strips 750 attached to the second attachment portion 353 move into the receiving portion 430 and are located above the first welding sub-apparatus 421 and the second welding sub-apparatus 422 in the direction Z.

Referring to FIG. 33G, the third part 3581 moves downwardly in the direction Z (i.e., in the direction "c" shown in FIG. 33G), to drive the fourth part 3582 to move synchronously such that the pair of lower retention strips 750 on the second attachment portion 353 move downwardly in the direction Z, and the lower retention strips 750 come into contact with the parallel tensioning strands 730 located above the second sheet material 720, and urge the parallel tensioning strands 730 to move downwardly in the direction Z until the parallel tensioning strands 730 come into contact with the second sheet material 720. The first welding sub-apparatus 421 and the second welding sub-apparatus 422 move upwardly in the direction Z (i.e., in the direction "b" shown in FIG. 33G) until the first welding sub-apparatus 421 and the second welding sub-apparatus 422 come into contact with the second sheet material 720, and drive the second sheet material 720 to move upwardly in the direction Z until the second sheet material 720 comes into contact with the parallel tensioning strands 730, at which time the pair of lower retention strips 750 are welded to the parallel tensioning strands 730, and the parallel tensioning strands 730 are welded to the second sheet material 720.

Due to the downward pressure of the lower pressure roller 3492, the second sheet material 730 has a segment of U-shaped curvature, which forms the blank segment 760 shown in FIG. 32. Put another way, in this embodiment, the lower retention strips 750 are not in contact with this segment, which means that the blank segment 760 is not welded to the lower retention strips 750.

Referring to FIG. 33H, at this point in the manufacturing process, the cutting member 3531 comes into contact with the parallel tensioning strands 730 and cuts them off, forming points D1 and D2 in FIG. 32.

Referring to FIG. 33I, the third part 3581 then moves upwardly in the direction Z (i.e., in the direction "b" shown in FIG. 33I), to drive the fourth part 3582 to move synchronously, so as to drive the second attachment portion 353, to which the lower retention strips 750 are not attached, on the fourth part 3582 to move upwardly in the direction Z. The first welding sub-apparatus 421 and the second welding sub-apparatus 422 move downwardly in the direction Z (i.e., in the direction "c" shown in FIG. 33I), and the third part 3581 moves in the direction X away from the welding module 400 (i.e., in the direction d shown in FIG. 33I), so as to drive the second attachment portion 353, to which the lower retention strips 750 are not attached, on the fourth part 3582 to move in the direction X away from the welding module 400, until the second attachment portion 353 exits the receiving portion 430 (as shown in FIG. 33J).

Referring to FIG. 33K, the fifth part 3491 moves upwardly in the direction Z (i.e., in the direction "b" shown in FIG. 33K), to drive the lower pressure roller 3492 to move synchronously in the direction Z until the lower pressure roller 3492 no longer abuts against the second sheet material 720, that is, having a spacing from the second sheet material 720 in the direction Z. Then, the fifth part 3491 moves in the direction X away from the welding module 400 (i.e., in the direction "d" shown in FIG. 33K), so as to drive the upper pressure roller 349 to move in the direction X away from the welding module 400 until the fifth part 3491 exits the receiving portion 430 (as shown in FIG. 33L).

Referring to FIG. 33M, the sixth part 3591 moves downwardly in the direction Z (i.e., in the direction "c" shown in FIG. 33M), to drive the upper pressure roller 3593 to move synchronously in the direction Z until the upper pressure roller 3593 no longer abuts against the first sheet material 710, that is, having a spacing from the first sheet material 710 in the direction Z. Then, the sixth part 3591 moves in the direction X away from the welding module 400 (i.e., in the direction "d" shown in FIG. 33M), so as to drive the upper pressure roller 3593 to move in the direction X away from the welding module 400 until the sixth part 3591 exits the receiving portion 430 (as shown in FIG. 33N). In this implementation, the first sheet material 710 and the second sheet material 720 each have a blank segment 760, that is, with this segment as the dividing line, in the direction X, on the left side is an inflatable semi-finished product A (i.e., A shown in FIG. 32), and on the right side is another inflatable semi-finished product B (i.e., B shown in FIG. 32).

The process of FIGS. 33A to 33N above completes the formation of the blank segment 760 of the first sheet material 710 and the blank segment 760 of the second sheet material 720 in FIG. 32, the welding operation on a lower retention strip 754 at the point D1, the welding operation on a lower retention strip 752 at the point D2, and the cutting of the parallel tensioning strands 730 at the blank segment 760, so that the blank segment 760 is not welded to the parallel tensioning strands 730, and forms the cutting points D1 and D2.

According to the welding process described in the third manufacturing embodiment, the pair of upper retention strips 740 and the pair of lower retention strips 750 may continue to be alternately welded until the length requirement of the inflatable product B is reached, and then the above welding process is performed again, that is, from FIG. 31A to FIG. 31Q, and the process is repeated continuously until the length requirement of the inflatable product B is reached.

In this approach, welding operations in the blank segment 760 are avoided, which saves time, avoids the waste of materials of the upper retention strips 741 and the lower retention strips 750 welded to the blank segment 760, streamlines assembly of side panels 130, and reduces trimming difficulty.

While the above welding operations are being performed, the tensioning mechanism 600 maintains a tensioned state on the first sheet material 710, the second sheet material 720, and the tensioning strands 730 at all times. When the above welding operations are completed, that is, a required length of the product A has been reached, it is trimmed at the blank segment 760 in the trimming module 500. Then, the production of the inflatable mattress B can continue.

Specifically, referring to FIGS. 35 and 27, after the high-frequency welding on the pair of upper retention strips 740, the plurality of parallel tensioning strands 730 and the first sheet material 710, and the high-frequency welding on the pair of lower retention strips 750, the plurality of parallel tensioning strands 730 and the second sheet material 720 are completed, a head end of the semi-finished product 700 is clamped by the tensioning mechanism 600. As the above welding process is repeated, the semi-finished product 700 increases in length. In this case, the tensioning mechanism 600 continuously advances in the feeding direction X1, so that the semi-finished product 700 being welded is always in the tensioned state. When the required length of the semi-finished product 700 has been reached, it is trimmed at the blank segment 760 by the trimming module 500 spaced apart from the tensioning mechanism 600 in the direction X, thereby completing the manufacturing of the semi-finished product 700. After trimming is completed, the tensioning mechanism 600 moves to the original position in a direction approaching the trimming module 500, and continues to manufacture the next product. It can be understood that the welding methods mentioned in the description comprise high-frequency welding, hot-press welding and any other suitable welding methods.

It can also be understood that the components and features described herein can be made of various other materials including, but not limited to, polymer, rubber, metal, and other suitable materials well known to those skilled in the art or a combination thereof. The described and illustrated embodiments only show the shapes, dimensions and arrangements of various optional components of the inflatable products according to the present disclosure, which are merely illustrative but not limiting, and other shapes, dimensions and arrangements may be employed without departing from the scope of the present disclosure. Those skilled in the art can easily make modifications, variations, and equivalents of these embodiments on the basis of the disclosed content. For example, the illustrated or described features as part of an embodiment can be used with another embodiment to provide a further embodiment. The present disclosure is intended to cover these modifications, variations, and equivalents.

The technical content and technical features of the present disclosure are disclosed above, but it should be understood that those skilled in the art can make various variations and improvements to the concepts disclosed above under the inventive idea of the present disclosure, and all the variations and improvements fall within the scope of protection of the present disclosure. The description of the above implementations is illustrative rather than restrictive, and the scope of protection of the present disclosure is determined by the following claims.

## Claims

1. An inflatable product, comprising:
a first wall (110, 210) and a second wall (120, 220) arranged opposite the first wall (110, 210), the first wall (110, 210) and the second wall (120, 220) defining an air chamber (104, 204) after the inflatable product is inflated, the first wall (110, 210) and a second wall (120, 220) extending along a first direction (X, R) and a second direction (Y, Z) and are spaced and parallel to one another
a plurality of tensioning strands (144, 154, 164, 174, 184, 254, 264, 274, 284, 294) generally extending as a whole in a direction parallel to the first wall (110, 210) and to the second wall (120, 220);
a plurality of first retention strips (142, 151, 152, 161, 162, 172, 182, 252, 252A, 261, 262, 271, 272, 282, 291, 292) intersecting the plurality of tensioning strands (144, 154, 164, 174, 184, 254, 264, 274, 284, 294) and affixing the plurality of tensioning strands to the first wall (110, 210); and
a plurality of second retention strips (146, 155, 156, 165, 166, 176, 186, 256, 256A, 265, 266, 275, 276, 286, 296 ) intersecting the plurality of tensioning strands (144, 154, 164, 174, 184, 254, 264, 274, 284, 294) and fixing the plurality of tensioning strands to the second wall (120, 220).

2. The inflatable product of claim 1, wherein the plurality of first retention strips (142) and the plurality of second retention strips (146) span the overall width of the plurality of tensioning strands.

3. The inflatable product of claim 1, wherein the plurality of tensioning strands (144, 154, 164, 174, 184, 254, 264, 274, 284, 294) are clamped and affixed between the first retention strips (142, 151, 152, 161, 162, 172, 182, 252, 252A, 261, 262, 271, 272, 282, 291, 292) and the first wall (110, 210); and the plurality of tensioning strands are clamped and affixed between the second retention strip (146, 155, 156, 165, 166, 176, 186, 256, 256A, 265, 266, 275, 276, 286, 296) and the second wall (120, 220).

4. The inflatable product of claim 3, wherein the plurality of first retention strips (142, 151, 152, 161, 162, 172, 182, 252, 252A, 261, 262, 271, 272, 282, 291, 292) and the plurality of second retention strips (146, 155, 156, 165, 166, 176, 186, 256, 256A, 265, 266, 275, 276, 286, 296) are arranged alternately to affix the plurality of tensioning strands (144, 154, 164, 174, 184, 254, 264, 274, 284, 294) to the first wall (110, 210) and the second wall (120, 220).

5. The inflatable product of claim 3, wherein a pair of first retention strips (205, 302, 304) is alternatively arranged to a pair of second retention strips (301, 303, 305) to define, along the plurality of tensioning strands (144, 154, 164, 254, 264, 274, 284, 294), consecutive segments of tensioning strands and clamp the ends of each segment to the top wall (110, 210) or to the bottom wall (120, 220).

6. The inflatable product of claim 3 or 5, wherein at least two consecutive segments of the tensioning strands of the plurality of tensioning strands (144, 154, 164, 174, 184, 254, 264, 274, 284, 294) are disposed in a non-parallel manner with respect to one another.

7. The inflatable product of claim 3, wherein individual strands of the plurality of tensioning strands (144, 154, 164, 174, 184, 254, 264, 274, 284, 294) are arranged in a parallel manner with respect to one another.

8. The inflatable product of claim 3, wherein three or more strands of the plurality of tensioning strands (144) are unequally spaced with respect to one another.

9. The inflatable product of claim 3, wherein the plurality of first retention strips (142, 151, 152, 161, 162, 172, 182, 252, 252A, 261, 262, 271, 272, 282, 291, 292) comprise multiple pairs of first retention strips (205, 302, 304, 306, 310, 312, 314, 315), the plurality of second retention strips (146, 155, 156, 165, 166, 176, 186, 256, 256A, 265, 266, 275, 276, 286, 296) comprise multiple pairs of second retention strips (301, 303, 305, 307, 311, 313, 316), and the multiple pairs of first retention strips and the multiple pairs of second retention strips are arranged alternately to affix the plurality of tensioning strands (144, 154, 164, 254, 264, 274, 284) to the first wall (110, 210) and the second wall (120, 220).

10. The inflatable product of claim 9, wherein:
a spacing (B2, C1) between two first retention strips (142, 151, 152, 161, 162, 252, 252A, 261, 262, 271, 272, 291, 292) in one of the multiple pairs of first retention strips (205, 302, 304, 306, 310, 312, 314, 315) is equal to a spacing (B2, C1) between two first retention strips (142, 151, 152, 161, 162, 252, 252A, 261, 262, 271, 272, 291, 292) in an adjacent pair of first retention strips (205, 302, 304, 306, 310, 312, 314, 315); and
a spacing (B3, C3) between two second retention strips (146, 155, 156, 165, 166, 256, 256A, 265, 266, 275, 276, 296) in one of the multiple pairs of second retention strips (301, 303, 305, 307, 311, 313, 316) is equal to a spacing between two second retention strips (146, 155, 156, 165, 166, 256, 256A, 265, 266, 275, 276, 296) in an adjacent pair of second retention strips (301, 303, 305, 307, 311, 313, 316).

11. The inflatable product of claim 1, wherein a strand segment (145, 154A, 164A, 174A, 254A, 264A, 274A, 284A, 284B, 294A) of one of the plurality of tensioning strands between one first retention strip on the first wall (110, 210) and the corresponding second retention strip on the second wall (120, 220)) is transverse to the first wall (110, 210) and to the second wall (120, 220).

12. The inflatable product of claim 9, wherein a spacing (C1) in the first direction (X, R) between two first retention strips (161, 162) in one of the multiple pairs of first retention strips (304) on the first wall (110, 210) is greater than a spacing (C4) between a corresponding two oppositely arranged second retention strips (165, 166) on the second wall (120, 220) in the same first direction (X, R).

13. The inflatable product of claim 9 or 12, wherein a spacing (C3) between two second retention strips (165, 166) in one of the multiple pairs of second retention strips (305) on the second wall (120, 220) is greater than a spacing (C2) between a corresponding two oppositely arranged first retention strips (161, 162) on the first wall (110, 210) in the same first direction (X, R).

14. The inflatable product of claim 1, wherein a strand segments (145, 154A, 164A, 174A, 254A, 264A, 274A, 284A, 284B, 294A, 186A, 186B) of one of the plurality of tensioning strands (144, 154, 164, 174, 184, 254, 264, 274, 284, 294) is arranged between a first one of the first retention strips (142) on the first wall (110, 210) and a corresponding first one of the second retention strips (146) on the second wall (120, 220); two strand segments (145, 154A, 164A, 174A, 254A, 264A, 274A, 284A, 284B, 294A, 186A, 186B) of one of the plurality of tensioning strands (144, 154, 164, 174, 184, 254, 264, 274, 284, 294) arranged between one of the plurality of first retention strips on the first wall (110, 210) and the corresponding two second retention strips on the second wall (120, 220) have equal or unequal lengths.

15. The inflatable product of claim 1, wherein the plurality of first retention strips are transverse to the plurality of tensioning strands, and the plurality of second retention strips are transverse to the plurality of tensioning strands.

16. The inflatable product of claim 1, wherein the plurality of first retention strips are arranged parallel to each other, and the plurality of second retention strips are arranged parallel to each other.

17. The inflatable product of claim 1, wherein at least one of the plurality of tensioning strands (144, 154, 164, 174, 184, 254, 264, 274, 284, 294) is in contact with the plurality of first retention strips (142, 151, 152, 161, 162, 172, 182, 252, 252A, 261, 262, 271, 272, 282, 291, 292) and the plurality of second retention strips (146, 155, 156, 165, 166, 176, 186, 256, 256A, 265, 266, 275, 276, 286, 296).

18. The inflatable product of claim 1, wherein when the inflatable product is in the inflated state, a strand segment of one of the plurality of tensioning strands (144, 254) between the first wall (110, 210) and the second wall (120, 220) forms an angle (α) with the first wall (110, 210) and the second wall (120, 220).
